(19) Europäisches Patentamt
European Patent Office
Office européen des brevets

(11) **EP 3 992 052 B1**

(12) **EUROPEAN PATENT SPECIFICATION**

(45) Date of publication and mention
of the grant of the patent:
**12.11.2025 Bulletin 2025/46**

(21) Application number: **20833367.4**

(22) Date of filing: **08.06.2020**

(51) International Patent Classification (IPC):
**B61F 5/02** *(2006.01)*    **G01M 17/08** *(2006.01)*
**B61F 5/32** *(2006.01)*

(52) Cooperative Patent Classification (CPC):
**G01M 17/10; B61F 5/325; B61L 15/0081;**
B61L 2205/04

(86) International application number:
**PCT/JP2020/022514**

(87) International publication number:
**WO 2020/261959 (30.12.2020 Gazette 2020/53)**

(54) **ESTIMATION DEVICE, ESTIMATION METHOD AND PROGRAM**

SCHÄTZVORRICHTUNG, SCHÄTZVERFAHREN UND PROGRAMM

DISPOSITIF D'ESTIMATION, PROCÉDÉ D'ESTIMATION ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.06.2019   JP 2019121751**

(43) Date of publication of application:
**04.05.2022   Bulletin 2022/18**

(73) Proprietor: **Nippon Steel Corporation**
**Tokyo 100-8071 (JP)**

(72) Inventors:
• **NAKAGAWA, Junichi**
  **Tokyo 100-8071 (JP)**
• **MINAMI, Hideki**
  **Tokyo 100-8071 (JP)**
• **SHINAGAWA, Daisuke**
  **Tokyo 100-8071 (JP)**
• **SHIMOKAWA, Yoshiyuki**
  **Tokyo 100-8071 (JP)**
• **KONDO, Osamu**
  **Tokyo 100-8071 (JP)**
• **KIKKO, Satoshi**
  **Tokyo 100-8071 (JP)**
• **FUJIMOTO, Takahiro**
  **Tokyo 100-8071 (JP)**

(74) Representative: **Zimmermann & Partner**
**Patentanwälte mbB**
**Postfach 330 920**
**80069 München (DE)**

(56) References cited:
EP-A1- 3 434 552        WO-A1-2018/176072
WO-A1-2019/043859       JP-A- 2004 203 171
JP-A- 2012 107 987      JP-A- 2018 155 517
JP-A- 2019 028 007

**Description**

TECHNICAL FIELD

The present inventior relates to an estimation device, an estimation method, and a program, and is suitably used for estimating a state of a railway vehicle, in particular. The present application is based upon and claims the benefit of priority of the prior Japanese Patent Application No. 2019-121751, filed in Japan on June 28, 2019.

BACKGROUND ART

If the state of a bogie frame of a railway vehicle becomes abnormal, such as cracks occurring in the bogie frame, it may interfere with traveling of the railway vehicle. Thus, there is required a technique to estimate the state of the bogie frame. A technique of this kind technique is described in Patent Literature 1.

In Patent Literature 1, frequency characteristics of acceleration per unit load at an acceleration detection point of a vehicle body when a load is applied to a loading point of a bogie (frequency first characteristics) and frequency characteristics of stress per unit load at an inspection point of the bogie when a load is applied to the loading point (frequency second characteristics) are stored. Then, the load given to the bogie during traveling is calculated based on frequency characteristics of the acceleration detected at the acceleration detection point while the railway vehicle is traveling (frequency third characteristics) and the frequency first characteristics. Based on the load applied to the bogie during traveling, which is calculated as above, and the frequency second characteristics, the stress of the vehicle during traveling at the inspection point of the bogie is calculated. Then, the inspection point is monitored based on the results of analysis of the stress of the vehicle during traveling according to time passage.

In Patent Literature 2, an inspection apparatus is described. The inspection apparatus reduces the signal intensity of a low-frequency component included in chronological data for the measured value of longitudinal force and generates chronological data for a high-frequency component of the longitudinal force, and calculates the amount of deviation in line on the basis of the chronological data for the high-frequency component of the longitudinal force.

CITATION LIST

PATENT LITERATURE

Patent Literature 1: Japanese Laid-open Patent Publication No. 2018-155517
Patent Literature 2: International Patent Application Publication No. WO 2019/043859 A1

NON PATENT LITERATURE

Non Patent Literature 1: "Finite Element Method Handbook, II applied compilation," edited by WASHIZU Kyuichiro, and four others, First edition, January 25, 1983, BAIFUKAN CO., LTD, p. 65-67

SUMMARY OF INVENTION

TECHNICAL PROBLEM

However, in the technique described in Patent Literature 1, the inspection point of the bogie is predetermined as a point that is easily damaged by the occurrence of fatigue. Therefore, only the stress at a predetermined point can be derived. In addition, the technique described in Patent Literature 1 is required to measure the stress at the inspection point of the bogie using a strain gauge or the like. For this reason, it is not easy to increase the number of inspection points of the bogie. Therefore, with the technique described in Patent Literature 1, it is not easy to accurately estimate the state of the bogie frame when the railway vehicle is traveling.

The present invention has been made in consideration of the above problems, and an object thereof is to enable accurate estimation of the state of a bogie frame when a railway vehicle is traveling.

SOLUTION TO PROBLEM

The estimation device of the present invention is an estimation device that estimates a state of a railway vehicle including a bogie frame and a connecting part connected to the bogie frame directly or via another part, the estimation device including: a first sensor attached to the connecting part; a data acquisition means adapted to acquire first measured data measured by the first sensor while the railway vehicle is traveling; an external force deriving means adapted to derive an external force acting on a force application point of the bogie frame based on the first measured data and to derive a distribution of an external force acting on the bogie frame based on the external force acting on the force application point of the bogie frame; a state deriving means adapted to derive information representing the state of the bogie frame based on the distribution of the external force acting on the bogie frame; and a processing device configured to perform the functions of the data acquisition means, the external force deriving means and the state deriving means, wherein the first sensor is a sensor adapted for measuring a physical quantity that enables derivation of the external force acting on the force application point of the bogie frame, the force application point of the bogie frame is a point on which an external force to occur by the connecting part acts in the bogie frame, the state deriving means includes at least a displacement distribution deriving means adapted to derive, as information representing the state of the bogie frame, a distribution of displacement of the bogie frame by solving a motion equation representing vibration of the bogie frame, and to a distribution of an external force in the motion equation representing vibration of the bogie frame, the distribution of the external force acting on the bogie frame, which is derived by the external force deriving means, is given.

The estimation method of the present invention is an estimation method that estimates a state of a railway vehicle including a bogie frame and a connecting part connected to the bogie frame directly or via another part, the estimation method including: a data acquisition step of acquiring first measured data measured by a first sensor attached to the connecting part while the railway vehicle is traveling; an external force deriving step of deriving an external force acting on a force application point of the bogie frame based on the first measured data and deriving a distribution of an external force acting on the bogie frame based on the external force acting on the force application point of the bogie frame; and a state deriving step of deriving information representing the state of the bogie frame based on the distribution of the external force acting on the bogie frame, in which the first sensor is a sensor intended for measuring a physical quantity that enables derivation of the external force acting on the force application point of the bogie frame, the force application point of the bogie frame is a point on which an external force to occur by the connecting part acts in the bogie frame, the state deriving step includes at least a displacement distribution deriving step of deriving, as information representing the state of the bogie frame, a distribution of displacement of the bogie frame by solving a motion equation representing vibration of the bogie frame, and to a distribution of an external force in the motion equation representing vibration of the bogie frame, the distribution of the external force acting on the bogie frame, which is derived by the external force deriving step, is given.

The program of the present invention is a program causing a computer to execute the steps of the aforementioned method.

BRIEF DESCRIPTION OF DRAWINGS

[Fig. 1] Fig. 1 is a view illustrating one example of an outline of a railway vehicle.

[Fig. 2] Fig. 2 is a view illustrating a first example of a configuration of a bogie frame and its peripheral parts.

[Fig. 3A] Fig. 3A is a view illustrating a model of a first example of a coupling element.

[Fig. 3B] Fig. 3B is a view illustrating a model of a second example of the coupling element.

[Fig. 4] Fig. 4 is a diagram illustrating a first example of a functional configuration of an estimation device.

[Fig. 5] Fig. 5 is a view conceptually illustrating one example of a stress limit diagram.

[Fig. 6] Fig. 6 is a flowchart explaining a first example of an estimation method.

[Fig. 7] Fig. 7 is a view illustrating a second example of the configuration of the bogie frame and its peripheral parts.

[Fig. 8] Fig. 8 is a view illustrating a second example of the functional configuration of the estimation device.

[Fig. 9] Fig. 9 is a view illustrating a third example of the functional configuration of the estimation device.

[Fig. 10] Fig. 10 is a flowchart explaining a second example of the estimation method.

[Fig. 11] Fig. 11 is a diagram illustrating one example of a hardware configuration of the estimation device.

[Fig. 12] Fig. 12 is a view illustrating one example of the relationship between a displacement at an air spring seat of the bogie frame and a time.

[Fig. 13A] Fig. 13A is a view illustrating a first example of the relationship between a displacement at a certain position of the bogie frame where a relatively large stress has occurred and a time.

[Fig. 13B] Fig. 13B is a view illustrating a second example of the relationship between a displacement at a certain position of the bogie frame where a relatively large stress has occurred and a time.

[Fig. 14] Fig. 14 is a view illustrating one example of the relationship between a component of a modal matrix and an approximate value of the component of the modal matrix.

[Fig. 15] Fig. 15 is a view illustrating one example of the relationship between a maximum principal strain in a region to be estimated and a time.

[Fig. 16] Fig. 16 is a view illustrating one example of the relationship between a maximum principal stress in the region to be estimated and a time.

[Fig. 17] Fig. 17 is a view illustrating one example of the relationship between an estimated value and a measured value of the maximum principal stress in the region to be estimated.

DESCRIPTION OF EMBODIMENTS

There will be explained embodiments of the present invention with reference to the drawings below.

(First embodiment)

First, the first embodiment is explained.

<Schematic configuration of a railway vehicle>

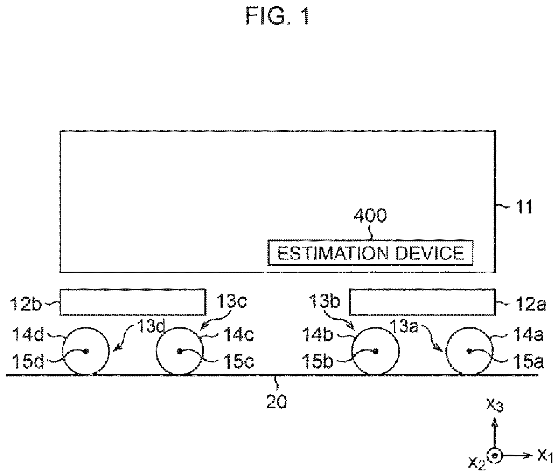

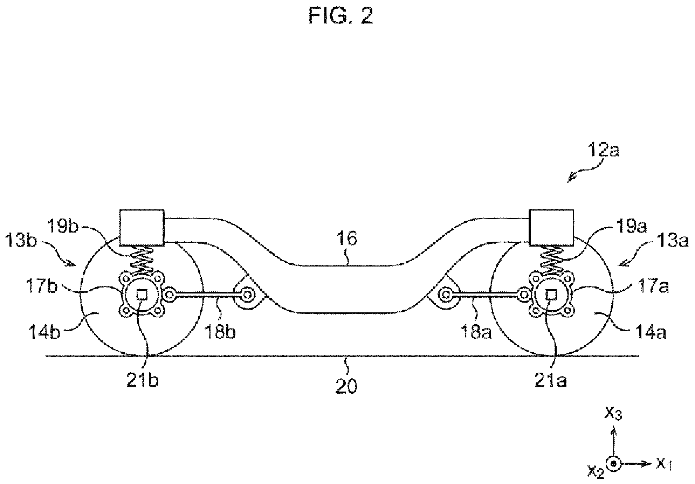

First, there is explained a railway vehicle explained in this embodiment as an example. Fig. 1 is a view illustrating one example of an outline of the railway vehicle. Fig. 2 is a view illustrating one example of a configuration of a bogie frame and its peripheral parts. Incidentally, in Fig. 1 and Fig. 2, the railway vehicle ..s set to proceed in the positive direction of the $x_1$ axis (the $x_1$ axis is an axis along a traveling direction of the railway vehicle). Further, the $x_3$ axis is set to a direction vertical to a track 20 (the ground) (a height direction of the railway vehicle). The $x_2$ axis is set to a horizontal direction ve tical to the traveling direction of the railway vehicle (a direction vertical to both the traveling direction and the height direction of the railway vehicle). Further, the railway vehicle is set to a commercial vehicle. Incidentally, in each of the drawings, the mark of ● added inside O indicates the direction from the far side of the sheet toward the near side.

As illustrated in Fig. 1 and Fig. 2, in this embodiment, the railway vehicle includes a vehicle body 11, bogies 12a, 12b, and wheel sets 13a to 13d. In this embodiment as above, the railway vehicle including the single vehicle body 11 provided with the two bogies 12a, 12b and four sets of the wheel sets 13a to 13d will be explained as an example. The wheel sets 13a to 13d have axles 15a to 15d and wheels 14a to 14d provided on both ends of the axles 15a to 15d respectively. In this embodiment, the case of the bogies 12a, 12b each being a bolsterless bogie will be explained as an example.

In Fig. 1, for convenience of illustration, only the wheels 14a to 14d on one side of the wheel sets 13a to 13d are illustratad. Wheels are also provided on the other side of the wheel sets 13a to 13d (in the example illustrated in Fig. 1, there are eight wheels in total).

In Fig. 2, axle boxes 17a, 17b are disposed on the both sides of the wheel sets 13a, 13b in a direction along the $x_2$ axis. The axle boxes 17a, 17b are connected to the bogie frame 16 via mono-links 18a, 18b. Further, the axle boxes 17a, 17b are connected to the bogie frame 16 via axle springs 19a, 19b. Incidentally, the railway vehicle includes components other than the components illustrated in Fig. 1, Fig. 2. For convenience of illustration, illustrations of these components are omitted in Fig. 1, Fig. 2. For example, in Fig. 2, in the case of the railway vehicle having ar axle damper, the axle boxes 17a, 17b are connected to the bogie frame 16 via the axle damper in some cases.

In Fig. 2, the single bogie frame 16 is disposed on the single bogie 12a. The axle boxes 17a, 17b, the mono-links 18a, 18b, and the axle springs 19a, 19b are disposed one by one for one wheel. As described previously, four wheels are disposed on the single bogie 12a. Thus, four axle boxes, four mono-links, and four axle springs are disposed on the single bogie 12a. Here, those that are integrated with the bogie frame 16 are also assumed to be included in the bogie frame 16. For example, an obstruction guard welded to the main body of the bogie frame 16 is also assumed to be included in the bogie frame 16. Incidentally, the boundary between the bogie frame 16 and those integrated with the bogie frame 16 is not fixed. Further, those that are integrated with the bogie frame 16 perform the same motion as the bogie frame 16.

In Fig. 2, only the bogie frame 16, the axle boxes 17a, 17b, the mono-links 18a, 18b, and the axle springs 19a, 19b on the bogie 12a are illustrated. The bogie frame, the axle boxes, the mono-links, and the axle springs on the bogie 12b are also fabricated by the same ones illustrated in Fig. 2. Incidentally, the railway vehicle itself can be fabricated by a well-known technique, and thus its detailed explanation is omitted here.

In the following explanation, the parts that couple the bogie frame 16 to the axle boxes 17a, 17b are collectively referred to as a coupling element, if necessary.

The coupling elements are connected to the bogie frame 16 and the axle boxes 17a, 17b. Thus, the vibrations of the axle boxes 17a, 17b are linked to the vibrations of the coupling elements. These vibrations propagate to the bogie frame 16 through the coupling elements. The external force acting on the bogie frame 16 is expressed as the sum of a viscous damping force in the vibration and a stiffness force of the coupling element. The viscous damping force is expressed as the product of a viscous damping coefficient and a velocity. The stiffness force is expressed as the product of a stiffness and a displacement. Based on the above, the present inventors have found out that the external force acting on the bogie frame 16 can be accurately derived by deriving the external force acting on the bogie frame 16 based on the acceleration measured at a connecting part (velocity and displacement derived from the acceleration). Here, the connecting part is a part that is not integrated with the bogie frame 16, and is a part connected to the bogie frame 16 directly or via another part.

As such a connecting part, for example, there is cited at least one of the part that forms the coupling element and the part that is connected to the coupling element directly or via a part. More specifically, in this embodiment, there is explained, as an example, the case where such a connecting part is the axle boxes 17a, 17b. Thus, in this embodiment, acceleration sensors 21a, 21b are attached to the axle boxes 17a, 17b respectively. In this embodiment, there is explained, as an example, the case where the acceleration sensors 21a, 21b are three-dimensional acceleration sensors. From data of accelerations measured by the acceleration sensors 21a, 21b, an $x_1$ axis direction component, an $x_2$ axis direction component, and an $x_3$ axis direction component of the acceleration are obtained. Incidentally, acceleration sensors are also attached to the axle boxes other than the axle boxes 17a, 17b. In this embodiment, for example, the acceleration sensors 21a, 21b are one example of a first sensor. Further, the acceleration measured by the acceleration sensors 21a, 21b (acceleration of the axle boxes 17a, 17b) is one example of a physical quantity that enables derivation of the external force acting on a force application point of the bogie frame.

As long as the external force acting on the bogie frame 16 is obtained in the above manner, a displacement distribution of the bogie frame 16 (an amount of change in the position of each portion of the bogie frame 16) can be derived by solving motion equations representing the vibration (motion) of the bogie frame 16. As long as the displacement distribution of the bogie frame 16 is obtained, a stress distribution of the bogie frame 16 is obtained. Further, in this embodiment, in order to reduce the load of calculation, the motion equations representing the vibration of the bogie frame 16 are solved using a modal analysis method. There will be explained one example of the method of deriving the stress distribution of the bogie frame 16 below.

<Derivation of the stress distribution of the bogie frame 16>

<<Motion equation of the bogie frame 16>>

A motion equation representing the vibration of the bogie frame 16 is expressed by (1) Equation below.
[Mathematical equation 1]

$$[M]\{\ddot{u}\} + [C]\{\dot{u}\} + [K]\{u\} = \{f\} \qquad \cdots (1)$$

Here, (M) $(\in R^{31 \times 31})$ is a mass matrix of the bogie frame 16. [C] $(\in R^{31 \times 31})$ is a viscous matrix of the bogie frame 16. The viscous matrix is also referred as to as a damping matrix. [K] $(\in R^{31 \times 31})$ is a stiffness matrix of the bogie frame 16. Incidentally, R represents the set of all real numbers (this will be the same also in the following explanation).

$\{u\}$ $(\in R^{31})$ is a displacement vector of the bogie frame 16. $\{f\}$ $(\in R^{31})$ is an external force vector of the bogie frame 16.

In this embodiment, the vibration of the bogie frame 16 is assumed to include three components of the $x_1$ axis direction, the $x_2$ axis direction, and the $x_3$ axis direction. Thus, the displacement of each nodal point constituting $\{u\}$ and the external force of each nodal point constituting $\{f\}$ have three degrees of freedom. Incidentally, in (1) Equation, represents d/dt (first-order differential of time), and $\cdot\cdot$ represents $d^2/dt^2$ (second-order differential of time) (this applies also to the following equations).

1 corresponds to the degree of freedom of an approximate solution of a displacement distribution in a numerical analysis. In this embodiment, there is explained, as an example, the case of using the finite element method (FEM; Finite Element Method) as the numerical analysis. Thus, 1 is, for example, the number of nodal points of a mesh in the finite element method. In this case, to the components of the mass matrix [M] of the bogie frame 16, the viscous matrix [C] of the bogie frame 16, and the stiffness matrix [K] of the bogie frame 16, there are given values derived from the densities corresponding to the components, values derived from the viscous damping coefficients corresponding to the components, and values derived from the stiffness corresponding to the components, respectively. The density, the viscous damping coefficient, and the stiffness may be the same or different values, independently of position. The components of the mass matrix [M], the viscous matrix [C], and the stiffness matrix [K] of the bogie frame 16 are derived by using, tor example, the mesh in the finite element method and the density, the viscous damping coefficient, and the stiffness of the entire bogie frame 16 in a well-known solver that performs the numerical analysis using the finite element method.

The first term on the left side of (1) Equation is an inertia term representing the gravity acting on the bogie frame 16. The second term on the left side of (1) Equation is a damping term representing the viscous force acting on the bogie frame 16. The third term on the left side of (1) Equation is a stiffness term representing the stiffness force acting on the bogie frame 16.

<<External force acting on the bogie frame 16>>

The external force vector (f) on the right side of (1) Equation is given by deriving the external force acting on the coupling element.

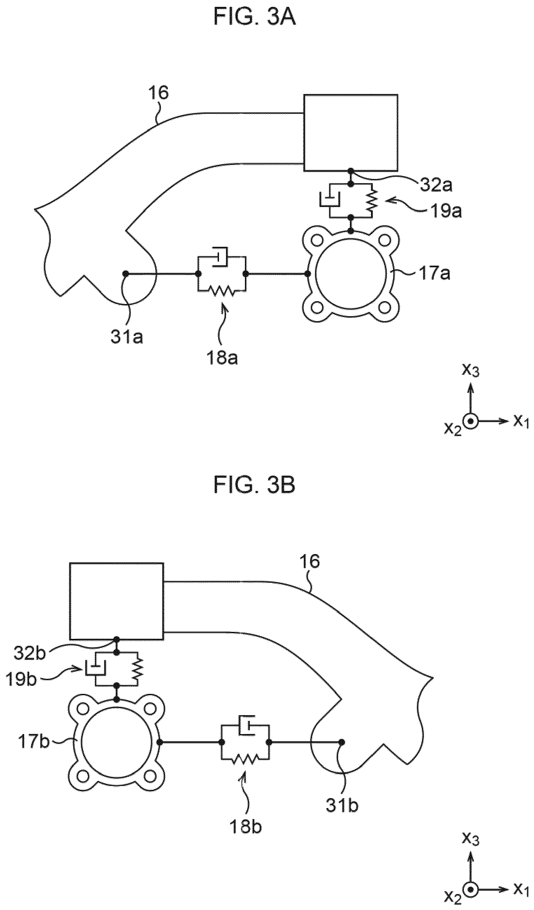

Thus, with reference to Fig. 3A and Fig. 3B, there is explained one example of the method of deriving the external force acting on the coupling element. Fig. 3A and Fig. 3B are views illustrating models of one example of the coupling element. Fig. 3A illustrates a view of the model of the coupling element connected to the bogie frame 16 and the axle box 17a. Fig. 3B illustrates a view of the model of the coupling element connected to the bogie frame 16 and the axle box 17b. The v:.ews of the models of the coupling elements connected to the bogie frame 16 and the other axle boxes (the axie box 17b, and so on) are also illustrated in the same manner as in Fig. 3A and Fig. 3B, and thus, their detailed explanation is omitted here. The connection point between the bogie frame 16 and the coupling element may be set to either a region (the entire region) where the bogie frame 16 and the coupling element are in contact with each other, or a representat:.ve point of the region where the bogie frame 16 and the coupling element are in contact with each other (for example, the position of the center of gravity). :n the examples illustrated in Fig. 3A and Fig. 3B, in order to simplify the explanation, the connection point between the bogie frame 16 and the coupling element is assumed to be a point. In the following explanation, the connection point between the bogie frame 16 and the coupling element will be referred to as a force application point, if necessary. In the examples illustrated in Fig. 3A and Fig. 3B, the mono-link 18a and the axle spring 19a are illustrated in the model where a spring and a damper are connected in parallel. The nono-link 18a in the model and the bogie frame 16 in the model are connected at a force application point 31a. The axle spring 19a in the model and the bogie frame 16 in the model are connected at a force application point 32a. Further, for the axle box 17b as well, the mono-link 18b in the model and the bogie frame 16 in the model are connected at a force application point 31b, and the axle spring 19b in the model and the bogie frame 16 in the model are connected at a force application point 32b similarly.

A motion equation representing the vibration of the coupling element is expressed by (2) Equation below.
[Mathematical equation 2]

$$[C_{bc}]\{\dot{u}_0\} + [K_{bc}]\{u_0\} = \{f_0\} \qquad \cdot \cdot \cdot (2)$$

Here, $[C_{bc}]$ is a visccus matrix of the coupling element. $[K_{bc}]$ is a stiffness matrix of the coupling element. $\{u_0\}$ is a displacement vector of the coupling element constituted by a displacement of the coupling element at the point connected to the axle box 17a and a displacement of the coupling element at the force application point. $\{f_0\}$ is an external force vector of the coupling element constituted by an external force acting on the connection point between the coupling element and the axle box 17a and an external force acting on the force application point of the coupling element. To the components of the viscous matrix $[C_{bc}]$ of the coupling element and the stiffness matrix $[K_{bc}]$ of the coupling element, there are given values derived from the viscous damping coefficients corresponding to the components and values derived from the stiffness corresponding to the components, respectively. The components of the viscous matrix $[C]$ and the stiffness matrix $[K]$ of the coupling element are derived by using, for example, the position of the connection point between the coupling element and the axle box 17a, the position of the force application point of the coupling element, the viscous damping coefficient of the coupling element, and the stiffness of the coupling element.

In (2) Equation, the displacements in the $x_1$ axis direction, the $x_2$ axis direction, and the $x_3$ axis direction at the force application point of the coupling element are set to 0 (zero). Further, the displacement of the coupling element at the point connected to the axle box 17a is set to the displacement of the axle box 17a. By setting as above, the external force acting on the force application point of the coupling element can be derived as the external force constituting the external force vector $\{f_0\}$ of the coupling element. That is, the external forces acting on the force application point 31a of the mono-link 18a and the force application point 32a of the axle spring 19a are derived by using (2) Equation constituted in terms of each of the mono-link 18a and the axle spring 19a. Further, for the axle box 17b as well, the external forces acting on the force application point 31b of the mono-link 18o and the force application point 32b of the axle spring 19b are derived from the displacement of the axle box 17b similarly. Then, the external forces acting on the force application points 31a, 31b and the force application points 32a, 32b of the bogie frame 16 are derived as counteracting forces of the external forces acting on the force application points 31a, 31b of the mono-links 18a, 18o and the force application points 32a, 32b of the axle springs 19a, 19b.

<<Derivation of the displacement vector {u}>>

The displacement vector (u) of the bogie frame 16 is derived by giving the values derived by the method described above to the components of the external forces acting on the force application points 31a, 31b, 32a, and 32b (of the bogie frame 16) of the external force vector {f} in (1) Equation and giving 0 (zero) to the other components, and thereby the displacement distribution of the bogie frame 16 can be derived. In this embodiment, in order to shorten a calculation time, the motion equation in a system of physical coordinates (cooriinates representing the position in real space) expressed by (1) Equation is expressed in terms of a motion equation in a modal coordinate system, and the case of solving the motion equation in the modal coordinate system is explained as an example. There will be explained one example of the method of solving the motion equation in the modal coordinate system below.

By applying an eigenvalue analysis to the motion equation in (1) Equation, an eigenfrequency $\omega$ and an eigenvector $\{\phi\}$ are derived, and a modal matrix $[\phi]$ ($\in R^{31 \times n}$) consis ting of eigenvectors $\{\phi\} = \{\phi^{(1)}\}, \cdots, \{\phi^{(n)}\}$ is derived. Incidentally, the eigenvectors are also referred to as eigenmode vectors. Here, n ($\in$ N) is the number of modes. The eigenfrequencies are selected by the number of modes n in order from the lowest elgenfrequency. The method of eigenvalue analysis can be performed, for example, by using the modal analysis method described in Non Patent Literature 1, and since it is a well-known technique, its detailed explanation is omitted here. Incidentally, when performing the eigenvalue analysis, the right side of (1) Equation is set to 0 (zero) as described in Non Patent Literature 1. Further, the damping term $[C]\{u\bullet\}$ may be set to 0 (zero) ($u\bullet$ corresponds to the one with $\bullet$ added on top of u in (1) Equation ). Further, the coordinate system of the displacement vectors based on the eigenvectors $\{\phi^{(1)}\}, \cdots, \{\phi^{(n)}\}$ is referred to as the modal coordinate system.

A mass matrix $[M_\xi]$ ($\in R^{n \times n}$) of the bogie frame 16 in the modal coordiiate system, a viscous matrix $[C_\xi]$ ($\in R^{n \times n}$) of the bogie frame 16 in the modal coordinate system, and a stiffness matrix $[K_\xi]$ ($\in R^{n \times n}$) of the bogie frame 16 in the modal coordinate system are expressed by (3), (4), and (5) Equations below, respectively.

[Mathematical equation 3]

$$[\phi]^T [M] [\phi] = [M_\xi] \qquad \cdots (3)$$

$$[\phi]^T [C] [\phi] = [C_\xi] \qquad \cdots (4)$$

$$[\phi]^T [K] [\phi] = [K_\xi] \qquad \cdots (5)$$

Here, T represents a transposed matrix (this applies also to the following equations). Further, the mass matrix $[M_\xi]$, the viscous matrix $[C_\xi]$, and the stiffness matrix $[K_\xi]$ of the bogie frame 16 in the modal coordinate system are diagonal matrices, as illustrated in (6), (7), and (8) Equations below, respectively. Incidentally, in the mass matrix $[M_\xi]$ and the viscous matrix $[C_\xi]$ of the bogie frame 16 in the modal coordinate system, in the case where components other than diagonal components are not 0 (zero), these components are assumed to be approximated to 0 (zero).

[Mathematical equation 4]

$$[M_\xi] = \begin{bmatrix} m_\xi^{(1)} & 0 & 0 \\ 0 & \ddots & 0 \\ 0 & 0 & m_\xi^{(n)} \end{bmatrix} \qquad \cdots (6)$$

$$[C_\xi] = \begin{bmatrix} c_\xi^{(1)} & 0 & 0 \\ 0 & \ddots & 0 \\ 0 & 0 & c_\xi^{(n)} \end{bmatrix} \qquad \cdots (7)$$

$$[K_\xi] = \begin{bmatrix} k_\xi^{(1)} & 0 & 0 \\ 0 & \ddots & 0 \\ 0 & 0 & k_\xi^{(n)} \end{bmatrix} \qquad \cdots (8)$$

Here, (1), $\cdots$, anc (n) represent components corresponding to a first-order eigenmode, $\cdots$, an nth-order eigenmode, respect:.vely (this applies also to the following equations).

The mass matrix $[M_\xi]$, the viscous matrix $[C_\xi]$, and the stiffness matrix $[K_\xi]$ of the bogie frame 16 in the modal coordinate system are diagonal matrices. Therefore, the respective eigenmodes can be handled as independent of each other. As a result, the calculation time can be shortened.

The displacement vector (u) of the bogie frame 16 in the physical coordinate system is transformed into a displacement vector $\{\xi\}$ $(\in R^n)$ in the modal coordinate system as illustrated in (9) Equation below. The external force vector (f) of the bogie frame 16 in the physical coordinate system is transformed into an external force vector $\{f_\xi\}$ $(\in R^n)$ in the modal coordinate system as illustrated in (10) Equation below.

[Mathematical equation 5]

$$\{u\} = [\phi]\{\xi\} \quad \cdots (9)$$

$$\{f\} = [\phi]\{f_\xi\} \quad \cdots (10)$$

Both sides of (1) Equation are multiplied by $[\phi]^T$ from the left. (9) Equation and (10) Equation are substituted into the equation obtained by multiplying the both sides of (1) Equation by $[\phi]^T$ from the left. Then, (11) Ecuation below is obtained.

(Mathematical equation 6]

$$[\phi]^T[M][\phi]\{\ddot{\xi}\} + [\phi]^T[C][\phi]\{\dot{\xi}\} + [\phi]^T[K][\phi]\{\xi\} = [\phi]^T[\phi]\{f_\xi\}$$

$$\cdots (11)$$

Here, $\xi\cdot$ corresponds to the one with $\cdot$ added on top of $\xi$ in (11) Equation. $\xi\cdot\cdot$ corresponds to the one with $\cdot\cdot$ added on top of $\xi$ in (11) Equation (this applies also to the fol.owing equations).

When (3) Equation to (5) Equation are substituted into (11) Equation, (12) Equation below is obtained because $[\phi]^T[\phi]$ is a unit matrix.

(Mathematical equation 7]

$$[M_\xi]\{\ddot{\xi}\} + [C_\xi]\{\dot{\xi}\} + [K_\xi]\{\xi\} = \{f_\xi\} \quad \cdots (12)$$

As above, the motion equation in the physical coordinate system illustrated in (1) Equation can be expressed by a motion equation in the modal coordinate system as illustrated in (12) Equation.

Here, the external force vector (f) in (1) Equation, which is derived by the previouslydescribed method, needs to be given as the external force vector $\{f_\xi\}$ in the modal coordinate system.

Thus, (13) Equation, which is obtained by modifying (10) Equation, is used.

[Mathematical equation 8]

$$\{f_\xi\} = [\phi]^T\{f\} \quad \cdots (13)$$

In this embodiment, by solving the motion equation of (12) Equation, the displacement vector $\{\xi\}$ $(= [\xi^{(1)}\ \xi^{(2)}\ \cdots\ \xi^{(n)}]^T)$ of the bogie frame 16 in the modal coordinate system is derived.

In order to do the above, first, the modal matrix $[\phi]$ is derived by the eigenvalue analysis. By using the modal matrix $[\phi]$ and the mass matrix $[M]$, the viscous matrix $[C]$, and the stiffness matrix $[K]$ of the bogie frame 16, the mass matrix $[M_\xi]$, the viscous matrix $[C_\xi]$, and the stiffness matrix $[K_\xi]$ of the bogie frame 16 in the modal coordinate system are derived according to (3) Equation to (5) Equation.

Further, from the data of acceleration measured by the acceleration sensors 21a, 21b, a first-order integral and a second-order integral with respect to time are performed respectively, and thereby, the displacement vector $\{u_0\}$ and the velocity vector $\{u_0\cdot\}$ on the left side of (2) Equation are derived. From the viscous damping coefficients of the mono-links 18a, 18b and the viscous damping coefficients of the axle springs 19a, 19b, the viscous matrices $[C_{bc}]$ of the mono-links 18a, 18b and the viscous matrices $[C_{bc}]$ of the axle springs 19a, 19b are derived respectively. From the stiffness of the mono-links 18a, 18b and the stiffness of the axle springs 19a, 19b, the stiffness matrices $[K_{bc}]$ of the mono-links 18a, 18b and the stiffness matrices $[K_{bc}]$ of the axle springs 19a, 19b are derived respectively. Pieces of information obtained as above are given to (2) Equation, and thereby the external forces acting on the force application points 31a, 31b of the mono-links 18a, 18b and the external forces acting on the force application points 32a, 32b of the axle springs 19a, 19b are derived respectively. Then, the external forces acting on the force application points 31a, 31b and the external forces acting on the force application points 32a, 32b of the bogie frame 16 are derived as counteracting forces of the external forces acting on the force application points 31a, 31b of the mono-links 18a, 18b and counteracting forces of the external forces acting on the force application points 32a, 32b of the axle springs 19a, 19b respectively. To components of the external forces acting on the force application points 31a, 31b, 32a, and 32b of the external force vector {f} in (13) Equation, values derived as above are given, and to the other components, 0 (zero) is given. Then, the modal matrix $[\phi]$ is given to the right side of (13) Equation. Then, from (13) Equation, the external force vector $\{f_\xi\}$ of the bogie frame 16 in the modal coordinate system is derived.

Then, the mass matrix $[M_\xi]$, the viscous matrix $[C_\xi]$, the stiffness matrix $[K_\xi]$, and the external force vector $\{f_\xi\}$ of the bogie frame 16 in the modal coordinate system, which have been derived as above, are given to (12) Expression. (12) Expression, to which the mass matrix $[M_\xi]$, the viscous matrix $[C_\xi]$, the stiffness matrix $[K_\xi]$, and the external force vector {f} of the bogie frame 16 in the modal coordinate system have been given, is solved, thereby making it possible to derive the displacement vector $\{\xi\}$ of the bogie frame 16 in the modal coordinate system. In the case of solving (12) Expression by using a state variable model, the state variable model is expressed as follows.

First, a state variable $\Xi$ ($\in R^{2n}$) is defined as in (14) Equation below. Fur:her, (12) Equation is described by a state equation in (15) Equation below.

[Mathematical equation 9]

$$\Xi = [\dot{\xi}^{(1)} \quad \xi^{(1)} \quad \cdots \quad \dot{\xi}^{(n)} \quad \xi^{(n)}]^T \qquad \cdots \text{(14)}$$

$$\dot{\Xi} = A\Xi + GF \qquad \cdots \text{(15)}$$

Here, a state transition matrix A ($\in R^{2n \times 2n}$) is expressed by (16) Equation below.
[Mathematical equation 10]

$$A = \begin{bmatrix} -\dfrac{c_\xi^{(1)}}{m_\xi^{(1)}} & -\dfrac{k_\xi^{(1)}}{m_\xi^{(1)}} & 0 & 0 & \cdots & 0 & 0 \\ 1 & 0 & 0 & 0 & \cdots & 0 & 0 \\ 0 & 0 & -\dfrac{c_\xi^{(2)}}{m_\xi^{(2)}} & -\dfrac{k_\xi^{(2)}}{m_\xi^{(2)}} & \cdots & 0 & 0 \\ 0 & 0 & 1 & 0 & \cdots & 0 & 0 \\ \cdots & \cdots & \cdots & \cdots & \cdots & \cdots & \cdots \\ 0 & 0 & 0 & 0 & \cdots & -\dfrac{c_\xi^{(n)}}{m_\xi^{(n)}} & -\dfrac{k_\xi^{(n)}}{m_\xi^{(n)}} \\ 0 & 0 & 0 & 0 & \cdots & 1 & 0 \end{bmatrix}$$

$$\cdots \text{(16)}$$

Further, a vector F ($\in R^n$) is a vector that stores the external force vector $\{f_\xi\}$ of the bogie frame 16 in the modal coordinate system, and is expressed by (17) Equation below.
(Mathematical equation 11)

$$F = [f_\xi^{(1)} \quad f_\xi^{(2)} \quad \cdots \quad f_\xi^{(n)}]^T \qquad \cdots \text{(17)}$$

Further, a matrix G ($\in$ R$^{2n \times n}$) is expressed by (18) Equation below.
[Mathematical equation 12]

$$G = \begin{bmatrix} \dfrac{1}{m_\xi^{(1)}} & 0 & \cdots & 0 \\ 0 & 0 & \cdots & 0 \\ 0 & \dfrac{1}{m_\xi^{(2)}} & \cdots & 0 \\ 0 & 0 & \cdots & 0 \\ \cdots & \cdots & \cdots & \cdots \\ 0 & 0 & \cdots & \dfrac{1}{m_\xi^{(n)}} \\ 0 & 0 & \cdots & 0 \end{bmatrix} \quad \cdots \text{(18)}$$

(16) Equation to (18 Equation are obtained by describing (12) Equation in the form of (15) Equation, assuming that the state variable $\Xi$ is expressed by (14) Equation.

Incidentally, (12) Equation is an ordinary differential equation, and the method to solve (12) Equation is not limited to the method using the state variable model. As the method to solve (12) Equation, a well-known method intended for solving the ordinary differential equation can be employed.

The displacement vector ($\xi$) ($= [\xi^{(1)} \xi^{(2)} \dots \xi^{(n)}]^T$) of the bogie frame 16 in the modal coordinate system is derived in the above manner. Then, the displacement vector $\{\xi\}$ of the bogie frame 16 in the modal coordinate system is transformed into the displacement vector $\{u\}$ of the bogie frame 16 in the physical coordinate system. As illustrated in (19) Equation below, for example, a displacement $u_{q,1}$ in the $x_1$ axis direction ($i \in \{1, 2, 3\}$) at a nodal point q of the mesh can be derived.
[Mathematical equation 13]

$$u_{q,i} = \phi_{q,i}^{(1)} \xi^{(1)} + \phi_{q,i}^{(2)} \xi^{(2)} + \cdots + \phi_{q,i}^{(n)} \xi^{(n)} = \sum_{k=1}^{n} \phi_{q,i}^{(k)} \xi^{(k)} \quad \cdots \text{(19)}$$

Here, $\phi_{q,i}^{(n)}$ is the component of the modal matrix $[\phi]$ corresponding to the nth-order eigenmode, the nodal point q of the mesh, and the $x_i$ axis direction. In the above manner, the displacement vector $\{\xi\}$ of the bogie frame 16 in the modal coordinate system is transformed into the displacement vector $\{u\}$ of the bogie frame 16 in the physical coordinate system. This makes it possible to obtain the displacement distribution of the bogie frame 16 (displacements in each mesh).

<<Strain-Displacement relational equation>>

As long as the displacement distribution of the ' bogie frame 16 is obtained, respective components $\varepsilon_{e,11}$, $\varepsilon_{e,12}$, $\varepsilon_{e,13}$, $\varepsilon_{e,21}$, $\varepsilon_{e,22}$, $\varepsilon_{e,23}$, $\varepsilon_{e,31}$, $\varepsilon_{e,32}$, and $\varepsilon_{e,33}$ of strain tensors inside respective elements e of the mesh are expressed by (20a) Equation to (20f) Equation below.

Mathematical equation 14]

$$\varepsilon_{e,11} = \frac{\partial u_{e,1}}{\partial x_1} \qquad \cdots \ (20a)$$

$$\varepsilon_{e,22} = \frac{\partial u_{e,2}}{\partial x_2} \qquad \cdots \ (20b)$$

$$\varepsilon_{e,33} = \frac{\partial u_{e,3}}{\partial x_3} \qquad \cdots \ (20c)$$

$$\varepsilon_{e,12} = \varepsilon_{e,21} = \frac{1}{2}\left(\frac{\partial u_{e,2}}{\partial x_1} + \frac{\partial u_{e,1}}{\partial x_2}\right) \qquad \cdots \ (20d)$$

$$\varepsilon_{e,13} = \varepsilon_{e,31} = \frac{1}{2}\left(\frac{\partial u_{q,3}}{\partial x_1} + \frac{\partial u_{e,1}}{\partial x_3}\right) \qquad \cdots \ (20e)$$

$$\varepsilon_{e,23} = \varepsilon_{e,32} = \frac{1}{2}\left(\frac{\partial u_{e,3}}{\partial x_2} + \frac{\partial u_{e,2}}{\partial x_3}\right) \qquad \cdots \ (20f)$$

Here, $x_1$, $x_2$, and $x_3$ represent coordinate components describing the three degrees of freedom of the displacement (the $x_1$ axis direction component, the $x_2$ axis direction component, and the $x_3$ axis direction component in this case). Further, $u_{e,1}$, $u_{e,2}$, and $u_{e,3}$ represent the $x_1$ axis direction component, the $x_2$ axis direction component, and the $x_3$ axis direction component of the displacement inside each element e, respectively.

<<Stress-Strain relational equation>>

The relationship between the stress and the strain is expressed by (21) eluation below. Incidentally, (21) Equation i$_3$ called the constitutive law of an elasti: body.
[Mathematical equation 15]

$$\begin{bmatrix} \sigma_{e,11} \\ \sigma_{e,22} \\ \sigma_{e,33} \\ \sigma_{e,12} \\ \sigma_{e,23} \\ \sigma_{e,31} \end{bmatrix} = \begin{bmatrix} 2\mu+\lambda & \lambda & \lambda & 0 & 0 & 0 \\ \lambda & 2\mu+\lambda & \lambda & 0 & 0 & 0 \\ \lambda & \lambda & 2\mu+\lambda & 0 & 0 & 0 \\ 0 & 0 & 0 & 2\mu & 0 & 0 \\ 0 & 0 & 0 & 0 & 2\mu & 0 \\ 0 & 0 & 0 & 0 & 0 & 2\mu \end{bmatrix} \begin{bmatrix} \varepsilon_{e,11} \\ \varepsilon_{e,22} \\ \varepsilon_{e,33} \\ \varepsilon_{e,12} \\ \varepsilon_{e,23} \\ \varepsilon_{e,31} \end{bmatrix}$$

$$\cdots \ (21)$$

Here, 1 in the last second digit of 11, 12, and 13 of $\sigma_{e,11}$, $\sigma_{e,12}$, and $\sigma_{e,13}$ represents the stress acting on a micro-surface vertical to the $x_1$ axis, and 1 in the last second digit of 11, 21, and 31 of $\sigma_{e,11}$, $\sigma_{e,21}$, and $\sigma_{e,31}$ represent the value of the $x_1$ axis direction component. 2 in the last second digit of 21, 22, and 23 of $\sigma_{e,21}$, $\sigma_{e,22}$, and $\sigma_{e,23}$ represent the stress acting on a micro-surface vertical to the $x_2$ axis, and 2 in the last digit of 12, 22, and 32 of $\sigma_{e,12}$, $\sigma_{e,22}$, and $\sigma_{e,32}$ represent the value of the $x_2$ axis direction component. 3 in the last second digit of 31, 32, and 33 of $\sigma_{e,31}$, $\sigma_{e,32}$, and $\sigma_{e,33}$ represent the stress acting on a micro-surface vertical to the $x_3$ axis, and 3 in the last digit of 13, 23, and 33 of $\sigma_{e,13}$, $\sigma_{e,23}$, and $\sigma_{e,33}$ represent the value of the $x_3$ axis direction component.
$\lambda$ and $\mu$ are Lame's constants and a stiffness modulus respectively. The Lame's constants $\lambda$ and the stiffness modulus $\mu$ are expressed by (22) Equation and (23) Equation below respectively.

[Mathematical equation 16]

$$\lambda = \frac{\nu E}{(1+\mu)(1-2\nu)} \qquad \cdots (22)$$

$$\mu = \frac{E}{2(1+\nu)} \qquad \cdots (23)$$

Here, E represents a Young's modulus. v represents a Poisson's ratio.

The stress distribution of the bogie frame 16 (stresses in each mesh) is obtained in the above manner.

<Configuration of an estimation device 400>

As illustrated in Fig. 1, in this embodiment, an estimation device 400 is disposed inside a vehicle body 11 of the railway vehicle. However, the estimation device 400 may be disposed outside the railway vehicle without being disposed inside the vehicle body 11. In this case, data measured in the railway vehicle are designed to be transmitted from the railway vehicle to the estimation device 400, for example, by wireless communication.

The estimation device 400 derives the stress distribution of the bogie frame 16 while the railway vehicle is traveling, as explained in the section <Derivation of the stress distribution of the bogie frame 16>. The estimation device 400 determines whether or not an index value based on the stress distribution of the bogie frame 16 satisfies a predetermined condition. In the case where the index value based on the stress distribution of the bogie frame 16 does not satisfy the predetermined condition, the estimation device 400 derives the position (point) of the bogie frame 16 that does not satisfy the predetermined condition and the traveling position of the railway vehicle at the timing when the index value is determined not to satisfy the predetermined condition. The estimation device 400 stores the position of the bogie frame 16 that does not satisfy the predetermined condition and the traveling position of the railway vehicle at the timing when the index value is determined not to satisfy the predetermined condition in association with each other. Information stored in this manner can be used as information intended for identifying an inspection point of the bogie frame 16 and an inspection point of the track 20, for example. The inspection point of the track 20 is specifically the point where track irregularity, or the like may have occurred. The index value based on the stress distribution of the bogie frame 16 is one example of the index values relating to the state of the bogie frame 16 and the track 20.

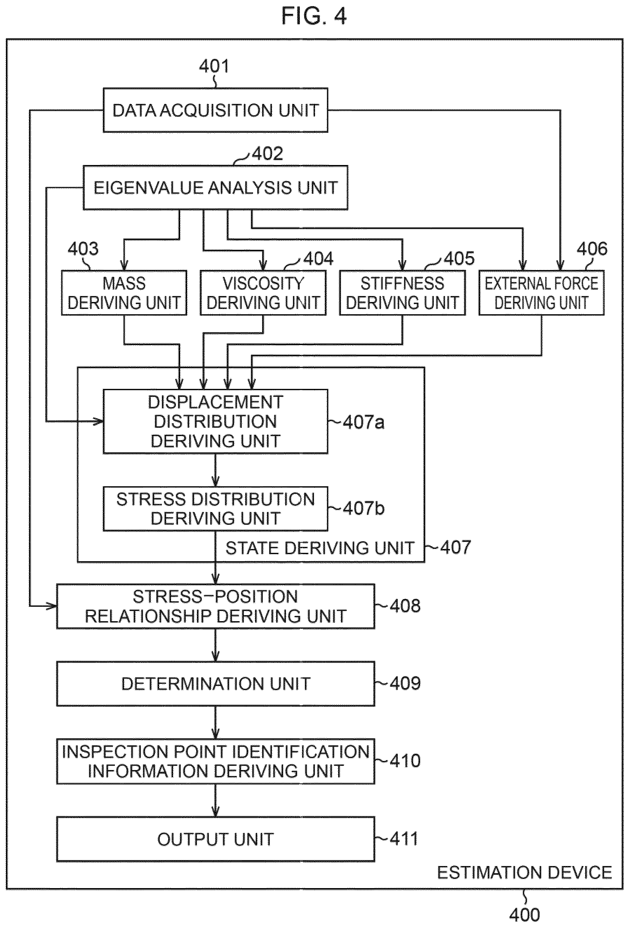

Fig. 4 is a diagram illustrating one example of a functional configuration of the estimation device 400. There is explained one example of the functions that the estimation device 400 has below with reference to Fig. 4. A hardware of the estimation device 400 is fabricated, for example, by using an information process:.ng device including a CPU, a ROM, a RAM, a HDD, and various interfaces, or by using a dedicated hardware. Incidentally, in the processing to be explained below, it is assumed that the data that need to be set in advance are stored in the estimation device 400 before the measurement starts.

<<Data acquisition unit 401>>

Every time a sampling time of a fixed period arrives, a data acquisition unit 401 acquires data including data indicating the acceleration measured by the acceleration sensors 21a, 21b and data indicating the traveling position of the railway vehicle. The method of acquiring the data indicating the traveling position of the railway vehicle is not limited in particular. The data indicating the traveling position of the railway vehicle can be obtained, for example, by us.ng a GPS (Global Positioning System) disposed on the railway vehicle. Further, based on a traveling speed of the railway vehicle and an elapsed time from the start of the measurement, a distance traveled by the railway vehicle at each time from the start of the measurement may be derived, and based on this traveled distance and the arrangement of the track 20 on which the railway vehicle travels, the traveling position of the railway vehicle at each time may be derived. In this case, the data indicating the position of the railway vehicle at the start of the measurement are stored in the estimation device 400 before the measurement starts.

An eigenvalue analysis unit 402, a mass deriving unit 403, a viscosity deriving unit 404, a stiffness deriving unit 405, an external force deriving unit 406, a state deriving unit 407, and a stress-position relationship deriving unit 408 execute pieces of processing to be explained below every time a sampling time arrives. They execute pieces of the processing to be explained below by using information obtained at the same sampling time. For example, in the case where each of the units uses the data acquired by the data acquisition unit 401 in the processing at a certain sampling time, the data will be the data acquired by the data acquisition unit 401 at that sampling time.

<<Eigenvalue analysis unit 402>>

The eigenvalue analysis unit 402 derives the eigenfrequency $\omega$ and the eigenvector $\{\phi\}$ by performing an eigenvalue analysis on the motion equation of (1) Equation, and derives the modal matrix $[\phi]$ constituted by the eigenvector $\{\phi\}$. Incidentally, based on the formulation of the motion equation using the finite element method, the mass matrix [M], the viscous matrix [C], and the stiffness matrix [K] of the bogie frame 16 are derived.

<<Mass deriving unit 403>>

The mass deriving unit 403 derives the mass matrix $[M_\xi]$ of the bogie frame 16 in the modal coordinate system by using the modal matrix $[\phi]$ and the mass matrix [M] of the bogie frame 16 according to (3) Equation. In the following explanation, the mass matrix of the bogie frame 16 in the modal coordinate system is referred to as a modal mass matrix, if necessary.

<<Viscosity deriving unit 404>>

The viscosity deriving unit 404 derives the viscous matrix $[C_\xi]$ of the bogie frame 16 in the modal coordinate system by using the modal matrix $[\phi]$ and the viscous matrix [C] of the bogie frame 16 according to (4) Equation. In the following explanation, the viscous matrix of the bogie frame 16 in the modal coordinate system is referred to as a modal viscous matrix if necessary.

<<Stiffness deriving unit 405>>

The stiffness deriving unit 405 derives the stiffness matrix $[K_\xi]$ of the bogie frame 16 in the modal coordinate system by using the modal matrix $[\phi]$ and the stiffness matrix [K] of the bogie frame 16 according to (5) Equation. In the following explanation, the stiffness matrix of the bogie frame 16 in the modal coordinate system is referred to as a modal stiffness matrix if necessary.

<<External force deriving unit 406>>

The external force deriving unit 406 derives each of the displacement vectors $\{u_0\}$ and the velocity vectors $\{u_0\cdot\}$ of the mono-links 18a, 18b and the displacement vectors $\{u_0\}$ and the velocity vectors $\{u_0\cdot\}$ of the axle springs 19a, 19b based on the data of the acceleration measured by the acceleration sensors 21a, 21b. The external force deriving unit 406 derives each of the viscous matrices $[C_{bc}]$ of the mono-links 18a, 18b and the viscous matrices $[C_{bc}]$ of the axle springs 19a, 19b from the viscous damping coefficients of the mono-links 18a, 18b and the viscous damping coefficients of the axle springs 19a, 19b. Further, the external force deriving unit 406 derives each of the stiffness matrices $[K_{bc}]$ of the mono-links 18a, 18b and the stiffness matrices $[K_{bc}]$ of the axle springs 19a, 19b from the stiffness of the mono-links 18a, 18b and the stiffness of the axle springs 19a, 19b.

The external force deriving unit 406 derives the external forces acting on the force application points 31a, 31b of the mono-links 18a, 18b and the external forces acting on the force application points 32a, 32b of the axle springs 19a, 19b by using the displacement vectors $\{u_0\}$, the velocity vectors $\{u_0\cdot\}$, the viscous matrices $[C_{bc}]$, and the stiffness matrices $[K_{bc}]$ of the mono-links 18a, 18b and the displacement vectors (uo), the velocity vectors $\{u_0\cdot\}$, the viscous matrices $[C_{bc}]$, and the stiffness matrices $[K_{bc}]$ of the axle springs 19a, 19b according to (2) Equation. The external force deriving unit 406 derives the external forces acting on the force application points 31a, 31b and the external forces acting on the force application points 32a, 32b of the bogie frame 16 as their counteracting forces.

The external force deriving unit 406 gives the values derived in this manner to the components of the external forces acting on the force application points 31a, 31b, 32a, and 32b in the components of the external force vector $\{f\}$ of the bogie frame 16, and gives 0 (zero) to the other components, thereby deriving the external force vector $\{f\}$ of the bogie frame 16 as the external force distribution of the bogie frame 16. The externa:. force deriving unit 406 derives the external force vector $\{f_\xi\}$ of the bogie frame 16 in the modal coordinate system by using the external force vector $\{f\}$ of the bogie frame 16 derived in this manner and the modal matrix $[\phi]$ according to (13) Equation. In the following explanation, the external force vector of the bogie frame 16 in the modal coordinate system is referred to as a modal external force vector if necessary. In this embodiment, for example, the external force vector $\{f\}$ of the bogie frame 16 is one example of the distribution of the external force acting on the bogie frame. Further, the modal external force vector $\{f_\xi\}$ is one example of the distribution of the external force acting on the bogie frame in the modal coordinate system.

<<State deriving unit 407>>

The state deriving unit 407 derives information representing the state of the bogie frame 16 based on the external force vector {f} of the bogie frame 16 derived by the external force deriving unit 406. In this embodiment, the state deriving unit 407 derives information including the displacement distribution of the bogie frame 16 and the stress distribution of the bogie frame 16 as the information representing the state of the bogie frame 16. In this embodiment, the state deriving unit 407 includes a displacement distribution deriving unit 407a and a stress distribution deriving unit 407b.

<<Displacement distrioution deriving unit 407a>>

The displacement distribution deriving unit 407a derives the displacement vector {$\xi$} of the bogie frame 16 in the modal coordinate system as the displacement distribution of the bogie frame 16 in the modal coordinate system by using the modal mass matrix [$M_\xi$], the modal viscous matrix [$C_\xi$], the modal stiffness matrix [$K_\xi$], and the modal external force vector {$f_\xi$} according to (12) Equation. As described previously, in this embodiment, the displacement distribution deriving unit 407a derives the displacement vector {$\xi$} of the bogie frame 16 in the modal coordinate system by using the state variable models illustrated in (14) Ecuation to (18) Equation. In the following explanation, the displacement vector of the bogie frame 16 in the modal coordinate system is referred to as a modal displacement vector if necessary. In this embodimer.t, for example, the modal displacement vector {$\xi$} is one example of the displacement distribution of the bogie frame in the modal coordinate system.

The displacement distribution deriving unit 407a derives the displacement vector {u} of the bogie frame 16 in the physical coordinate system as the displacement distribution of the bogie frame 16 in the physical coordinate system by using the modal displacement vector {$\xi$} and the modal matrix [$\phi$] according to (19) Equation. In the following explanation, the displacement. vector of the bogie frame 16 in the physical coordinate system is referred to as a real displacement vector if necessary. In this embodiment, for example, the real displacement vector {u} is one example of the displacement distribution of the bogie frame in the physical coordinate system.

<<Stress distribution deriving unit 407b>>

The stress distribution deriving unit 407b derives the strain tensors inside the respective elements e of the mesh as a strain distribution of the bogie frame 16 by using the real displacement vector {u} according to (20a) Equation to (20f) Equation. The stress distribution deriving unit 407b derives stress tensors inside the respective elements e of the mesh as the stress distribution of the bogie frame 16 by using the strain tensors inside the respective elements e of the nesh, and the Young's modulus E and the Poisson's ratio v of the bogie frame 16 according to (21) Equation to (23) Equation.

<<Stress-position relationship deriving unit 408>>

The stress-position relationship deriving unit 408 stores the stress distribition of the bogie frame 16 and the traveling position of the railway vehicle in association with each other. In the following explanation, the stress distribution of the bogie frame 16 and the traveling position of the railway vehicle, which are associated with each other in this manner, are referred to as st-ess-position relationship information if necessary. In the above manner, the stress-position relationship information at each sampling time is obta.ned.

<<Determination unit .109>>

A determination unit 409 determines whether or not an index value based on the stress-position relationship information (a variation of stress with time) satisfies a predetermined condition. In this embodiment, the determination unit 409 plots an average stress and a varying stress, which are determined based on the stress-position relationship information (variation of stiess with time), on a stress limit diagram of JIS standard E4207. Then, the determination unit 409 determines whether or not the points plotted on the stress limit diagram are within a stress tolerance range of the stress limit diagram. For example, in a graph that represents the relationship between the stress of the bogie frame 16 in a certain measurement section and the traveling position of the railway vehicle (time), the determination unit 409 sets a variation section on the periphery of the region indicating the stress maximum value. Then, the determination unit 409 sets the average value of the stress within the variation section as the average stress, and sets the variation range (amplitude) of the stress within the variation section as the varying stress.

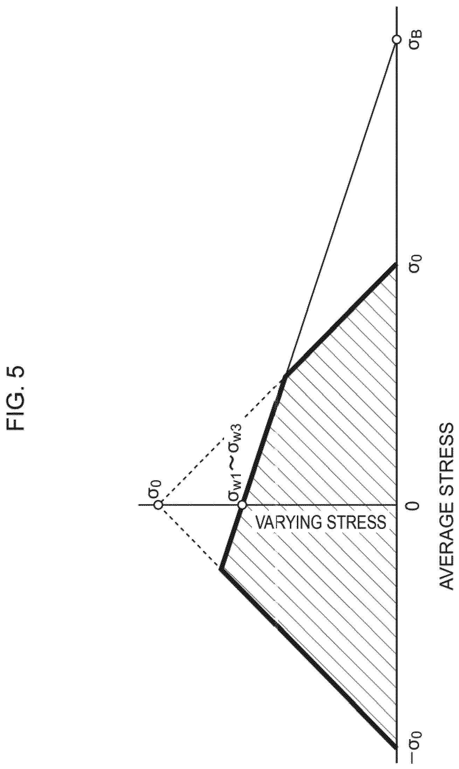

Fig. 5 is a view conceptually illustrating one example of the stress linit diagram. In Fig. 5, the stress tolerance range is indicated by diagonal lines.

In Fig. 5, $\sigma_B$ is a tensile strength of a material of the bogie frame 16. $\sigma_0$ is an allowable stress for a yield of the material of the bogie frame 16. $\sigma_{w1}$ is a fatigue allowable stress of the material of the bogie frame 16. $\sigma_{w2}$ is a fatigue allowable stress in the case where a weld toe portion of the bogie frame 16 is not finished. $\sigma_{w3}$ is a fatigue allowable stress in the case where the weld toe portion of the bogie frame 16 is finished.

In this manner, in this embodiment, the point determined by the average stress and the varying stress is one example of the index value based on the stress distribution. Further, the fact that the point determined by the average stress and the varying stress is within the stress tolerance range of the stress limit diagram is one example of satisfying the predetermined condition.

The determination unit 409 may make such a determination every time the sampling time arrives, make such a determination at a predetermined timing, or make such a determination when there is a predetermined operation for the estimation device 400 by an operator. Examples of the predetermined timing include a timing at which the traveling of the railway vehicle in a predetermined section is finished.

Incidentally, the index value based on the stress distribution and the predetermined condition are not limited to these. For example, the maximum principal stress may be employed as one example of the index value based on the stress distribution, and the fact that the absolute value of the maximum principal stress does not exceed a threshold value may be employed as one example of satisfying the predetermined condition.

<<Inspection point identification information deriving unit 410>>

An inspection point identification information deriving unit 410 derives, in the case where the points of the average stress and the varying stress, which are determined based on the stress-position relationship information, plotted on the stress limit diagram are not within the stress tolerance range of the stress limit diagram, derives the position of the bogie frame 16 where this plot is obtained and the traveling position of the railway vehicle when the plotted points are not within the stress tolerance range of the stress limit diagram. The inspection point identification information deriving unit 410 performs this derivation in each of a plurality of variation sections set from the stress-position relationship information. This makes it possible to identify at which position of the bogie frame 16 the points of the average stress and the varying stress, which are determined based on the stress-position relationship information, plotted on the stress limit diagram are not within the stress tolerance range of the stress limit diagram when at which position the railway vehicle is traveling. In the following explanation, the information that indicates the position of the bogie frame 16 where the plot, which is not within the stress tolerance range of the stress limit diagram, is obtained and the traveling position of the railway vehicle indicated in the stress-position relationship information is referred to as inspection point identification information, if necessary. Incidentally, the inspection point identification information may be the information indicating any one of the following: the position of the bogie frame 16 where the plot, which is not within the stress tolerance range of the stress limit diagram, is obtained; and the traveling position of the railway vehicle indicated in the stress-position relationship information. Further, based on the stress of the entire bogie frame 16, plotting may be performed on the stress limit diagram.

<<Output unit 411>>

An output unit 411 outputs the inspection point identification information. As the form of output, for example, at least one of display on a computer display, transmission to an external device, and storage in a storage medium internal or external to the estimation device 400 can be employed.

An operator can identify the inspection point of the bogie frame 16 based on the position of the bogie frame 16 indicated in the inspection point identification information. Further, the operator can identify the inspection point of the track 20 based on the traveling position of the railway vehicle indicated in the inspection point identification information.

Incidentally, the inspection point identification information deriving unit 410 may perform such identification and set identified inspection point information as the inspection point identification information. For example, the inspection point identification information deriving unit 410 identifies, as the inspection point of the bogie frame 16, a predetermined range centered on the position of the bogie frame 16, which is identified based on the plot that is not: within the stress tolerance range of the stress limit diagram. Further, for example, the estimation device 400 identifies, as the inspection point of the track 20, a predetermined range centered on the traveling position of the railway vehicle when the points of the average stress and the varying stress, which are determined based on the stress-position relationship information, plotted on the stress limit diagram are not within the stress tolerance range of the stress limit diagram.

<Flowchart>

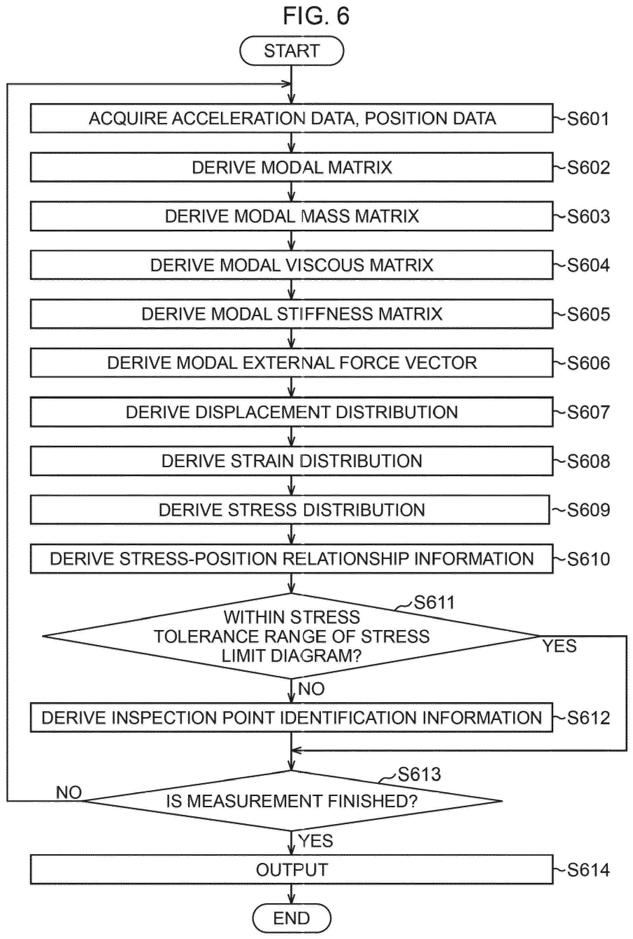

There is explained one example of an estimation method using the estimation device 400 in this embodiment with reference to a flowchart in Fig. 6. Pieces of repetitive processing at Steps S601 to S613 of the flowchart in Fig. 6 are assumed to be executed every time the sampling time arrives.

First, at Step S601, the data acquisition unit 401 acquires data including data indicating the acceleration measured by the acceleration sensors 21a, 21b and data indicating the traveling position of the railway vehicle.

Then, at Step S602, the eigenvalue analysis unit 402 derives the eigenfrequency $\omega$ and the eigenvector $\{\phi\}$ by performing an eigenvalue analysis on the motion equation of (1) Equation, and derives the modal matrix $[\phi]$ constituted by the eigenvectors $\{\phi\}$.

Then, at Step S603, the mass deriving unit 403 derives the modal mass matrix $[M_\xi]$ by using the modal matrix $[\phi]$ and the mass matrix $[M]$ of the bogie frame 16, according to (3) Equation.

Then, at Step S604, the viscosity deriving unit 404 derives the modal viscous matrix $[C_\xi]$ by using the modal matrix $[\phi]$ and the viscous matrix $[C]$ of the bogie frame 16, according to (4) Equation.

Then, at Step S605, the stiffness deriving unit 405 derives the modal stiffness matrix $[K_\xi]$ by using the modal matrix $[\phi]$ and the stiffness matrix $[K]$ of the bogie frame 16, according to (5) Equation.

Then, at Step S606, the external force deriving unit 406 derives each of the displacement vectors $\{u_0\}$ and the velocity vectors $\{u_0\cdot\}$ of the mono-links 18a, 18b and the displacement vectors $\{u_0\}$ and the velocity vectors $\{u_0\cdot\}$ of the axle springs 19a, 19b based on the data of the acceleration measured by the acceleration sensors 21a, 21b. The external force deriving unit 406 derives the modal external force vector $\{f_\xi\}$ by using the displacement vectors $\{u_0\}$, the velocity vectors $\{u_0\cdot\}$, the viscous matrices $[C_{bc}]$, and the stiffness matrices $[K_{bc}]$ of the mono-links 18a, 18b, the modal matrix $[\phi]$, the displacement vectors $\{u_0\}$, the velocity vectors $\{u_0\cdot\}$, the viscous matrices $[C_{bc}]$, and the stiffress matrices $[K_{bc}]$ of the axle springs 19a, 19b, and the modal matrix $[\phi]$ according to (2) Equation anc (13) Equation.

Incidentally, the order of Steps S603 to S606 is random.

Then, at Step S607, the displacement distribution deriving unit 407a derives the modal displacement vector $\{\xi\}$ by using the modal mass matrix $[M_\xi]$, the modal viscots matrix $[C_\xi]$, the modal stiffness matrix $[K_\xi]$, and tte modal external force vector $\{f_\xi\}$, according to (12) Equation. The displacement distribution deriving unit 407a derives the real displacement vector $\{u\}$ as the displacement distribution of the bogie frame 16 by using the modal displacement vector $\{\xi\}$ and the modal matrix $[\phi]$, according to (19) Equation.

Then, at Step S608, the stress distribution deriving unit 407b derives the strain tensors inside the respective elements e of the mesh as the strain distribution of the bogie frame 16 by using the real displacement vector $\{u\}$ according to (20a) Equation to (20f) Equation.

Then, at Step S609, the stress distribution deriving unit 407b derives the stress tensors inside the respective elements e of the mesh as the stress distribution of the bogie frame 16 by using the strain tensors inside the respective elements e of the mesh and the Young's modulus E and the Poisson's ratio v of the bogie frame 16 according to (21) Equation to (23) Equation.

Then, at Step S610, the stress-position relationship deriving unit 408 stores the stress distribution of the bogie frame 16 and the traveling position of the railway vehicle in association with each other (stores the stress-position relationship information).

Then, at Step S611, the determination unit 409 plots the average stress and the varying stress, which are determined based on the stress-position relationship information (variation of stress with time), on the stress limit diagram. Then, the determination unit 409 determines whether or not the plotted points are within the stress tolerance range of the stress limit diagram. As a result of this determination, in the case where the points of the average stress and the varying stress, which are determined based on the stress-position relationship information (variation of stress with time), plotted on the stress limit diagram are within the stress tolerance range of the stress limit diagram, the processing proceeds to Step S613 to be described below, omitting Step S612.

On the other hand, in the case where the points of the average stress and the varying stress, which are determined based on the stress-position relationship information (variation of stress with time), plotted on the stress ..imit diagram are not within the stress tolerance range of the stress limit diagram, the processing proceeds to Step S612. When the processing proceeds to Step S612, the inspection point identification information deriving unit 410 derives the position of the togie frame 16 where this plot is obtained and the traveling position of the railway vehicle when these plotted points are not within the stress tolerance range of the stress limit diagram as the inspection point identification information.

Then, at Step S613, the estimation device 400 determines whether or not to finish the measurement. This determination is made, for example, based on whether or not there is a predetermined operation for the estimation device 400 by the operator. Further, this determination may be made based on whether or not a predetermined timing has been reached. Examples of the predetermined timing include a timing at which the traveling of the railway vehicle in a predetermined section is finished.

As a result of the determination at Step S613, in the case where the measurement is not finished, the processing returns to Step S601. Then, pieces of the processing at Steps S601 to S613 at the next sampling time are executed.

On the other hand, as a result of the determination at Step S613, in the case where the measurement is finished, the processing proceeds to Step S614. When proceeding to Step S614, the output unit 411 outputs the inspection point identification information. Then, the processing by the flowchart in Fig. 6 is finished.

Incidentally, the processing at Step S614 may be performed after Step S612. In this case, the inspection point identification information is output in units of sampling time. In this case, as a result of the determination at Step S611, in the case where the points of the average stress and the varying stress, which are determined based on the stress-position relationship information (variation of stress with time), plotted on the stress limit diagram are within the stress tolerance range of the stress limit diagram, the output unit 411 may output information indicating this as the inspection point identification information. The inspection point identification information in this case includes the information indicating that the points of the average stress and the varying stress, which are determined based on the stress-position relationship information (variation of stress with time), plotted on the stress limit diagram are within the stress tolerance range of the stress limit diagram and the information indicating the traveling position of the railway vehicle when these plotted points are within the stress tolerance range of the stress limit diagram, tor example. It is identified that the traveling position of the railway vehicle included in the inspection point identification information does not require inspection.

<Summary>

In this embodiment as above, the estimation device 400 derives the external forces acting on the force application points 31a, 31b, 32a, and 32b of the bogie frame 16 based on the data of the acceleration measured by the acceleration sensors 21a, 21b attached to the axle boxes 17a, 17b. The estimation device 400 derives the displacement distribution of the bogie frame 16 by giving the distribution of the external force acting on the bogie frame 16 to the motion equation representing the vibration of the bogie frame 16 and solving this motion equation. The estimation device 400 derives the stress distribution of the bogie frame 16 by using the displacement distribution of the bogie frame 16. Accordingly, it is possible to accurately estimate the stress distribution in the bogie frame when the railway vehicle is traveling without having to identify the inspection points of the bogie frame in advance and place sensors at the inspection points of the bogie frame. Therefore, it is possible to accurately estimate the state of the bogie frame and the state of the track 20 when the railway vehicle is traveling.

Further, in this embodiment, the estimation device 400 performs the eigenvalue analysis on the motion equation representing the vibration of the bogie frame 16, to thereby derive the eigenvector and derive the modal matrix $[\phi]$ in which the eigenvector is stored. The estimation device 400 derives the displacement vectors $(u_0)$ and the velocity vectors $\{u_0\cdot\}$ of the mono-links 18a, 18b and the displacement vectors $\{u_0\}$ and the velocity vectors $\{u_0\bullet\}$ of the axle springs 19a, 19b, based on the data of the acceleration measured by the acceleration sensors 21a, 21b. The estimation device 400 derives the external force vector $\{f_t\}$ of the bogie frame 16 in the modal coordinate system based on the viscous matrices $[C_{bc}]$, the stiffness matrices $[M_{bc}]$, the displacement vectors $\{u_0\}$, and the velocity vectors $\{u_0\bullet\}$ of the mono-links 18a, 18b, the viscous matrices $[C_{bc}]$, the stiffness matrices $[M_{bc}]$, the displacement vectors $\{u_0\}$, and the velocity vector$_3$ $\{u_0\bullet\}$ of the axle springs 19a, 19b, and the modal matrix $[\phi]$. The estimation device 400 derives the displacement distribution of the bogie frame 16 in the modal coordinate system by giving the external force vector $\{f_\xi\}$ of the bogie frame 16 in the modal coordinate system to the motion equation representing the vibration of the bogie frame 16 in the modal coordinate system to solve this motion equation. Accordingly, it is possible to reduce the calculation load intended for accurately estimating the stress distribution in the bogie frame while the railway vehicle is traveling.

Further, in this embodiment, the data of the acceleration measured by the acceleration sensors 21a, 21b attached to the axle boxes 17a, 17b are used. Accordingly, it is no longer necessary to measure the acceleration of each of the parts forming the coupling element (the mono-links 18a, 18b and the axle springs 19a, 19b). Further, the purpose of the axle boxes 17a, 17b is not tc absorb or attenuate force, and thus, it is possible to prevent the decrease in the reliability cf measured values of accelerations caused by the inclusion of disturbances in the acceleration data.

<Modified example>

In this embodiment, the case where the acceleration sensors 21a, 21b are attached to the axle boxes 17a, 17b has been explained as an example. However, the sensors to be attached to the axle boxes 17a, 17b are not limited to the acceleration sensors, as long as they are used to measure a physical quantity that enables derivation of the external force acting on the force application point of the bogie frame 16. For example, they may be strain gauges. However, the strain gauges may stop working properly after a long period of use. For this reason, in this embodiment, the acceleration sensors are used as a sensor intended for measuring the physical quantity that enables derivation of the external force acting on the force application point of the bogie frame 16.

As described previously, the acceleration sensors 21a, 21b are preferably attached to the axle boxes 17a, 17b. However, the attachment places of the acceleration sensors 21a, 21b are not limited to the axle boxes 17a, 17b. The attachment places of the acceleration sensors 21a, 21b only need to be parts that are connected to the bogie frame 16 directly or via other components. For example, the attachment places of the acceleration sensors 21a, 21b each may be a part that is dedicated for attaching the acceleration sensor and is connected to the coupling element.

Further, in this embodiment, the case of deriving the stress distribution of the bogie frame 16 has been explained as an example. However, this embodiment does not have to be designed in this manner, as long as the physical quantity that reflects the state of the bogie frame when the railway vehicle is traveling is derived. For example, instead of deriving the stress distribution of the bogie frame 16, the displacement distribution of the bogie frame 16 may be derived and output.

Further, as described previously, as in this embodiment, the displacement distribution of the bogie frame 16 in the modal coordinate system is preferably derived to transform it into the displacement distribution of the bogie frame 16 in the physical coordinate system. However, the displacement distribution of the bogie frame 16 in the physical coordinate system may be derived without transformation from the physical coordinate system into the modal coordinate sys:em.

Further, in this embodiment, the estimation device 400 derives the external forces acting on the force application points 31a, 31b, 32a, and 32b of the bogie frame 16 connected to the axle boxes 17a, 17b via the mono-links 18a, 18b and the axle springs 19a, 19b based on the data of the acceleration measured by the acceleration sensors 21a, 21b attached to the axle boxes 17'a, 17b. However, this embodiment does not necessarrly have to be designed in this manner. In the case where a train has a plurality of railway vehicles, for example, the acceleration sensors 21a, 21b are attached to the axle boxes 17a, 17b of one specific railway vehicle. As for this specific railway vehicle, the external forces acting on the force application points 31a, 31b, 32a, and 32b of the bogie frame 16 connected to the axle boxes 17a, 17b are derived based on the data of the acceleration measured by the acceleration sensors 21a, 21b attached to the axle boxes 17a, 17b of this specific railway vehicle, as explained in this embodiment. In the meantime, as for the railway vehicle other than the specific railway vehicle, which has the same formation (train) as this specific railway vehicle, the external forces acting on the force application points 31a, 31b, 32a, and 32b of the bogie frame 16 connected to the axle boxes 17a, 17b of the railway vehicle other than this specific railway vehicle are derived based on the data of the acceleration measured by the acceleration sensors 21a, 21b attached to the axle boxes 17a, 17b of this specific railway vehicle. It is not necessary to attach the acceleration sensors to the axle boxes 17a, 17b of all the railway vehicles (all the bogies 12a, 12b) in this manner. In the case where this embodiment is designed as above, the inspection point of at least the track 20 can be identified in the railway vehicle other than the specific railway vehicle.

(Second embodiment)

Next, there is explained the second embodiment. In this embodiment, a sensor, which is intended for measuring a physical quantity that enables derivation of the displacement of a predetermined position of the bogie frame 16, is attached to the bogie frame 16. Then, in this embodiment, there is derived a revision parameter intended for revising the displacement distribution derived by solving the motion equation representing the vibration of the bogie frame 16 based on the displacement of the aforementioned predetermined position (position corresponding to the point where this sensor is attached) and the displacement measured by this sensor of the displacement distribution derived by solving the motion equation representing the vibration of the bogie frame 16. Then, the displacement distribution of the bogie frame 16 is derived by using the displacement distribution derived by solving the motion equation representing the vibration of the bogie frame 16 and the revision parameter. As above, this embodiment is that the configuration and the processing through the use of the revision parameter are added to the first embodiment. Accordingly, in the explanation in this embodiment, the same parts as those of the first embodiment are denoted by the same reference numerals and symbols as those illustrated in Fig. 1 to Fig. 6, and detailed explanation thereof is omitted.

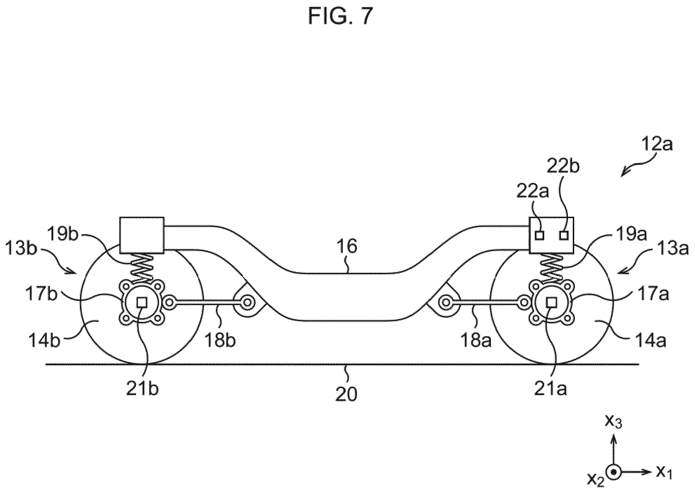

Fig. 7 is a view illustrating one example of the configuration of the bogie frame and its peripheral parts. Fig. 7 is that acceleration sensors 22a, 22b are added to Fig. 2. The acceleration sensors 22a, 22b can be fabricated by the same ones as the acceleration sensors 21a, 21b, for example. The acceleration sensors 22a, 22b are attached to predetermined positions of the bogie frame 16. The case where the number of acceleration sensors 22a, 22b to be attached to the bogie frame 16 is two is explained as an example. However, the number of acceleration sensors to be attached to the bogie frame 16 may be any number, as long as it is one or more. Further, the sensors to be attached to the bogie frame 16 are not limited to the acceleration sensors, as long as they are used to measure the physical quantity that enables derivation of the displacement of a predetermined position of the bogie frame 16. For example, they may be a strain gauge. However, the strain gauges may stop working properly after a long period of use. For this reason, in this embodiment, as the sensor that measures the physical quantity that enables derivation of the displacement of a predetermined position of the bogie frame 16, the acceleration sensor is used. In this embodiment, for example, the acceleration sensors 22a, 22b are one example of a second sensor. Further, the acceleration measured by the acceleration sensors 22a, 22b (acceleration of the bogie frame 16) is one example of the physical quantity that enables derivation of the displacement of a predetermined position of the bogie frame.

<Configuration of the estimation device 400>

There is explained one e::ample of the functions that the estimation device 400 has in this embodiment below, focusing on the parts that differ from the functions that the estimation device 400 in the first embodiment has. Some of the functions of the data acquisition unit 401 and the displacement distribution deriving unit 407a are different between the estimation device 400 in this embodiment and the estimation device 400 in the first embodiment.

<<Data acquisition unit 401>>

In the first embodiment, the data acquisition unit 401 acquires, every time a sampling time arrives, the data including the data indicating the acceleration measured by the acceleration sensors 21a, 21b and the data indicating the traveling position of the railway vehicle. In contrast to this, the data acquisition unit 401 in this embodiment acquires data measured by the acceleration sensors 22a, 22b in addition to the data including the data indicating the acceleration measured by the acceleration sensors 21a, 21b and the data indicating the traveling position of the railway vehicle.

<<State deriving unit. 407>>

The state deriving unit 407 derives the information representing the state of the bogie frame 16 based on the external force vector (f) of the bogie frame 16 derived by thee external force deriving unit 406. The state deriving unit 407 in this embodiment includes the displacement distribution deriving unit 407a and the stress distribution deriving unit 407b, in the same manner as the state deriving unit 407 in the first embodiment. However, some of the functions that the displacement distribution deriving unit 407a and the stress distribution deriving unit 407b in this embodiment have are different from those that the displacement distribution deriving unit 407a and the stress distribution deriving unit 407b in the first embodiment have.

<<Displacement distr:.bution deriving unit 407a>>

The displacement distribution deriving unit 407a derives the displacement vector $\{\xi\}$ (modal displacement vector $\{\xi\}$) of the bogie frame 16 in the modal coordinate system in the same manner as in the displacement distribution deriving unit 407a in the first embodiment. In the displacement distribution deriving unit 407a in the first embodiment, the calculation of (19) Equation is performed. In contrast to this, the displacement distribution deriving unit 407a in this embodiment derives the displacement vector $\{\xi\}$ of the bogie frame 16 in the modal coordinate system, and then derives a correction coefficient $c_k$. In this embodiment, the correction coefficient $c_k$ is one example of the revision parameter intended for revising the displacement vector $\{\xi\}$ of the bogie frame 16 in the modal coordinate system. Then, the displacement distribution deriving unit 407a in this embodiment derives the displacement vector (u) of the bogie frame 16 in the physical coordinate system as the displacement distribution of the bogie frame 16 by using the correction coefficient $c_k$, the displacement vector $\{\xi\}$ of the bogie frame 16 in the modal coordinate system, and the modal matrix $[\phi]$. There are explained one example of the method of deriving the correction coefficient $c_k$ and one example of the method of deriving the displacement vector (u) of the bogie frame 16 in the physical coordinate system by using the correction coefficient $c_k$ below.

In the explanation in this embodiment, nodal points of a mesh in the finite element method to be identified by j are set to $q_j$. A measured value of the displacement in the $x_i$ ax.s direction at the nodal point $q_j$ ($j$ - 1, $\cdots$, m) of the mesh is set to **u~$_{qj,i}$**. Incidentally, u~$_{qj,i}$ is the one in which ~ is added above u, and qj is described as $q_j$ in each Equation. Further, the displacement vector $\{\xi\}$ of the bogie frame 16 in the modal coordinate system is revised to $[c_1 \xi^{(1)} c_2 \xi^{(2)} \cdots c_n \xi^{(n)}]^T$. Then, the equation to derive a displacement $u_{qj,i}$ in the $x_i$ axis direction at the nodal point q of the mest is expressed by (24) Equation below according to (19) Equation.

(Mathematical equaticn 17]

$$u_{q_j,\,i} = \sum_{k=1}^{n} \left( \phi_{q_j,\,i}^{(k)} \, \xi^{(k)} \right) c_k \qquad \cdot\ \cdot\ \cdot\ (24)$$

Here, a cost function J is defined by (25) Equation below. The correction coefficient $c_k$ that minimizes the value of the cost function J is derived by solving (26) Equation below.

[Mathematical equation 18]

$$J = \sum_{j=1}^{m} \left| \tilde{u}_{q_{j,i}} - u_{q_{j,i}} \right|^2 + \alpha \sum_{v=1}^{n} |c_v - 1|^2$$

$$= \sum_{j=1}^{m} \left| \tilde{u}_{q_{j,i}} - \sum_{v=1}^{n} \left( \phi_{q_{j,i}}^{(v)} \xi^{(v)} \right) c_v \right|^2 + \alpha \sum_{v=1}^{n} |c_v - 1|^2 \qquad \cdots (25)$$

$$\frac{\partial J}{\partial c_k} = \frac{\partial}{\partial c_k} \left\{ \sum_{j=1}^{m} \left| \tilde{u}_{q_{j,i}} - \sum_{v=1}^{n} \left( \phi_{q_{j,i}}^{(v)} \xi^{(v)} \right) c_v \right|^2 + \alpha \sum_{v=1}^{n} |c_v - 1|^2 \right\}$$

$$= 2 \left\{ \sum_{j=1}^{m} \left( \tilde{u}_{q_{j,i}} - \sum_{v=1}^{n} \left( \phi_{q_{j,i}}^{(v)} \xi^{(v)} \right) c_v \right) \phi_{q_{j,i}}^{(k)} \xi^{(k)} + \alpha (c_k - 1) \right\}$$

$$= 0 \qquad\qquad\qquad \cdots (26)$$

Here, $\alpha$ is a regularization coefficient. The regularization coefficient $\alpha$ is a constant that is predetermined so that the larger (smaller) the regularization coefficient a is, the lower (higher) the reliability of the measured value $u\tilde{}_{q_{j,i}}$ of the displacement in the x, axis d.rection at the nodal point $q_j$ of the mesh becomes.

The correction coefficiert $c_k$ that minimizes the value of the cost function J is expressed, for example, by (27) Equation and (28) Equation below. Incidentally, (26) Equation can be solved by using well-known methods, so that the detailed explanation of the process of deriving the correction coefficient $c_k$ that minimizes the value of the cost function J is omitted here.

[Mathematical equation 19]

$$\begin{Bmatrix} c_1 \\ \vdots \\ c_k \\ \vdots \\ c_n \end{Bmatrix} = \begin{bmatrix} R_{11} & \cdots & R_{1k} & \cdots & R_{1n} \\ \vdots & \ddots & \vdots & \cdots & \vdots \\ R_{k1} & \cdots & R_{kk} & \cdots & R_{kn} \\ \vdots & \vdots & \vdots & \ddots & \vdots \\ R_{n1} & \cdots & R_{nk} & \cdots & R_{nn} \end{bmatrix}^{-1} \begin{Bmatrix} \xi^{(1)} \sum_{j=1}^{m} \tilde{u}_{q_{j,i}} \phi_{q_{j,i}}^{(1)} - \alpha \\ \vdots \\ \xi^{(k)} \sum_{j=1}^{m} \tilde{u}_{q_{j,i}} \phi_{q_{j,i}}^{(k)} - \alpha \\ \vdots \\ \xi^{(n)} \sum_{j=1}^{m} \tilde{u}_{q_{j,i}} \phi_{q_{j,i}}^{(n)} - \alpha \end{Bmatrix}$$

$$\cdots (27)$$

Here,

$$R_{kv} := \begin{cases} \xi^{(v)} \xi^{(k)} \sum_{j=1}^{m} \phi_{q_{j,i}}^{(v)} \phi_{q_{j,i}}^{(k)}, & v \neq k \\ \\ \xi^{(v)} \xi^{(k)} \sum_{j=1}^{m} \phi_{q_{j,i}}^{(v)} \phi_{q_{j,i}}^{(k)} - \alpha, & v = k \end{cases} \qquad \cdots (28)$$

The displacement distribution deriving unit 407a derives the correction coefficient $c_k$ that minimizes the value of the cost function J in the above manner. The displacement distribution deriving unit 407a derives the displacement $u_{q,i}$ in

the $x_i$ axis direction ($i \in (1, 2, 3)$) at the nodal point $q_j$ of the mesh by using the correction coefficient $c_k$ that minimizes the value of the cost function J, according to (24) Equation.

The displacement vector (real displacement vector) {u} of the bogie frame 16 in the physical coordinate system is derived in the above manner.

The stress distribution deriving unit 407b executes the processing explained in the first embodiment by using the real displacement vector {u} with the displacement $u_{q,i}$, which is derived using (24) Equation, set as a component, instead of using the real displacement vector {u} with the displacement $u_{q,i}$, which is derived using (19) Equation, set as a component.

<Flowchart>

There is explained one e:tample of the estimation method using the estimation device 400 in this embodiment below, focusing on the parts that differ from the estimation method using the estimation device 400 in the first embodiment. Some of pieces of the processing at Steps S601 and S607 are different between the estimation method using the estimation device 400 in this embodiment and the estimation method using the estimation device 400 in the first embodiment.

At Step S601, the data acquisition unit 401 acquires data including data indicating the acceleration measured by the acceleration sensors 21a, 21b, data indicating the traveling position of the railway vehicle, and data measured by the acceleration sensors 22a, 22b.

Pieces of the processing at Steps S602 to S606 are the same as those in the flowchart in Fig. 6, which have been explained in the first embodiment.

At Step S607, the displacement distribution deriving unit 407a derives the modal displacement vector {ξ} by using the modal mass matrix $[M_\xi]$, the modal viscous matrix $(C_\xi)$, the modal stiffness matrix $[K_\xi]$, and the modal external force vector $\{f_\xi\}$ according to (12) Equation. Then, the displacement distribution deriving unit 4(7a derives the correction coefficient $c_k$ according to (27) Equation and (28) Equation. For the cerivation of the correction coefficient $c_k$, the data measured by the acceleration sensors 22a, 22b (the measured value $\tilde{u}_{qj,i}$ of the displacement in the $x_i$ axis direction at the nodal point $q_j$ of the mesh) are used. Further, of the modal displacement vector {ξ} and the modal matrix $[\phi]$, the components corresponding to the positions of the acceleration sensors 22a, 22b are used. Then, the displacement distribution deriving unit 407a derives the real d:splacement vector (u) as the displacement distribution of the bogie frame 16 by using the modal displacement vector {ξ}, the modal matrix $[\phi]$, and the correction coefficient $c_k$, according to (24) Equation.

Pieces of the processing at and after Step S608 are the same as those in the flowchart in Fig.6, which have been explained in the first embodiment.

<Summary>

As described above, in this embodiment, the estimation device 400 deriven the correction coefficient $c_k$ intended for revising the displacement vector {ξ} in the motion equation in the modal coordinate system describing the motion of the bogie frame 16, based on the difference between the displacement of the predetermined position of the bogie frame 16 measured by the acceleration sensors 22a, 22b and the displacement of the predetermined position (positions corresponding to the points with the acceleration sensors 22a, 22b attached thereto) of the real displacement vector {u} corresponding to the modal displacement vector {ξ} derived by solving the motion equation in the modal coordinate system describing the motion of the bogie frame 16. Then, the estimation device 400 derives the displacement distribution of the bogie frame 16 by using the modal displacement vector {ξ}, the modal matrix $[\phi]$, and the correction coefficient $c_k$. Accordingly, it is possible to more accurately estimate the displacement distribution of the bogie frame. This makes it possible to accurately estimate the stress distribution in the bogie frame.

In this embodiment as well, the various modified examples explained in the first embodiment can be employed.

(Third embodiment)

Next, there is explained the third embodiment. In the first and second embodiments, there has been explained the case of deriving the displacement $u_{q,i}$ in the $x_i$ axis direction at the nodal point q of the mesh by using the components $\phi_{q,i}^{(n)}$ of the modal matrix $[\phi]$ corresponding to all the nodal points q of the mesh according to the finite element method as an example. However, in this case, the number of components $\phi_{q,i}^{(n)}$ of the modal matrix $[\phi]$ is required to be equal to the product of the number of all the nodal points q of the mesh, the number of degrees of freedom, and a modal number n. In addition, it is not easy to search for the ccmponent $\phi_{q,i}^{(n)}$ of the modal matrix $[\phi]$ at a desired position. As a result, the calculation time may beccme longer. Thus, in this embodiment, an approximate value of the component of the modal matrix $[\phi]$ (eigenvector $\{\phi\}$) is derived, and the displacement $u_{q,i}$ in the $x_i$ axis direction at the nodal point q of the mesh is derived by using the approximate value of the component of the modal matrix $[\phi]$. Thus, this embodiment differs from the first and second embodiments mainly in the configuration and the processing by deriving the approximate value of the component of the modal matrix $[\phi]$. Therefore, in the explanation in this embodiment, the same parts as those in the first and second embodiments are denoted by the same reference numerals and symbols as those illustrated in Fig. 1 to Fig. 7, and detailed explanation thereof is omitted.

<Approximation of the modal matrix $[\phi]$>

In this embodiment, an approximate equation of the component of the modal matrix $[\phi]$ is derived by using part of the component cf the modal matrix $[\phi]$ (eigenvector $\{\phi\}$) derived by applying an eigenvalue analysis to the motion equation in (1) Equation. The approximate equation of the component of the modal matrix $[\phi]$ is an equation intended for calculating the approximate value of the component of the modal matrix $[\phi]$. In this embodiment, there is explained the case of deriving the approximate equation of the component of the modal matrix $[\phi]$ by performing Kernel ridge regression as an example. Furthermore, in this embodiment, there is explained the case of using a Gaussian kernel as a kernel function as an example.

Therefore, the modal matrix $[\phi]$ ($\in R^{31 \times n}$) is approximated by a Gaussian function $\phi: R^3 \to R$. Here, an approximate value $\phi'_{s,i}{}^{(p)}(x_{s,1}, x_{s,2}, x_{s,3})$ of the component of the modal matrix $[\phi]$ corresponding to a pth-order eigenmode, a position s, and the $x_i$ axis direction is expressed in (29) Equation below. Incidentally, the $x_i$ axis direction refers to any one of the degrees of freedom (i = 1 to 3) of the coordinate system that defines the position s.

[Mathematical equation 20]

$$
\phi'_{s,i}{}^{(p)}(x_{s,1}, x_{s,2}, x_{s,3})
$$

$$
= \sum_{j=1}^{m} \lambda_{j,i}^{(p)} \psi_i^{(p)}(x_{s,1}-x_{j,1}, x_{s,2}-x_{j,2}, x_{s,3}-x_{j,3})
$$

$$
= \left[\lambda_{1,i}^{(p)}, \cdots, \lambda_{m,i}^{(p)}\right]
\begin{bmatrix}
\psi_i^{(p)}(x_{s,1}-x_{1,1}, x_{s,2}-x_{1,2}, x_{s,3}-x_{1,3}) \\
\vdots \\
\psi_i^{(p)}(x_{s,1}-x_{m,1}, x_{s,2}-x_{m,2}, x_{s,3}-x_{m,3})
\end{bmatrix}
$$

$$
\cdots (29)
$$

Here, p is a variable that identifies the modal number ($1 \leq p \leq n$). j is a variable that identifies the nodal point q of the mesh in the finite element method ($1 \leq j \leq m$). In the explanation in this embodiment, the nodal point of the mesh in the finite element method identified by j is set to $q_j$. $x_{s,i}$ is the coordinate at the position s in the $x_i$ axis direction in the physical coordinate system. $x_{j,i}$ is the coordinate at the nodal point $q_j$ of the mesh in the $x_i$ axis direction in the physical coordinate system. The position s may or may not be coincident with the nodal po..nt $q_j$ of the mesh. m is the number of nodal points q of the mesh, which is predetermined, in the component $\phi_{q,i}{}^{(n)}$ of the modal matrix $[\phi]$ derived by applying the eigenvalue analysis to the motion equat..on in (1) Equation. The number of m is a number that is smaller than the number of nodal points q of the mesh used in the numerical analysis by the finite element method.

$\phi_i^{(p)}(x_{s,1}, x_{s,2}, x_{s,3})$ is the Gaussian kernel and is expressed by (30) Equation.

[Mathematical equation 21]

$$
\psi_i^{(p)}(x_{s,1}-x_{j,1}, x_{s,2}-x_{j,2}, x_{s,3}-x_{j,3})
$$

$$
:= \exp\left(-\frac{[(x_{s,1}-x_{j,1})^2 + (x_{s,2}-x_{j,2})^2 + (x_{s,3}-x_{j,3})^2]}{2\sigma_{i,(p)}^2}\right)
$$

$$
\cdots (30)
$$

Here, $\sigma_{i,(p)}^2$ ($\in R$) is a parameter that adjusts the width of the Gaussian kernel. $\sigma_{i,(p)}^2$ is set for each of the three degrees of freedom ($x_i$ axis) and for each modal number p.

In (29) Equation, $\lambda_{j,i}{}^{(p)}$ is a weight coefficient for the Gaussian kernel $\phi_i{}^{(p)}$ $(x_{s,1}, x_{s,2}, x_{s,3})$. In this embodiment, the weight coefficient $\lambda_{j,i}{}^{(p)}$ is derived by performing the Kernel ridge regression using a matrix equation in (31) Equation.

[Mathematical equation 22]

$$
\begin{bmatrix}
\phi_{1',i}^{(p)}(x_{1',1}, x_{1',2}, x_{1',3}) \\
\vdots \\
\phi_{m',i}^{(p)}(x_{m',1}, x_{m',2}, x_{m',3})
\end{bmatrix}
$$

$$
=
\begin{bmatrix}
\psi_i^{(p)}(x_{1',1}-x_{1,1}, x_{1',2}-x_{1,2}, x_{1',3}-x_{1,3}), & \cdots, & \psi_i^{(p)}(x_{1',1}-x_{m,1}, x_{1',2}-x_{m,2}, x_{1',3}-x_{m,3}) \\
\vdots & \ddots & \vdots \\
\psi_i^{(p)}(x_{m',1}-x_{1,1}, x_{m',2}-x_{1,2}, x_{m',3}-x_{1,3}), & \cdots, & \psi_i^{(p)}(x_{m',1}-x_{m,1}, x_{m',2}-x_{m,2}, x_{m',3}-x_{m,3})
\end{bmatrix}
\begin{bmatrix}
\lambda_{1,i}^{(p)} \\
\vdots \\
\lambda_{m,i}^{(p)}
\end{bmatrix}
$$

$$\cdots (31)$$

Each component of the matrix on the left side of (31) Equation is a component $\phi_{q,i}{}^{(p)}$ $(x_{j,1}, x_{j,2}, x_{j,3})$ of the modal matrix $[\phi]$ corresponding to the pth-order eigenmode, the nodal point $q_j$ of the mesh ($q_j = 1', \cdots, m'$), and the $x_i$ axis direction.

In (31) Equation, $x_{j',i}$ is the coordinate of the nodal point $q_{j'}$ of the mesh in the $x_i$ axis direction in the physical coordinate system. Further, $x_{j,i}$ is the coordinate of the nodal point $q_j$ of the mesh in the $x_i$ axis directior in the physical coordinate system. The coordinate $x_{j',i}$ is the same as the coordinate $x_{j,i}$ normally. For example, the coordinate $x_{1',1}$ is the same as the coordinate $x_{1,1}$ normally. That is, the apostrophe (') of $x_{j',i}$ in (31) Equation is not required normally. However, the coordinate $x_{j',i}$ may be different from the coordinate $x_{j,i}$. Therefore, in (31) Equation, as the variable j that identifies the nodal point $q_j$ of the mesh, a variable with an apostrophe (') added thereto and a variable with no apostrophe (') added thereto are illustrated. Accordingly, the number of 1' to m' is the same as the number of 1 to m. That is, the matrix on the left side of (31) Equation is a matrix of m rows and 1 column (= a matrix of m' rows and 1 column).

The matrix on the left side of (31) Equation is described as $\Phi$ ($\in R^{m' \times 1}$). The first matrix on the right side of (31) Equation is described by $\Psi$ ($\in R^{m' \times m}$). The second matrix on the right side of (31) Equation is described by $A$ ($\in R^{m \times 1}$). Then, (31) Equation can be expressed as (32) Equation below.

(Mathematical equation 23]

$$\Phi = \Psi \Lambda \qquad \cdots (32)$$

In order to obtain the least squares solution of (32) Equation relating to the matrix $\Lambda$, a cost function J: $R^m \to R$ illustrated in (33) Equation below is used.

Mathematical equation 24]

$$J = |\Phi - \Psi \Lambda|^2 + \alpha |\Lambda|^2 \qquad \cdots (33)$$

Here, $\alpha$ ($\in R$) is a regularization coefficient. The second term on the right side of (33) Equation is a regularization term (penalty term). The matrix A is derived by solving the problem of partially differentiating the cost function J with respect to A to minimize the result. That is, the matrix A is derived by (34) Equation below.

[Mathematical equation 25]

$$\Lambda = (\Psi^T \Psi + \alpha I)^{-1} \Psi^T \Phi \qquad \cdots (34)$$

Here, I ($\in Z^{m \times m}$) is a unit matrix.

(31) Equation is created for each of the first-order eigenmode, $\cdots$, and the nth-order eigenmode. That is, (31) Equation is created for the number of modal numbers p by giving 1, 2, $\cdots$, n to the value of p in (31) Equation. Then, the calculation of (34) Equation is performed individually based on (31) Equation for each of the first-order eigenmode, $\cdots$, and the nth-order eigenmode. Thereby, the matrix A (weight coefficient $\lambda_{j,i}{}^{(p)}$) is derived. By substituting the matrix A (weight coefficients $\lambda_{j,i}{}^{(p)}$) into (29) Equation, there is derived an approximate equation ((29) Equation) that calculates $\phi'_{s,i}{}^{(1}(x_{s,1}, x_{s,2}, x_{s,3})$, $\cdots$, $\phi'_{s,i}{}^{(n)}(x_{s,1}, x_{s,2}, x_{s,3})$.

<Configuration of an estimation device 800>

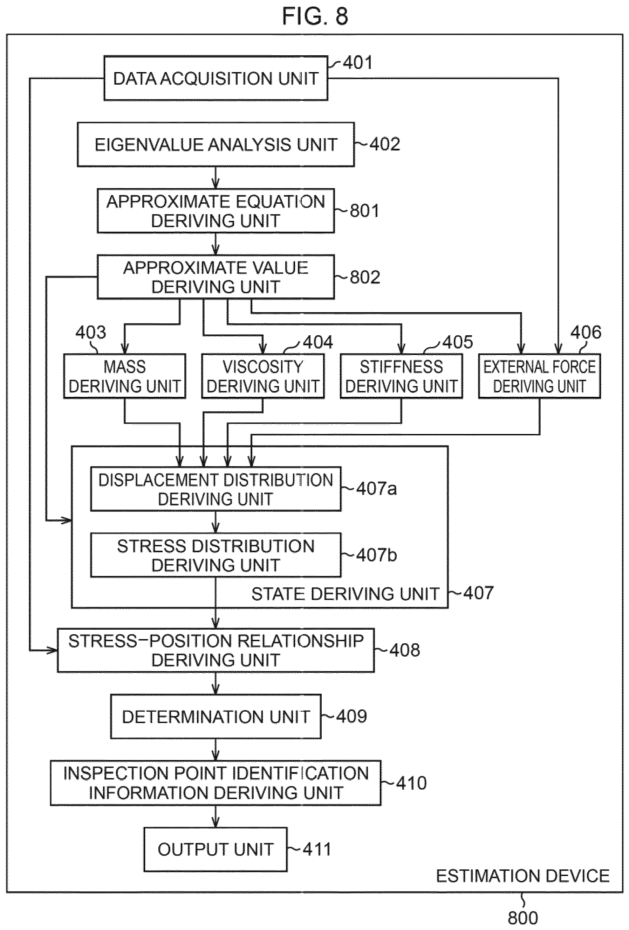

Fig. 8 is a diagram illustrating one example of the functional configuration of an estimation device 800. With reference to Fig. 8, there is explained one example of the functions that the estimation device 800 in this embodiment has below, focusing on the parts that differ from the functions that the estimation devices 400 in the first and second embodiments have. The hardware of the estimation device 800 is fabricated, for example, by the same hardware as that of the estimation device 400. Incidentally, in the processing to be explained below, it is assumed that the data that need to be set in advance are stored in the estimation device 800 in advance.

In the estimation devices 400 in the first and second embodiments, the modal matrix $[\phi]$ derived in the eigenvalue analysis unit 402 is used in the mass deriving unit 403, the viscosity deriving unit 404, the stiffness deriving unit 405, the external force deriving unit 406, and the state deriving unit 407 (displacement distribution deriving unit 407a).

In contrast to this, in this embodiment, an approximate equation deriving unit 801 uses the modal matrix $[\phi]$ derived in the eigenvalue analysis unit 402 to derive the approximate equation ((29) Equation) of the component of the modal matrix $[\phi]$ before pieces of the processing in the mass deriving unit 403, the viscosity deriving unit 404, the stiffness deriving unit 405, the external force deriving unit 406, and the state deriving unit 407 are started. Thereafter, an approximate value deriving unit 802 uses the approximate equation of the component of the modal matrix $[\phi]$ to derive the approximate value $\phi'_{s,i}{}^{(p)}(x_{s,1},x_{s,2},x_{s,3})$ of the component of the modal matrix $[\phi]$ corresponding to the pth-order eigenmode, the position s, and the $x_i$ axis direction. The position s is a position necessary for deriving the displacement distribution of the bogie frame 16 in the physical coordinate system. The position s is ar arbitrary position. The position s may be different from the position of the nodal point q of the mest in the finite element method. The number of positions s may be smaller than the number of nodal poirts q of the mesh in the finite element method. However, the position s may be the same as the position of the nodal point q of the mesh in the finite elemert method. Further, the number of positions s may be the same as the number of positions of the nodal points q of the mesh in the finite element method.

The mass deriving unit 403, the viscosity deriving unit 404, the stiffress deriving unit 405, the external force deriving unit 406, and the displacement distribution deriving unit 407a use the modal matrix $[\phi]$ containing, as a component, the approximate value $\phi'_{s,i}{}^{(p)}(x_{s,1},x_{s,2},x_{s,3})$ of the component of the modal matrix $[\phi]$, instead of the modal matrix $[\phi]$ derived by the eigenvalue analysis unit 402, and perform pieces of the processing explained in the first and second embodiments. Of the components of the modal matrix $[\phi]$ used in this embodiment, the component that does not correspond to the position s is zero (0). There is explained in detail one example of the functions that the approximate equation deriving unit 801 and the approximate value deriving unit 802 have below.

<<Approximate equation deriving unit 801>>

The approximate equation deriving unit 801 selects m' pieces of nodal points and m pieces of nodal points from the nodal points q of the mesh in the finite element method. This selection can be performed randomly, for example, by using a random number. Further, the positions of m' pieces of the nodal points and m pieces of the nodal points may be specified by the operator. Incidentally, as described previously, the positions of m pieces of the nodal points and the positions of m' pieces of the nodal points may be the same.

The approximate equation deriving unit 801 extracts components $\phi_{l',i}{}^{(p)}(x_{l',1},x_{l',2},x_{l',3}), \cdots, \phi_{m',i}{}^{(p)}(x_{m',1},x_{m',2},x_{m',3})$ corresponding to m' pieces of the nodal points $q_j$ from the components $\phi_{q,i}{}^{(p)}$ of the modal matrix $[\phi]$ derived by the eigenvalue analysis unit 402. Then, the approximate equation deriving unit 801 substitutes the components $\phi_{1',i}{}^{(p)}(x_{1',1},x_{1',2},x_{1',3}), \cdots, \phi_{m',i}{}^{(p)}(x_{m',1},x_{m',2},x_{m',3})$ of the modal matrix $[\phi]$ into the matrix on the left side of (31) Equation (matrix $\Phi$ on the left side of (32) Equation). Further, the approximate equation deriving unit 801 substitutes the coordinate $x_{s,i}$ of the position s in the $x_i$ axis direction in the physical coordinate system and the coordinate $x_{j,i}$ of the nodal point $q_j$ of the mesh in the $x_i$ axis direction in the physical coordinate system into (30) Equation. Then, the approximate equation deriving unit 801 derives the Gaussiar. kernel $\phi_i{}^{(p)}(x_{s,1},x_{s,2},x_{s,3})$ according to (30) Equation. The approximate equation deriving unit 801 substitutes the Gaussian kernel $\phi_i{}^{(p)}(x_{s,1},x_{s,2},x_{s,3})$ into the first matrix on the right side of 31) Equation (matrix $\Psi$ of (32) Equation).

Then, the approximate equation deriving unit 801 performs the calculation of (34) Equation, to thereby derive the matrix A (weight coefficient $\lambda_{j,i}{}^{(P)}$).

The approximate equation deriving unit 801 performs the derivation of the above matrix A (weight coefficient $\lambda_{j,i}{}^{(p)}$) for each of the first-order eigenmode, $\cdots$, and the nth-order eigenmode.

The approximate equation deriving unit 801 derives n pieces of approximate equations as the approximate equation ((29) Equation) that calculates the approximate values $\phi'_{s,i}{}^{(1)}(x_{s,1},x_{s,2},x_{s,3}), \cdots, \phi'_{s,i}{}^{(n)}(x_{s,1},x_{s,2},x_{s,3})$ of the components of the modal matrix $[\phi]$ in the above manner.

<<Approximate value deriving unit 802>>

The approximate value deriving unit 802 gives the coordinate of the position s in the physical coordinate system, which is necessary for deriving the displacement distribution of the bogie frame 16 in the physical coordinate system, to $x_{s,1}, x_{s,2}, x_{s,3}$ in (29) Equation. Then, the approximate value deriving unit 802 derives the approximate value $\phi'_{s,i}{}^{(p)}(x_{s,1}, x_{s,2}, x_{s,3})$ of the component of the modal matrix $[\phi]$ corresponding to the pth-order eigenmode, the position s, and the $x_i$ ax.s direction according to (29) Equation. The approximate value deriving unit 802 performs the derivation of the approximate value $\phi'_{s,i}{}^{(p)}(x_{s,1}, x_{s,2}, x_{s,3})$ of the component of the modal matrix $[\phi]$ corresponding to the pth-order eigenmode, the position s, and the $x_i$ ax..s direction for each of the first-order eigenmode, $\cdots$, and the nth-order eigenmode. Then, the approximate value deriving unit 802 stores the approximate value $\phi'_{s,i}{}^{(p)}(x_{s,1}, x_{s,2}, x_{s,3})$ of the component of the modal matrix $[\phi]$ in the modal matrix $[\phi]$ as the component of the modal matrix $[\phi]$. In this manner, the modal matrix $[\phi]$ in which the approximate value $\phi'_{s,i}{}^{(p)}(x_{s,1}, x_{s,2}, x_{s,3})$ is stored becomes the approximate value of the modal matrix $[\phi]$ in which the eigenvector $\{\phi\}$ is stored.

<Flowchart>

There is explained one example of the estimation method using the estimation device 800 in this embodiment below, focusing on the parts that differ from the estimation method using the estimation devices 400 in the first and second embodiments. Some of the processing at Step 5602 is different between the estimation method using the estimation device 800 in this embodiment and the estimation method using the estimation davices 400 in the first and second embodiments. Further, before the processing according to the flowchart in Fig. 6 starts, it is necessary for the approximate equation (weight coefficients $\lambda_{j,i}{}^{(p)}$) of the component of the modal matrix $[\phi]$ to have been derived by the approximate equation deriving unit 801.

At Step S601, the data acquisition unit 401 acquires data including data indicating the acceleration measured by the acceleration sensors 21a, 21b and data indicating the traveling position of the railway vehicle. In the case where this embodiment is applied to the second embodiment, the data acquisition unit 401 acquires, in addition to these data, data measured by the acceleration sensors 22a, 22b.

Then, at Step S602, the approximate value deriving unit 802 derives the approximate value $\phi'_{s,i}{}^{(p)}(x_{s,1}, x_{s,2}, x_{s,3})$ of the component of the modal matrix $[\phi]$ corresponding to the pth-order eigenmode, the position s, and the $x_i$ axis direction according to (29) Equation. Then, the approximate value deriving unit 802 stores the approximate value $\phi'_{s,i}{}^{(p)}(x_{s,1}, x_{s,2}, x_{s,3})$ of the component of the modal matrix $[\phi]$ in the modal matrix $[\phi]$ as the component of the modal matrix $[\phi]$.

Pieces of the processing at and after Step S603 are the same as those in the flowchart in Fig. 6 explained in the first and second embodiments. However, in the first and second embodiments, the modal matrix $[\phi]$ containing the eigenvector $\{\phi\}$ is used. In contrast to this, in this embodiment, the modal matrix $[\phi]$ containing the approximate value $\phi'_{s,i}{}^{(p)}(x_{s,1}, x_{s,2}, x_{s,3})$ of the component of the modal matrix $[\phi]$ is used.

<Summary>

In this embodiment as described above, the estimation device 800 derives the approximate equation of the component of the modal matrix $[\phi]$ ((29) Equation) by performing the Kernel ridge regression using the modal matrix $[\phi]$ derived by the eigenvalue analysis unit 402. The approximate equation of the component of the modal matrix $[\phi]$ is an equation that calculates the approximate value according to an order p of the eigenmode, the position s, and the degree of freedom i of the coordinate system that determines the position s as the approximate value of the component of the modal matrix $[\phi]$. The estimation device 800 derives the approximate value $\phi'_{s,i}{}^{(p)}(x_{s,1}, x_{s,2}, x_{s,3})$ of the component of the modal matrix $[\Phi]$ by using the approximate equation of the component of the modal matrix $[\phi]$. Accordingly, as the component of the modal matrix $[\phi]$, the component at the arbitrary position s can be derived. Therefore, the calculation time can be further shortened.

<Modified example>

In this embodiment, there has been explained the case of using, as the Kernel function, the Gaussian kernel when performing the Kernel ridge regression. However, the Kernel function is not limited to the Gaussian kernel. Further, tte approximate value $\phi'_{s,i}{}^{(p)}(x_{s,1}, x_{s,2}, x_{s,3})$ of the component of the modal matrix $[\phi]$ may be derived by using a regression analysis method other than the Kernel ridge regression. For example, Kernel regression may be used.

Further, the eigenvalue analysis unit 402 and the approximate equation deriving unit 801 do not have to be included in the estimation device 800. That is, the eigenvalue analysis unit 402 and the approximate equation deriving unit 801 may be included in a device different from the estimation device 800. In this case, the estimation device 800 acquires the information on the approximate equation ((29) Equation) of the component of the modal matrix $[\phi]$ from the device

different from the estimation device 800.

In addition, in this embodiment as well, the various modified examples explained in the first and second embodiments can be employed.

(Fourth embodiment)

Next, there is explained the fourth embodiment. In the first, second, and third embodiments, the strain tensors inside the respective elements e of the mesh (strain distribution of the bogie frame 16) are derived by using the real displacement vector (u) according to (20a) Equation to (20f) Equation. Further, the stress tensors inside the respective elements e of the mesh (stress distribution of the bogie frame 16) are derived by using the strain tensors inside the respective elements e of the mesh according to (21) Equation to (23) Equation. When deriving the strain tensors inside the respective elements e of the mesh according to (20a) Equation to (20f) Equation, a FEM shape function is required. Thus, in this embodiment, deriving the principal strain and the principal stress of the bogie frame 16 based on the real displacement vector (u) is performed without using the FEM shape function. **As above,** this embodiment is different from the first, second, and third embodiments mainly in the configuration and the processing after the real displacement vector {u} is derived. Therefore, in the explanation in this embodiment, the same parts as those of the first, second, and third embodiments are denoted by the same reference numerals and symbols as those illustrated in Fig. 1 to Fig. 8, and detailed explanation thereof is omitted. In this embodiment, the case where the real displacement vector {u} is derived by the displacement distribution deriving unit 407a in the first embodinent will be explained as an example.

In this embodiment as will be described later, the principal strain in a region to be estimated of the bogie frame 16 is derived (estimated). In this embodiment, the region including a reference point of the bogie frame 16 is set to the region to be estimated. The reference point is, for example, any nodal point q of the mesh out. of the nodal points q of the mesh indicating the d:.splacement $u_{q,i}$ contained in the real displacement vector {u} derived by the displacement distribution deriving unit 407a. The reference point corresponds, for example, to the point (position) where cracks are likely to occur in the bogie frame 16 out of the nodal points q of the mesh indicating the displacement $u_{q,i}$ contained in the real displacement vector {u} derived by the displacement distribution deriving unit 407a. For example, it is possible to derive the stress to occur in the bogie frame 16 when the railway vehicle is traveling by such a numerical analysis as the finite element method and determine the reference point based on the derived stress. For example, the point where the absolute value of the maximum principal stress is the largest is determined as the reference point. Further, the reference point may be determined by actually traveling the railway vehicle. For example, the reference point may be determined based on an occurrence point where cracks occurred in the bogie frame 16 in the past, or based on measured values of a vibrometer attached to the bogie frame 16.

The region to be estimated has a size that includes a reference point aid a plurality of the nodal points q of the mesh, excluding the reference point, out of the nodal poin:s q of the mesh indicating the displacement $u_{q,i}$ contained in the real displacement vector (u). The boundary (outer edge) of the region to be estimated is determined, for example, based on the positions of a plurality of the nodal points q of the mesh excluding this reference point. For example, the region having a line, which is determined by connecting the positions of a plurality of the nodal points q of the mesh excluding the reference point with a line segment so as to pass through the positions of a plurality of the nodal points q of the mesh excluding the reference point, set as the boundary line can be set as the region to be estimated.

In general, the maximum principal stress at the reference point does not coincide with the maximum principal stress in the region to be estimated. Therefore, in the case of approximating the maximum principal stress at the reference point by the maximum principal stress in the region to be estimated, the positions of a plurality of the nodal points q of the mesh excluding the reference point can be determined, for example, as follows. First, the railway vehicle is traveled with a strain gauge attached to the reference points included in region to be estimated candidates, and the maximum principal stresses in the region to be estimated candidates are derived based on measured values of the strain gauges. Further, the maximum principal stresses in the region to be estimated candidates are derived as will be described later. In the case of deriving the maximum principal stresses in the region to be estimated candidates in this manner, the measured values of the strain gauges are not used. The above derivation of the maximum principal stress in the region to be estimated candidate is performed while making the region to be estimated candidates different, in each of the cases: the case of using the strain gauge; and the case of not using the strain gauge. Then, the region to be estimated candidate where the maximum principal stress derived based on the measured values of the strain gauge and the maximum principal stress derived as will be described later without using the measured values of the strain gauge are close (preferably coincide) is searched. The positions of a plurality of the nodal points q of the mesh, excluding the reference point, in the region to be estimated candidate, which is searched in this manner, are determined as the positions of a plurality of the nodal points q of the mesh, excluding the reference point. Further, when determining the positions of a plurality of the nodal points q of the mesh, excluding the reference point, as described above, for example, the strain of the bogie frame 16 when the railway vehicle is traveling may be derived by such a numerical analysis as the finite element method, and the derived strain may be used in place of the measured value of the strain gauge.

In this embodiment, there is explained, as an example, the case where a vector containing three-dimensional displacements (displacement of the $x_1$ axis direction component, displacement of the $x_2$ axis direction component, and displacement of the $x_3$ axis direction component) as the components is derived by the displacement distribution deriving unit 407a as the real displacement vector (u). That is, the physical coordinate system is a three-axis coordinate system. Incidentally, in the case where the displacements of the 3-dimensional components are derived by the displacement distribution deriving unit 407a as will be described later, the number of nodal points q of the mesh to be included in the region to be estimated is four or more out of the nodal points q of the mesh that indicate the displacement $u_{q,i}$ contained in the real displacement vector {u}. In the case where the displacements of the two-dimensional components are derived by the displacement distribution deriving unit 407a, the number of nodal points q of the mesh to be included in the region to be estimated is three or more out of the nodal points q of the mesh that indicate the displacement $u_{q,i}$ contained in the real displacement vector (u). Further, in the case where multiple reference points are set on the same bogie frame 16, the region to be estimated for each of the reference points is set. In the following explanation, out of the nodal points q of the mesh that indicate the displacement $u_{q,i}$ contained in the real displacement vector {u}, the nodal points q of the mesh included in the region to be estimated are abbreviated to the nodal point q of the mesh included in the region to be estimated, if necessary.

<Strain derivation based on displacement>

The present inventors have focused on the fact that the coordinates indicating the position after displacement are expressed by an affine transformation of the coordinates indicating the position before displacement in the region to be estimated. Incidentally, the coordinates indicating the position before displacerient and the position after displacement are coordinates in the physical coordinate system (real space coordinates). In the following explanation, the coordinates in the physical coordinate system are referred to as position coordinates if necessary.

A column vector in which the position coordinates before displacement are stored is set to $X_1$, and a column vector in which the position coordinates after displacement are stored is set to $X_2$. The column vectors $X_1$ and $X_2$ are expressed by (35) Equation below.

[Mathematical equation 26]

$$X_2 = MX_1 + v \qquad \cdot \cdot \cdot (35)$$

Here, M is a matrix that is multiplied by the column vector $X_1$ in which the position coordinates before displacement are stored. By the product of column vector $X_1$ in which the position coordinates before displacement are stored and the matrix **M**, the column vector $X_1$ in which the position coordinates before displacement are stored is linearly transformed. v is a column vector that is added to the product of the column vector $X_1$ in which the position coordinates before displacement are stored and the matrix M. By adding the column vector v to the product of the column vector $X_1$ in which the position coordinates before displacement are stored and the matrix **M,** a column vector $MX_1$ is translated. The column vector $MX_1$ is the product of the column vector $X_1$ in which the position coordinates before displacement are stored and the matrix M.

In (1) Equation, column vectors $[(X_1^T,1]^T, [X_2^T,1]^T,$ and $[v^T,1]^T$ and a matrix $[M^T,0]^T$ are constituted by adding 1 as a component of an extra row under the column vectors $K_1$, $X_2$, and v, and adding an extra row consisting only of 0 under all the columns of the matrix M. T represents a transposed matrix (this will be the same also in the following explanation). Then, the colunn vector (matrix) $[v^T,1]^T$ containing the column vector v representing the translation is added to the right of the matrix $[M^T,0]^T$ containing the matrix M. Then, (35) Equation can be expressed as the product of the matrices, as illustrated in (36) Equation below.

[Mathematical equation 27]

$$\begin{bmatrix} X_2 \\ 1 \end{bmatrix} = \begin{bmatrix} M & v \\ 0 & 1 \end{bmatrix} \begin{bmatrix} X_1 \\ 1 \end{bmatrix} \qquad \cdot \cdot \cdot (36)$$

(35) Equation and (36) Equation are equations representing the affine transformation and are equivalent. If the matrix M is a regular matrix, then the left matrix on the right side of (36) Equation has a group structure. Here, the left matrix on the right side of (36) Equation is referred to as an affine transformation group. The affine transformation group (a matrix with a group structure) can perform a group operation with the product of matrices. Then, the matrix belonging to the affine transformation group can be decomposed in the form of products of matrices that represent behaviors such as object deformations (rotation, shear, tension, compression, and so on) and translation.

The position coordinates in the $x_1$ axis direction, the $x_2$ axis direction, and the $x_3$ axis direction before

displacement are set to $x_{11}$, $x_{21}$, and $x_{31}$, respectively. The position coordinates in the $x_1$ axis direction, the $x_2$ axis direction, and the $x_3$ axis direction after displacement are set to $x_{12}$, $x_{22}$, and $x_{32}$, respectively. Then, the column vector $X_1$ representing the position coordinates before displacement and the column vector $X_2$ representing the position coordinates after displacement are expressed by (37a) Equation and (37b) Equation below, respectively. Incidentally, 1 and 2 in the last digit of 11, 21, 31, 12, 22, and 32 in $x_{11}$, $x_{21}$, $x_{31}$, $x_{12}$, $x_{22}$, and $x_{32}$ represent before displacement and after displacement, respectively. 1, 2, and 3 in the last second digit of 11, 21, 31, 12, 22, and 32 in $x_{31}$, $x_{21}$, xm, $x_{12}$, $x_{22}$, and $x_{32}$ represent the value of the $x_1$ axis direction component, the value of the $x_2$ axis direction component, and the value of the $x_3$ axis direction component, respectively.

[Mathematical equation 28]

$$X_1 = (x_{11}, x_{21}, x_{31})^T \in R^3 \qquad \cdot \cdot \cdot \ (37a)$$
$$X_2 = (x_{12}, x_{22}, x_{32})^T \in R^3 \qquad \cdot \cdot \cdot \ (37b)$$

Further, the components of the matrix M are set to $a_1$, $a_2$, $a_3$, $a_5$, $a_6$, $a_7$, $a_9$, $a_{10}$, and $a_{11}$, and the components of the column vector v are set to $a_4$, $a_8$, and $a_{12}$. Then, (36) Equation becomes (38) Equation below.
[Mathematical equation 29]

$$\begin{bmatrix} x_{12} \\ x_{22} \\ x_{32} \\ 1 \end{bmatrix} = \begin{bmatrix} a_1 & a_2 & a_3 & a_4 \\ a_5 & a_6 & a_7 & a_8 \\ a_9 & a_{10} & a_{11} & a_{12} \\ 0 & 0 & 0 & 1 \end{bmatrix} \begin{bmatrix} x_{11} \\ x_{21} \\ x_{31} \\ 1 \end{bmatrix} \qquad \cdot \cdot \cdot \ (38)$$

(38) Equation is rewritten into simultaneous equations, and then, (39) Equation below is made. In order to determine 12 unknown coefficients $a_1$ to $a_{12}$ of the simultaneous equations in (39) Equation, it is only necessary to have four or more nodal points q of the mesh that are to be included in the region to be estimated. This is because ..f there are four or more nodal points q of the mesh to be included in the region to be estimated, four or more sets of displacements in the $x_1$ axis direction, the $x_2$ axis direction, and the $x_3$ axis direction can be obtained.

Among the displacements $u_{q,i}$ contained in the real displacement vector {u} derived by the displacement distribution deriving unit 407a, the displacement at the nodal point q of the mesh included in the region to be estimated is added to :he position coordinates before displacement, to thereby obtain a set of the position coordinates in the $x_1$ axis direction, the $x_2$ axis direction, and the $x_3$ axis direction after displacement.
[Mathematical equation 30]

$$\left. \begin{array}{l} x_{12} = a_1 x_{11} + a_2 x_{21} + a_3 x_{31} + a_4 \\ x_{22} = a_5 x_{11} + a_6 x_{21} + a_7 x_{31} + a_8 \\ x_{32} = a_9 x_{11} + a_{10} x_{21} + a_{11} x_{31} + a_{12} \end{array} \right\} \ (39)$$

By using four or more sets of the position coordinates in the $x_1$ axis direction, the $x_2$ axis direction, and the $x_3$ axis direction before and after displacement obtained in the above manner, 12 or more equations with respect to the unknown coefficients $a_1$ to $a_{12}$ can be obtained, and thus the unknown coefficients $a_1$ to $a_{12}$ can be determined by using a method such as the least squares method, for example.

Here, from (38) Equation, the left matrix on the right side of (36) Equation is expressed as in (40) Equation below. That is, the left matrix on the right side of (36) Equation is decomposed into block matrices having, as blocks, the matrix M and the column vector v illustrated in (41) Equation and (42) Equation.

[Mathematical equation 31]

$$\begin{bmatrix} a_1 & a_2 & a_3 & a_4 \\ a_5 & a_6 & a_7 & a_8 \\ a_9 & a_{10} & a_{11} & a_{12} \\ 0 & 0 & 0 & 1 \end{bmatrix} = \begin{bmatrix} \begin{bmatrix} a_1 & a_2 & a_3 \\ a_5 & a_6 & a_7 \\ a_9 & a_{10} & a_{11} \end{bmatrix} \begin{bmatrix} a_4 \\ a_8 \\ a_{12} \end{bmatrix} \\ 0 & 1 \end{bmatrix}$$

$$= \begin{bmatrix} M & v \\ 0 & 1 \end{bmatrix} \qquad \cdots (40)$$

$$M = \begin{bmatrix} a_1 & a_2 & a_3 \\ a_5 & a_6 & a_7 \\ a_9 & a_{10} & a_{11} \end{bmatrix} \qquad \cdots (41)$$

$$v = \begin{bmatrix} a_4 \\ a_8 \\ a_{12} \end{bmatrix} \qquad \cdots (42)$$

The matrix $M \propto R^{3 \times 3}$ is a general linear group $GL_3$ including rotations, and the column vector $v \in R^3$ is a normal subgroup representing a translation. R represents the set of whole real numbers as in (36) Equation (this will be the same also in the following explanation). The matrix in (43) Equation below (the left matrix on the right side of (36) Equation) is one element of the affine transformation group. Due to the nature of the affine transformation group, the product operation is described by a semidirect product operation of the group, as in (44) Equation below.

[Mathematical equation 32]

$$\begin{bmatrix} M & v \\ 0 & 1 \end{bmatrix} \qquad \cdots (43)$$

$$\begin{bmatrix} M_1 & v_1 \\ 0 & 1 \end{bmatrix} \begin{bmatrix} M_2 & v_2 \\ 0 & 1 \end{bmatrix} = \begin{bmatrix} M_1 M_2 & M_1 v_2 + v_1 \\ 0 & 1 \end{bmatrix} \qquad \cdots (44)$$

Then, when the rule of the semidirect product operation is used with $I \in R^{3 \times 3}$ set as the unit matrix, the element of the affine transformation group is decomposed as in (45) Equation below.
[Mathematical equation 33]

$$\begin{bmatrix} M & v \\ 0 & 1 \end{bmatrix} = \begin{bmatrix} I & v \\ 0 & 1 \end{bmatrix} \begin{bmatrix} M & 0 \\ 0 & 1 \end{bmatrix} \qquad \cdots (45)$$

The matrix M is decomposed into singular values as in (46) Equation below. The result obtained by the singular value decomposition of the matrix M is substituted into (45) Equation, and then (47) Equation below is obtained.

[Mathematical equation 34]

$$M = U\Sigma V^T \qquad \cdots (46)$$

$$\begin{bmatrix} M & v \\ 0 & 1 \end{bmatrix} = \begin{bmatrix} I & v \\ 0 & 1 \end{bmatrix} \begin{bmatrix} U\Sigma V^T & 0 \\ 0 & 1 \end{bmatrix} \qquad \cdots (47)$$

Here, $U \in R^{3 \times 3}$ is ar orthogonal matrix. $\Sigma \in R^{3 \times 3}$ is a diagonal matrix with the singular values as diagonal components. $V^T$ represents the transpose matrix of an orthogonal matrix $V \in R^{3 \times 3}$.

By using the rule of the semidirect product operation, (47) Equation is decomposed as in (48) Equation below.
[Mathematical equation 35]

$$\begin{bmatrix} M & v \\ 0 & 1 \end{bmatrix} = \begin{bmatrix} I & v \\ 0 & 1 \end{bmatrix} \begin{bmatrix} U\Sigma V^T & 0 \\ 0 & 1 \end{bmatrix}$$

$$= \begin{bmatrix} I & v \\ 0 & 1 \end{bmatrix} \begin{bmatrix} U & 0 \\ 0 & 1 \end{bmatrix} \begin{bmatrix} \Sigma & 0 \\ 0 & 1 \end{bmatrix} \begin{bmatrix} V^T & 0 \\ 0 & 1 \end{bmatrix} \qquad \cdots (48)$$

(48) Equation implies that it is obtained by subjecting the affine transformation expressed by (43) Equation to the following series of deformation and translation operations (1) through (4), in the order of (1), (2), (3), and (1).

(1) Select a rotation matrix from the transpose matrix $V^T$ and rotate an object at a rotation angle based on the selected rotaticn matrix.
(2) Strain and deform the object based on the diagonal matrix $\Sigma$ having the singular values as diagonal components.
(3) Select a rotation matrix from the orthogonal matrix U and rotate the object again at a rotation angle based on the selected rotation matrix.
(4) Translate the object based on the column vector v.

The present inventors, focusing on the fact that the affine transformation is expressed by (48) Equation, have found out that the diagonal components of the diagonal matrix $\Sigma$, which are derived by the singular value decomposition of the matrix **M,** correspond to the principal strain.

As described previously, based on the position coordinates $x_{31}$, $x_{21}$, and $x_3$ in the $x_1$ axis direction, the $x_2$ axis direction, and the $x_3$ axis direction before displacement and the displacement, the position coordinates $x_{12}$, $x_{22}$, and $x_{32}$ in the $x_1$ axis direction, the $x_2$ axis direction, and the $x_3$ axis direction after displacement are derived. Then, the unknown coefficients $a_1$ to $a_{12}$ are derived based on the position coordinates $x_{11}$, $x_{21}$, and $x_{31}$ in the $x_1$ axis direction, the $x_2$ axis cirection, and the $x_3$ axis direction before displacement. and the position coordinates $x_{12}$, $x_{22}$, and $x_{32}$ in the $x_1$ axis direction, the $x_2$ axis direction, and the $x_3$ axis direction after displacement. That is, the components $a_1$, $a_2$, $a_3$, as, $a_6$, $a_7$, $a_9$, $a_{10}$, and and of the matrix M are derived. Then, by decomposing the matrix M into singular values, the diagonal matrix $\Sigma$ with the singular values as diagonal components is derived.

The diagonal components of the diagonal matrix $\Sigma$ are set to $\varepsilon_{11}$, $\varepsilon_{22}$, and $\varepsilon_{33}$. The diagonal components $\varepsilon_{11}$, $\varepsilon_{22}$, and $\varepsilon_{33}$ of the diagonal matrix $\Sigma$ correspond to principal strain components in a reference region (the region to be estimated) being the reference region at the time when the reference region (region to be estimated), which consists of a set of h position coordinates $((x_{11}, x_{21}, x_{31})^T_1, \cdots, (x_{11}, x_{21}, x_{31})^T_h)$ used when deriving the unknown coefficients $a_1$ to $a_{12}$, moves due to elastic deformation and then the set of h position coordinates changes to a new set of position coordinates $\{(x_{12}, x_{22}, x_{32})^T_1, \cdots, (x_{12}, x_{22}, x_{32})^T_h\}$. Here, $h \cong 4$ is established. Of the diagonal components $\varepsilon_{11}$, $\varepsilon_{22}$, and $\varepsilon_{33}$ of the diagonal matrix $\Sigma$, the one having the maximum absolute value corresponds to the maximum principal strain. This embodiment is made tased on the above findings.

In this embodiment, there is explained, as an example, the case where the displacements of the three-dimensional components are derived by the displacement distribution deriving unit 407a. The case where the displacements of the two-dimensional components are derived by the displacement distribution deriving unit 407a can be fabricated by setting the value of the component (axial direction) that is not derived by the d:.splacement distribution deriving unit 407a to 0 (zero), in the case where the displacements of the three-d.mensional components are derived by the displacement distribution deriving unit 407a. Accordingly, the detailed explanation of the case where the displacements of the two-dimensional components are derived by the displacement distribution deriving unit 407a is omitted here. For example, .n the case where the region to be estimated is the mono-links 18a, 18b, the displacement in the $x_2$ axis direction is negligibly small. For this reason, the displacement distribution deriving unit 407a only needs to derive the two-dimensional displacements in the $x_1$ axis direction and the $x_3$ axis direction. Incidentally, in the case where the displacements of the two-dimensional components are derived by the displacement distribution deriving unit 407a, the number of unknown coefficien:s in the simultaneous equations of (39) Equation becomes six. If there are three or more nodal points q of the mesh to be included in the region to be estimated, there can be obtained three or more pairs of displacements in the two axial directions to be derived by the displacement distribution deriving unit 407a out of the $x_1$ axis direction, the $x_2$ axis direction, and the $x_3$ axis direction. Accordingly, six or more equations with respect to six unknown coefficients can be obtained. Therefore, the six unknown coefficients can be determined.

<Configuration of an estimation device 900>

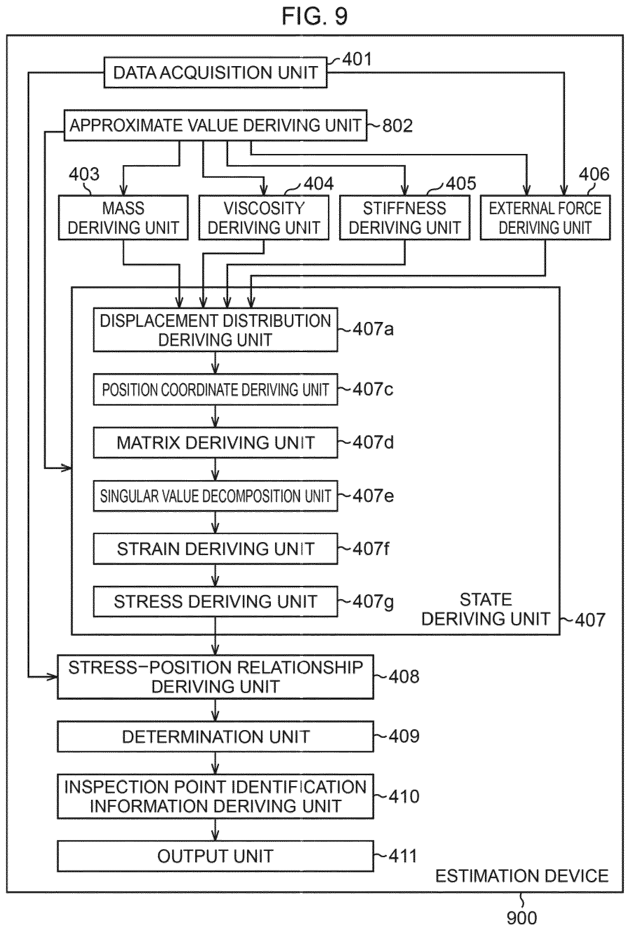

Fig. 9 is a diagram illustrating one example of the functional configuration of an estimation device 900. With reference to Fig. 9, there is explained one example of the functions that the estimation device 900 in this embodiment has below, focusing on the parts that differ from the functions that the estimation devices 400 and 800 in the first, second, and third embodiments have. The hardware of the estimation device 900 is fabricated, for example, by the same hardware as that of the estimation devices 400, 800. Incidentally, in the processing to be explained below, it is assumed that the data that need to be set in advance are stored in the estimation device 900 before the measurement starts.

In the estimation devices 400, 800 in the first, second, and third embodiments, the stress distribution of the bogie frame 16 (the stress tensors inside the respective elements e of the mesh) is derived by the stress distribution deriving unit 407b by using the real displacement vector {u} derived by the displacement distribution deriving unit 407a.

In contrast to this, in this embodiment, a state estimation unit 407 derives the principal strains, the maximum principal strain, the principal stresses, and the maximum principal stress in the region to be estimated as one example of the information representing the state of the bogie frame 16 by using the real displacement vector (u) derived by the displacement distribution deriving unit 407a. In this embodiment, the state estimation unit 407 includes the displacement distribution deriving unit 407a, a position coordinate ceriving unit 407c, a matrix deriving unit 407d, a singular value decomposition unit 407e, a strain deriving unit 407f, and a stress deriving unit 4C7g.

<<Position coordinate deriving unit 407c>>

The position coordinate deriving unit 407c derives the position coordinates $x_{12}$, $x_{22}$, and $x_{32}$ after displacement at the nocal point q (position) of the mesh included in the region to be estimated by adding displacements $u_{q,1}$, $u_{q,1}$, and $u_{q,3}$) at the nodal point q (position) of the mesh included in the region to be estimated to the position coordinates $x_{11}$, $x_{21}$, and $x_{31}$ before displacement a: the nodal point q (position) of the mesh inclued in the region to be estimated. 1, 2, and 3 in $u_{q,1}$, $u_{q,2}$, and $u_{q,3}$ indicate the value of the $x_1$ axis direction component, the value of the $x_2$ axis direction component, and the value of the $x_3$ axis directicn component, respectively.

Incidentally, the position coordinates $x_{11}$, $x_{21}$, and $x_{31}$ before displacement are the position coordinates $x_{12}$, $x_{22}$, and $x_{32}$ derived, for example, at a rest time or at a time when an external force equivalent to that at a rest time is acting. Further, initial values of the position coordinates $x_{11}$, $x_{21}$, and $x_{31}$ before displacement at the nodal point q of the mesh included in the region to be estimated are determined based on the specifications of the bogie frame 16, for example, and are set in the estimation device 900 beforehand.

<<Matrix deriving unit 407d>>

The matrix deriving unit 407d derives the components $a_1$, $a_2$, $a_3$, $a_5$, $a_6$, $a_7$, $a_9$, $a_{10}$, and $a_{11}$ of the matrix M based on the position coordinates $x_{11}$, $x_{21}$, and $x_{31}$ before displacement at the nodal point q (position) of the mesh included in the region to be estimated and the position coordinates $x_{12}$, $x_{22}$, and $x_{32}$ after displacement at the nodal point q (position) of the mesh included in the region to be estimated. Incidentally, at this time, tie components $a_4$, $a_8$, and $a_{12}$ of the column vector v can also be derived. In this embodiment, one example of the transformation matrix is made by the matrix 4.

<<Singular value decomposition unit 407e>>

The singular value decomposition unit 407e decomposes the matrix M with the components $a_1$, $a_2$, $a_3$, $a_5$, $a_6$, $a_7$, $a_9$, $a_{10}$, and $a_{11}$ derived by the matrix deriving unit 407d into singular values, and derives the diagonal matrix $\Sigma$ with tte singular values as diagonal components. Inciden:ally, at this time, the orthogonal matrix U and the transpose matrix $V^T$ of the orthogonal matrix V are also derived.

<<Strain deriving unit 407f>>

The strain deriving unit 407f derives the principal strain in the regicn to be estimated based on the diagonal matrix $\Sigma$ derived by the singular value decomposition unit 407e. In this embodiment, the strain deriving unit 407f derives the diagonal components $\varepsilon_{11}$, $\varepsilon_{22}$, and $\varepsilon_{33}$ of the diagonal matrix $\Sigma$ derived by the singular value decomposition unit 407e as the principal strains in the region to be estimated. In order to simplify the following explanation, it is assumed that the diagonal components $\varepsilon_{11}$, $\varepsilon_{22}$, and $\varepsilon_{33}$ of the diagonal matrix $\Sigma$ are rearranged so that $\varepsilon_{11} \geqq \varepsilon_{22} \geqq \varepsilon_{33}$ is established. Further, the strain deriving unit 407f derives a maximum principal strain $\varepsilon_{max}$ in the region to be estimated according to (49) Equation. Here, of the diagonal components $\varepsilon_{11}$, $\varepsilon_{22}$, and $\varepsilon_{33}$ of the diagonal matrix $\Sigma$ derived by the singular value decomposition unit 407e, the largest diagonal component, including a sign, is set to $\varepsilon_{11}$, and the smallest diagonal component is set to $\varepsilon_{33}$.
[Mathematical equation 36]

$$\varepsilon_{max} := \begin{cases} \varepsilon_{11} & when \ |1.0 - \varepsilon_{11}| > |1.0 - \varepsilon_{33}| \\ \varepsilon_{33} & when \ |1.0 - \varepsilon_{11}| \leq |1.0 - \varepsilon_{33}| \end{cases} \quad \cdots (49)$$

(49) Equation is equivalent to selecting the one with the largest absolute value from the diagonal components $\varepsilon_{11}$, $\varepsilon_{22}$, and $\varepsilon_{33}$ of the diagonal matrix $\Sigma$ as the maximum principal strain $\varepsilon_{max}$. However, the case where the principal strain is 1 indicates that no strain has occurred (the case where the principal strain is greater than 1 indicates tension, and the case where it is less than 1 indicates compression). Therefore, in (49) Equation, for intuitive clarity, there is explained, as an example, the case where the diagonal component $\varepsilon_{11}$ or $\varepsilon_{33}$ of the diagonal matrix $\Sigma$ is selected as the maximum principal strain $\varepsilon_{max}$ based on the absolute value of the value obtained by subtracting the diagonal components $\varepsilon_{11}$, $\varepsilon_{33}$ of the diagonal matrix $\Sigma$ from 1 ($|1.0 - \varepsilon_{11}|$, $|1.0 - \varepsilon_{33}|$).

<<stress deriving unit 407g>>

The stress deriving unit 407g derives the stress in the region to be estimated based on the principal strain in the region to be estimated derived by the strain deriving unit 407f. In this embodiment, the stress deriving unit 407g derives principal stresses $\sigma_{11}$, $\sigma_{22}$, and $\sigma_{33}$ in the region to be estimated based on the principal strains (diagonal components of the diagonal matrix $\Sigma$) $\varepsilon_{11}$, $\varepsilon_{22}$, and $\varepsilon_{33}$ in the region to be estimated according to (50) Equation below.
[Mathematical equation 37]

$$\begin{bmatrix} \sigma_{11} \\ \sigma_{22} \\ \sigma_{33} \end{bmatrix} = \begin{bmatrix} 2\mu + \lambda & \lambda & \lambda \\ \lambda & 2\mu + \lambda & \lambda \\ \lambda & \lambda & 2\mu + \lambda \end{bmatrix} \begin{bmatrix} \varepsilon_{11} - 1 \\ \varepsilon_{22} - 1 \\ \varepsilon_{33} - 1 \end{bmatrix} \quad \cdots (50)$$

Here, 11, 22, and 33 in $\sigma_{11}$, $\sigma_{22}$, and $\sigma_{33}$ represent values of the components of the three axis directions, which are orthogonal to one another, in the coordinate system where the shear stress is 0 (zero), respectively.
Incidentally, in (50) Equation, the reason why 1 is subtracted from the diagonal components $\varepsilon_{33}$, $\varepsilon_{22}$, and $\varepsilon_{33}$ of the diagonal matrix $\Sigma$ is because, in this embodiment, the principal strain is a value based on 1, while the principal stress is a value based on 0 (zero). That is, in this embodiment, the case where the principal strain is 1 indicates that no strain has occurred, while the case where the principal stress is 0 (zero) indicates that no stress has occurred. Incidentally, the case where the principal stress is greater than 0 (zero) indicates a tensile stress, and the case where it is less than 0 (zero) indicates a compressive stress.
Further, $\lambda$ and $\mu$ are the Lame's constants and the stiffness modulus, respectively (see (22) Equation and (23) Equation).
Based on the principal stresses $\sigma_{11}$, $\sigma_{22}$, and $\sigma_{33}$ in the region to be estimated derived in the above manner, the stress deriving unit 407g derives a maximum principal stress $\sigma_{max}$ in the region to be estimated according to (51) Equation.
[Mathematical equation 38]

$$\sigma_{max} = \begin{cases} \sigma_{11} & when \ |\sigma_{11}| > |\sigma_{33}| \\ \sigma_{33} & when \ |\sigma_{11}| \leq |\sigma_{33}| \end{cases} \quad \cdots (51)$$

<<stress-position relationship deriving unit 408>>

In the first, second, anc third embodiments, the stress-position relationship deriving unit 408 stores the stress distribution of the bogie frame 16 and the traveling position of the railway vehicle in association with each other. In this embodiment, the stress-position relationship deriving unit 408 stores at least one of the principal stresses $\sigma_{11}$, $\sigma_{22}$, and $\sigma_{33}$ and the maximum principal stress $\sigma_{max}$ in the region to be estimated derived by the stress deriving unit 407g and the traveling position of the railway vehicle included in the data icquired by the data acquisition unit 401 in association with each other. Incidentally, in the following explanation, there is explained, as an example, the case where the stress-position relationship deriving unit 408 stores the maximum principal stress $\sigma_{max}$ in the region to be estimated derived by the stress deriving unit 407g and the traveling position of the railway vehicle in association with each other. In the explanation of this embodiment, the maximum principal stress $\sigma_{max}$ in the region to be estimated and the traveling position of the railway vehicle, which are associated with each other in this manner, are referred to as the stress-position relationship information, if necessary. In the above manrer, the stress-position relationship information at each sampling time is obtained.

<<Determination unit 409>>

In the first, second, and third embodiments, the determination unit 409 determines whether or not the average stress and the varying stress, which are determined based on the stress-position relationship information (variation of stress with time), are within the stress tolerance range of the stress limit diagram. In contrast to this, in this embodiment, the determination unit 409 determines whether or not the absolute value of the maximum principal stress $\sigma_{max}$ in the region to be estimated exceeds a threshold value.

<<Inspection point identification information deriving unit 410>>

In the first, second, and third embodiments, in the case where the point plotted on the stress limit diagram is not within the stress tolerance range of the stress limit diagram, the inspection point identification information deriving unit 410 derives the position of the bogie frame 16 where this plot is obtained and the traveling position of the railway vehicle when the plotted point is not within the stress tolerance range of the stress limit diagram. In contrast to this, in this embodiment, the inspection point identification information deriving unit 410 derives the region to be estimated where the absolute value of the maximum principal stress $\sigma^{max}$ exceeds the threshold value and the traveling position of the railway vehicle when the absolute value of the maximum principal stress $\sigma_{max}$ in the region to be estimated exceeds the threshold value.

<<Output unit 411>>

The output unit 411 outputs the inspection point identification information. In this embodiment, the information indicating the region to be estimated where the absolute value of the maximum principal stress $\sigma_{max}$ exceeds the threshold value and the traveling position of the railway vehicle when the absolute value of the maximum principal stress $\sigma_{max}$ exceeds the threshold value in the region to be estimated is the inspection point identification information.
Further, the output unit 411 may output strain-position relationship information instead of or in addition to the stress-position relationship information. The strain-position relationship information is information in which at least one of the principal strains $\varepsilon_{11}$, $\varepsilon_{22}$, and $\varepsilon_{33}$ and the maximum principal strain $\varepsilon_{max}$ derived by the strain deriving unit 407f and the traveling position of the railway vehicle are associated with each other.

<Flowchart>

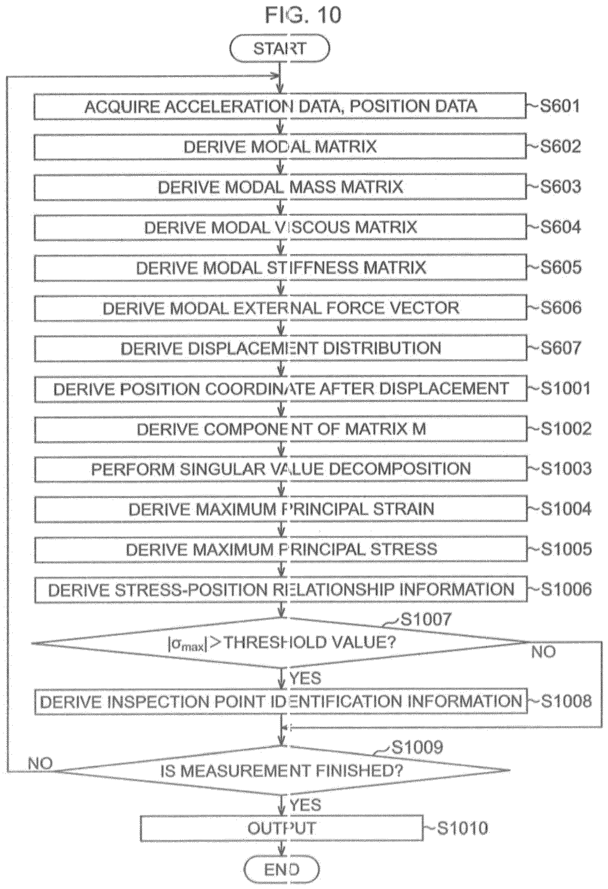

With reference to a flowchart in Fig. 10, there is explained one example of the estimation method using the estimation device 900 in this embodiment. Pieces of repetitive processing at Steps S601 to S607 and Steps S1001 to S1010 of the flowchart in Fig. 10 are assumed to be executed every time the sampling time arrives.
First, pieces of the processing at Steps S601 to S607 are the same as those according to the flowchart in Fig. 6 explained in the first embodiment. At Step S607, the real displacement vector {u} is derived as the displacement distribution of the bogie frame 16 by the displacement distribu:ion deriving unit 407a. After the processing at Step S607, the processing at Step S1001 is executed.
At Step S1001, the position coordinate deriving unit 407c derives the position coordinates $x_{12}$, $x_{22}$, and $x_{32}$ after displacement at the nodal point q (position) of the mesh included in the region to be estimated by adding the displacements $u_{q,1}$, $u_{q,2}$, and $u_{q,3}$ at the nodal point q of the mesh included in the region to be estimated to the position coordinates $x_{11}$, $x_{21}$, and $x_{31}$ before displacement at the nodal point q (position) of the mesh included in the region to be estimated. Incidentally, the position coordinates $x_{11}$, $x_{21}$, and $x_{31}$ before displacement are the position coordinates $x_{12}$, $x_{22}$, and $x_{32}$ at a rest time.
Then, at Step S1002, the matrix deriving unit 407d derives the components $a_1$, $a_2$, $a_3$, $a_5$, $a_6$, $a_7$, $a_9$, $a_{10}$, and $a_{11}$ of

the matrix M based on the position coordinates $x_{11}$, $x_{23}$, and $x_{31}$ before displacement at the nodal point q (position) of the mesh included in the region to be estimated and the position coordinates $x_{12}$, $x_{22}$, and $x_{32}$ after displacement at the nodal point q (position) of the mesh included in the region to be estimated derived at Step S1001.

Then, at Step S1003, the singular value decomposition unit 407e decomposes the matrix M having the components $a_1$, $a_2$, $a_3$, $a_5$, $a_6$, $a_7$, $a_9$, $a_{10}$, and $a_{11}$ derived at step S1002 into singular values and derives the diagonal matrix $\Sigma$ having the singular values as diagonal components.

Then, at Step S1004, the strain deriving unit 407f derives the diagonal components $\varepsilon_{11}$, $\varepsilon_{22}$, and $\varepsilon_{33}$ of the diagonal matrix $\Sigma$ derived at Step S1003 as the principal strain in the region to be estimated. Then, the strain deriving unit 407f derives the maximum principal strain $\varepsilon_{max}$ in the region to be estimated according to (49) Equation.

Then, at Step S1005, based on the principal strains (diagonal components of the diagonal matrix $\Sigma$) $\varepsilon_{11}$, $\varepsilon_{22}$, and $\varepsilon_{33}$ in the region to be estimated derived at Step S1004, the stress deriving unit 407g derives the principal stresses $\sigma_{11}$, $\sigma_{22}$, and $\sigma33$ in the region to be estimated according to (50) Equation. Then, the stress deriving unit 407g derives the maximum principal stress $\sigma_{max}$ in the region to be estimated based on the principal stresses $\sigma_{11}$, $\sigma_{22}$, and $\sigma_{33}$ in the region to be estimated according to (51) Equation.

Then, at Step S1006, the stress-position relationship deriving unit 408 stores the principal stresses $\sigma_{11}$, $\sigma_{22}$, and $\sigma_{33}$ and the maximum principal stress $\sigma_{max}$ in the region to be estimated and the traveling position of the railway vehicle in association with each other (stores the stress-position relationship information).

Then, at Step S1007, the determination unit 409 determines whether or not the absolute value ($|\sigma_{max}|$) of the maximum principal stress $\sigma_{max}$ in the region to be estimated exceeds the threshold value. As a result of this determination, in the case where the absolute value of the maximum principal stress $\sigma_{max}$ in the region to be estimated does not exceed the threshold value, the processing proceeds to Step S1009 to be described later, omitting Step S1008.

In the meantime, in the case where the absolute value of the maximum principal stress $\sigma_{max}$ in the region to be estimated exceeds the threshold value, the processing proceeds to Step S1008. When the processing proceeds to Step S1008, the inspection point identification information deriving unit 410 derives the region to be estimated where the absolute value of the maximum principal stress $\sigma_{max}$ exceeds the threshold value and the traveling position of the railway vehicle when the absolute value of the maximum principal stress $\sigma_{max}$ in the region to be estimated exceeds the threshold value as the inspection point identification information.

Then, at Step S1009, the estimation device 900 determines whether or not to finish the measurement. The processing at Step S1009 is the same as that at Step S613 in Fig. 6 explained in the first embodiment, for example.

As a result of the determination at Step S1009, in the case where the measurement is not finished, the processing returns to Step S601. Then, pieces of the processing at Steps S601 to S606 and Steps S1001 to 1009 at the next sampling time are executed.

In the meantime, as a result of the determination at Step S1009, in the case where the measurement is finished, the processing proceeds to Step S1010. When the processing proceeds to S1010, the output unit 411 outputs the inspection point identification information. Then, the processing by the flowchart in Fig. 10 is finished.

Incidentally, the processing at Step S1010 may be performed after Step S1008. In this case, the inspection point identification information is output in units of sampling time.

<Summary>>

In this embodiment as de.icribed above, the estimation device 900 derives the components $a_1$, $a_2$, $a_3$, $a_5$, $a_6$, $a_7$, $a_9$, $a_{10}$, and $a_{11}$ of the matrix M based on the position coordinates $x_{11}$, $x_{21}$, and $x_{31}$ before displacement in the region tc be estimated and the position coordinates $x_{12}$, $x_{22}$, and $x_{32}$ after displacement in the region tc be estimated. The matrix M is a matrix that is multiplied by the position coordinates $x_{11}$, $x_{21}$, and $x_{31}$ before displacement during the affine transformation. The estimation device 900 decomposes the matrix M into singular values and derives the diagonal matrix $\Sigma$ having the singular values as diagonal components. Based on the diagonal matrix $\Sigma$, the estimation device 900 derives the principal strains $\varepsilon_{11}$, $\varepsilon_{22}$, and $\varepsilon_{33}$ in the region to be estimated. Accordingly, deriving the principal strain and the principal stress of the bogie frame 16 based on the real displacement vector {u} can be performed without using the FEM shape function. In addition, the strains can be derived without measuring the strains by a strain gauge (namely, without obtaining the measured values of the strains themselves). Therefore, it is possible to estimate the state of an object on which an external force acts without measuring the strains by a strain gauge. Incidentally, in this embodiment, the region to be estimated is determined based on the nodal point q of the mesh that indicates the displacement $u_{q,i}$ contained in the real displacement vector {u}. Accordingly, various regions can be set as the region to be estimated.

Further, in this embodiment, the estimation device 900 derives the maximum principal strain $\varepsilon_{max}$ in the region to be estimated based on the components $\varepsilon_{11}$, $\varepsilon_{22}$, and $\varepsilon_{33}$ of the diagonal matrix $\Sigma$. Accordingly, more pieces of information can be derived as the information representing the state of the object on which the external force acts.

Further, in this embodiment, the estimation device 900 derives the principal stresses $\sigma_{11}$, $\sigma_{22}$, and $\sigma_{33}$ in the region to be estimated based on the components $\varepsilon_{11}$, $\varepsilon_{22}$, and $\varepsilon_{33}$ of the diagonal matrix $\Sigma$, and derives the maximum

principal stress $\sigma_{max}$ based on the principal stresses $\sigma_{11}$, $\sigma_{22}$, and $\sigma_{33}$ in the region to be estimated. Accordingly, much more pieces of information can be derived as the information representing the state of the object on which the external force acts.

<Modified example>

The various modified examples explained in the first, second, and third embodiments can be employed also in this embodiment. Further, the method in this embodiment may also be applied to the second embodiment or third embodiment.

(Hardware)

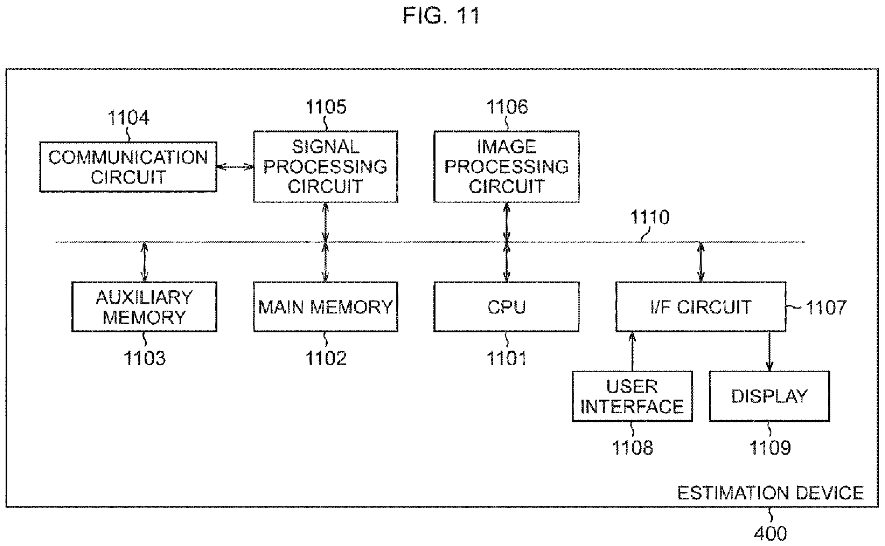

There is explained one e>ample of the hardware of the estimation device 400. The hardwares of the estimation devices 800, 900 can be fabricated by the same hardware as that of the estimation device 400. Accordingly, detailed explanations of the hardwares of the estimation devices 800, 900 are omitted here. In Fig. 11, the estimation device 400 includes a CPU 1101, a main memory 1102, an auxiliary memory 1103, a communication circuit 1104, a signal processing circuit 1105, an image processing circuit 1106, an I/F circuit 1107, a user interface 1108, a display 1109, and a bus 1110.

The CPU 1101 overall controls the entire estimation device 400. The CPU 1101 uses the main memory 1102 as a work area tc execute a program stored in the auxiliary memory 1103. The main memory 1102 stores data temporarily. The auxiliary memory 1103 stores various data, in addition to programs to be executed by the CPU 1101.

The communication circuit 1104 is a circuit intended for performing communication with the outside of the estimation device 400. The communication circuit 1104 may perform radio communication or wire communication with the outside of the estimation device 400. The communication circuit 1104 is connected to an antenna provided on the railway vehicle in the case of performing radio communication.

The signal processing circuit 1105 performs various signal processings or signals received in the communication circuit 1104 ard signals input according to the control by the CPU 1101.

The image processing circuit 1106 performs various image processings on signals input according to the control by the CPU 1101. The signal that has been subjected to the image processing is output on the display 1109.

The user interface 1108 is a part in which an operator gives an instruction to the estimation device 400. The user interface 1108 includes buttons, switches, dials, and so on, for example. Further, the user interface 1108 may include a graphical user interface using the display 1109.

The display 1109 displays an image based on a signal output from the image processing circuit 1106. The I/F circuit 1107 exchanges data with a device connected to the I/F circuit 1107. In Fig. 11, as the device to be connected to the I/F circuit 1107, the user interface 1108 and the display 1109 are illustrated. However, the device to be connected to the I/F circuit 1107 is not limited to these. For example, a portable storage medium may be connected to the I/F circuit 1107. Further, at least a part of the user interface 1108 and the display 1109 may be provided outside the estimation device 400.

An output unit 411 is fabricated by using the communication circuit 1104, the signal processing circuit 1105, and at least any one of the image processing circuit 1106, the I/F circuit 1107, and the display 1109, for example.

Incidentally, the CPU 1101, the main memory 1102, the auxiliary memory 1103, the signal processing circuit 1105, the image processing circuit 1106, and the I/F circuit 1107 are connected to the bus 1110. Communication among these components is performed via the bus 1110. Further, the hardwares of the estimation devices 400, 800, and 900 are not limited to the one illustrated in Fig. 11 as long as they can perform the functions of the previously-described estimation devices 400, 800, and 900.

(Example)

Next, there are explained examples. In this example, the bogie frame of an actual railway vehicle was modeled and the stress distribution in the bogie frame was derived by each of the methods explained in the first and second embodiments. In this example, the bogie frame was assumed to receive external forces from a spring cap and a mono-link. Further, a plurality of acceleration sensors were attached to the bogie frame in the method explained in the second embodiment. As a result of examining the derived stress distribution, there was a point where the points of the average stress and the varying stress plotted on the stress limit diagram did not fall within the stress tolerance range of the stress limit diagram. As a result of inspection of the track corresponding to the traveling position of the railway vehicle when the plotted points were not within the stress tolerance range of the stress limit diagram, it was found out that track irregularity had occurred.

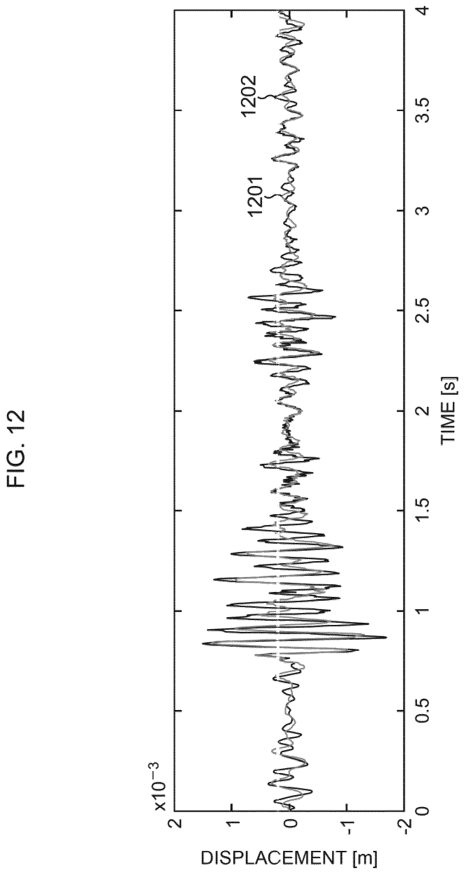

Fig. 12 is a view illustrating the relationship between a displacement at a certain position of an air spring seat of the bogie frame and a time. In Fig. 12, a graph 1201 is obtained from the component corresponding to this position of the real displacement vector {u} derived by the method explained in the first embodinent. A graph 1202 is obtained from the measured values of the acceleration sensor attached to this position. As illustrated in Fig. 12, it can be seen that the displacement of the bogie frame can be accurately derived by the method explained in the first embodinent.

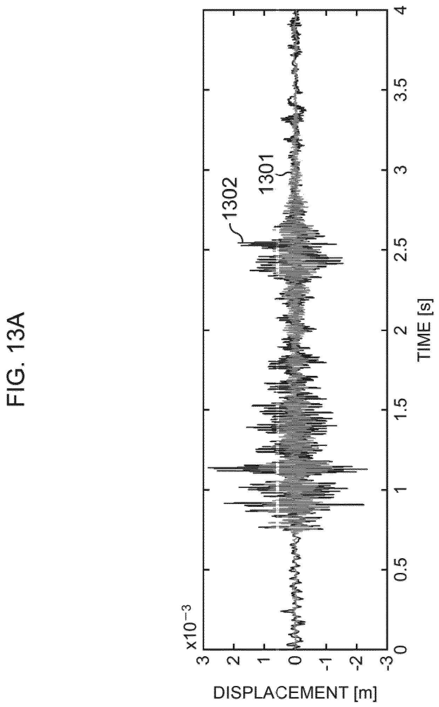

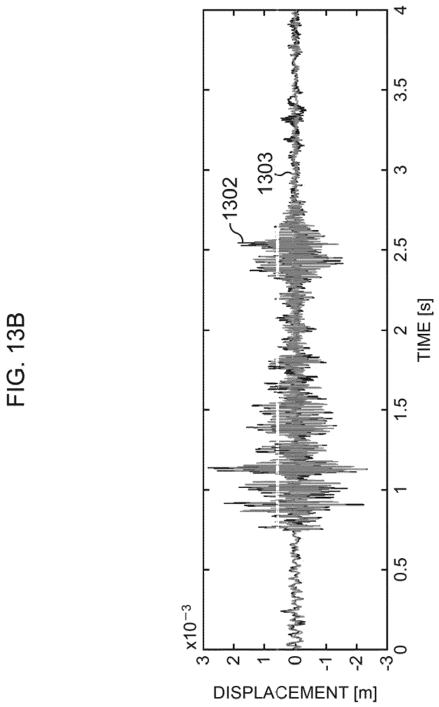

Fig. 13A and Fig. 13B are views each illustrating the relationship between a displacement at a certain position of the bogie frame where a relatively large stress has occurred and a time. In Fig. 13A, a graph 1301 is obtained from the component corresponding to this position of the real displacement vector {u} derived by the method explained in the first embodiment. A graph 1302 is obtained from the measured values of the acceleration sensor attached to this position. Incidentally, in Fig. 13A, the graph 1301 is a light color graph. In Fig. 13A, the graph 1302 is a dark color graph. In Fig. 13B, a graph 1303 is obtained from the component corresponding to this position of the real displacement vector {u} derived by the method explained in the second embodiment. In Fig. 13B, the graph 1303 is a light color g:aph. As illustrated in Fig. 13A, the variation with time of the displacement derived by the method explair.ed in the first embodiment corresponds to an actual measured value in terms of a tendency of variation, although there are parts where the absolute value is far from the actual measured value. In the case where such a displacement as illustrated in Fig. 13A is derived by the method in the first embodiment, it can be seen that the displacement of the bogie frame can be derived more accurately by employing the method in the second embodiment, as illustrated in Fig. 13B. Incidentally, when deriving the displacement by the method in the second embodiment, the measured values of the acceleration sensor attached to this position were not used.

Further, in this example, the bogie frame of the actual railway vehicle was modeled, and a comparison was made between the modal matrix $[\phi]$ explained in the first and second embodiments and the modal matrix $[\phi]$ explained in the third embodiment.

In this example, the number of nodal points $q_j$ of the mesh in the finite element method was set to 400000. Out of the 400000 nodal points $q_j$ of the mesh, m, which is the number of nodal points $q_j$ of the mesh used in the approximate equation of the component of the modal matrix $[\phi]$, was set to 1000. The positions of m (= 1000) nodal points were set randomly with respect to the bogie frame. The positions of the m nodal points and the positions of the m' nodal points were all set to be the same.

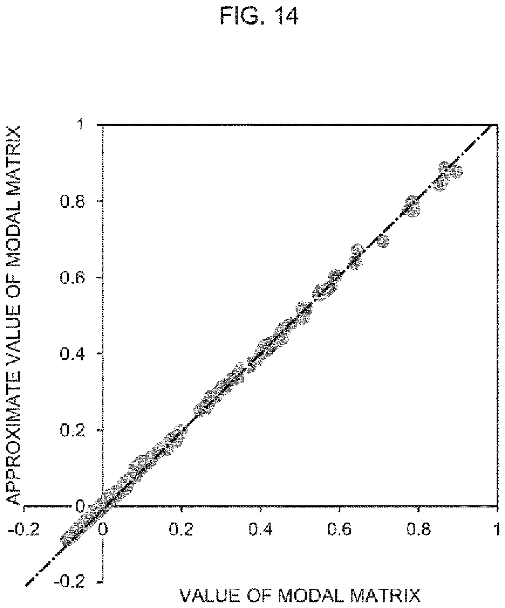

Fig. 14 is a view illustrating the relationship between the component $\phi_{q,i}^{(p)}$ of the modal matrix and the approximate value $\phi'_{s,i}^{(p)}(x_{s,1}, x_{s,2}, x_{s,3})$ of the component of the modal matrix $[\phi]$. In Fig. 14, the component of the modal matrix $[\phi]$ corresponding to the tenth-order eigenmode (p = 10, 60 Hz) and the $x_1$ axis direction (i = 1) is illustrated as an example. In Fig. 14, the component $\phi_{q,i}^{(p)}$ of the modal matrix $[\phi]$ is described as the value of the modal matrix. Further, the approximate value $\phi'_{s,i}^{(p)}(x_{m,1}, x_{s,2}, x_{s,3})$ of the component of the modal matrix $[\phi]$ is described as the approximate value of the modal matrix. In Fig. 14, the points determined from the value of the modal matrix and the approximate value of the modal matrix are illustrated in light colors.

As illustrated in Fig. 14, the average error between the approximate value of the component of the modal matrix derived as explained in the third embodiment and the component of the modal matrix $[\phi]$ explained in the first and second embodiments is 1.2%, and the standard deviation is 0.0027 (2.0% of the standard deviation of the value of the modal matrix). Accordingly, it can be seen that the modal matrix $[\phi]$ can be approximated with high accuracy by the method in the third embodiment.

Further, in this example, the bogie frame 16 of the actual railway vehicle was molded, and by the method explained in the fourth embodiment, the maximum principal strain $\varepsilon_{max}$ and the maximum principal stress $\sigma_{max}$ in the region to be estimated of the bogie frame 16 were derived.

The stress to occur in the bogie frame 16 when the railway vehicle was traveling was derived by the finite element method. Based on the stress to occur in the bogie frame 16, the point where the maximum principal stress occurs was identified, and the point where the maximum principal stress occurs was set as the reference point. The displacement at the reference point when the railway vehicle was traveling and the displacement at 12 points around the reference point were derived based on the real displacement vector {u}. Here, the real displacement vector {u} was derived by the method in the first embodiment. Based on the displacements derived in this manner, the components $a_1$, $a_2$, $a_3$, $a_5$, $a_6$, $a_7$, $a_9$, $a_{10}$, and $a_{11}$ of the matrix M were derived and the matrix M was decomposed into singular values to derive the diagonal matrix $\Sigma$. Then, based on the diagonal matrix $\Sigma$, the maximum principal strain $\varepsilon_{max}$ and the maximum principal stress $\sigma_{max}$ in the region to be estimated including the reference point and the 12 points around the reference point were derived. Incidentally, in this example, the Young's modulus E was set to 205.9 GPa and the Poisson's ratio v was set to 0.3.

Further, the maximum principal stress at the reference point in the case where the railway vehicle was traveling was derived based on the measured values of the strain gauge attached to the reference point.

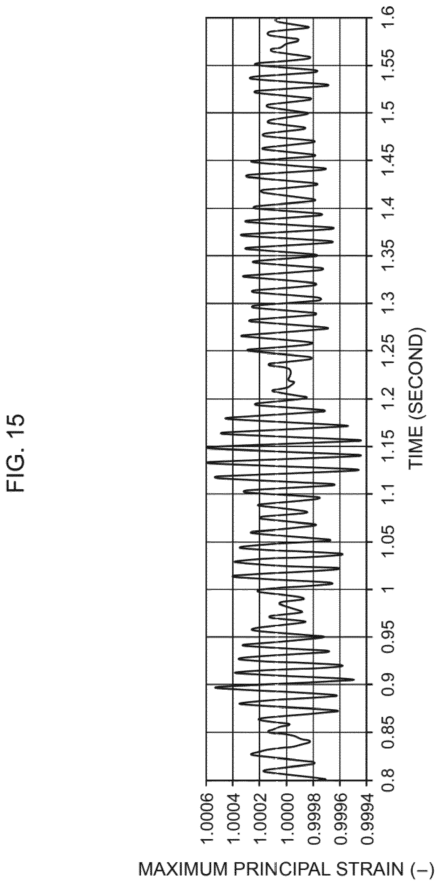

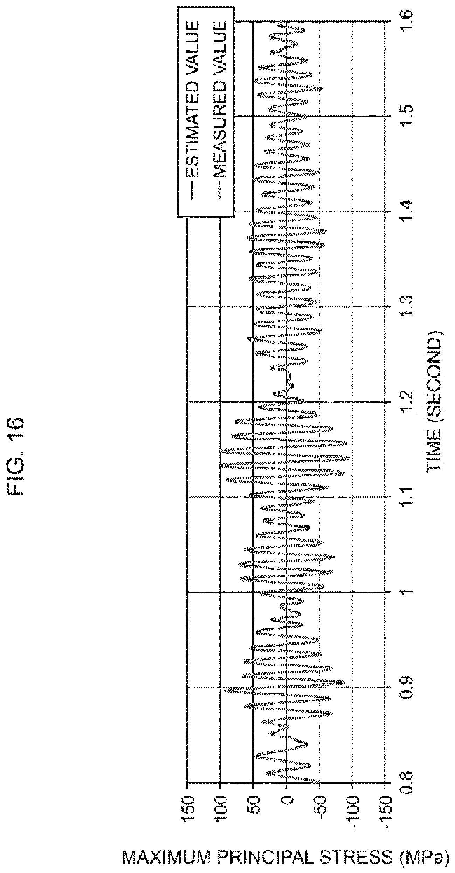

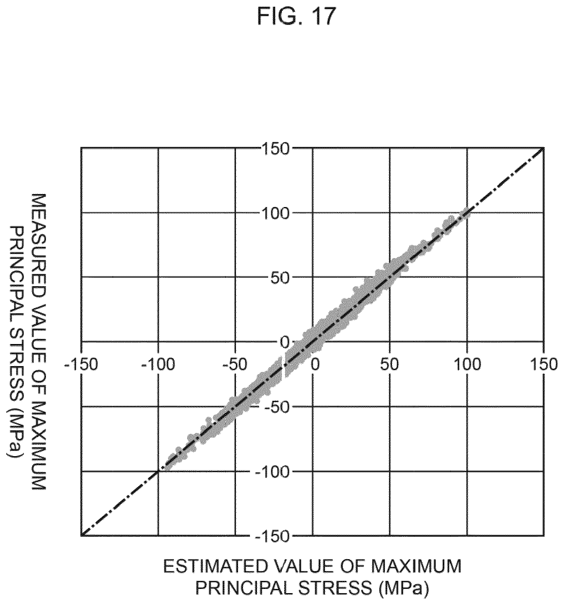

Fig. 15 is a view illustrating one example of the relationship between the maximum principal strain $\varepsilon_{max}$ in the region to be estimated and a time. Fig. 16 is a view illustrating one example of the relationship between the maximum principal stress $\sigma_{max}$ in the region to be estimated and a time. In Fig. 16, the estimated value indicates the relationship between the maximum principal stress $\sigma_{max}$ in the region to be estimated derived by the method in the fourth embodiment and a time. The measured value indicates the relationship between the maximum principal stress $\sigma_{max}$ based on the measured value of the strain gauge attached to the reference point and a time. In Fig. 16, the estimated value is illustrated in dark colors, and the measured value is illustrated in light colors. Fig. 17 is a view illustrating one example of the relationship between the maximum principal stress $\sigma_{max}$ in the region to be estimated derived by the method in the fourth embodiment and the maximum principal stress $\sigma_{max}$ based on the measured value of the strain gauge attached to the reference point. Fig. 17 is obtained by plotting the pairs of an estimated value and a measured value at the same time in Fig. 16. In Fig. 17, the maximum principal stress $\sigma_{max}$ in the region to be estimated derived by the method in the fourth embodiment is described as the estimated value of the maximum principal stress. The maximum principal stress $\sigma_{max}$ based on the measured value of the strain gauge attached to the reference po:nt is described as the measured value of the maximum principal stress. In Fig. 17, the point determined from the estimated value of the maximum principal stress and the measured value of the maximum principal stress is illustrated in light colors.

In Fig. 17, the average error between the maximum principal stress $\sigma_{max}$ based on the measured value of the strain gauge attached to the reference point (measured value) and the maximum principal stress $\sigma_{max}$ in the region to be estimated derived by the method in the fourth embodiment (estimated value) is 1.4 MPa, and the standard deviation is 1.5 MPa. Accordingly, it can be seen that the results equivalent to those in the case of using the strain gauge can be obtained by the method in the fourth embodiment.

(Another embodiment)

Incidentally, the embodiments of the present invention explained above can be fabricated by causing a computer to execute a program. Further, a computer-readable recording medium in which the aforementioned program is recorded and a computer program product such as the aforementioned program can also be applied as the embodiment of the present invention. As the recording medium, it is possible to use a flexible disk, a hard disk, an optical disk, a magneto-optic disk, a CD-ROM, a magnetic tape, a nonvolatile memory card, a ROM, or the like, for example.

Further, the embodiments of the present invention explained above merely illustrate concrete examples of implementing the present invention, and the technical scope of the present invention is not to be construed in a restrictive manner by these embodiments. That is, the present invention may be implemented in various forms without departing from the main features thereof.

INDUSTRIAL APPLICABILITY

The present invention can be utilized for estimating the state of a railway vehicle, for example.

**Claims**

1.    An estimation device (400, 800, 900) adapted to estimate a state of a railway vehicle including a bogie frame (16) and a connecting part (17a, 17b) connected to the bogie frame (16) directly or via another part, the estimation device (400, 800, 900) comprising:

a first sensor (21a, 21b) attached to the connecting part (17a, 17b);
a data acquisition means (401) adapted to acquire first measured data measured by the first sensor (21a, 21b) while the railway vehicle is traveling;
an external force deriving means (406) adapted to derive an external force acting on a force application point (31a, 31b, 32a, 32b) of the bogie frame (16) based on the first measured data and to derive a distribution of an external force acting on the bogie frame (16) based on the external force acting on the force application point (31a, 31b, 32a, 32b) of the bogie frame (16);
a state deriving means (407) adapted to derive information representing the state of the bogie frame (16) based on the distribution of the external force acting on the bogie frame (16); and
a processing device configured to perform the functions of the data acquisition means (401), the external force deriving means (406) and the state deriving means (407), wherein
the first sensor (21a, 21b) is a sensor adapted for measuring a physical quantity that enables derivation of the external force acting on the force application point (31a, 31b, 32a, 32b) of the bogie frame (16),
the force application point (31a, 31b, 32a, 32b) of the bogie frame (16) is a point on which an external force to occur by the connecting part (17a, 17b) acts in the bogie frame (16),
the state deriving means (407) includes at least a displacement distribution deriving means (407a) adapted to derive, as information representing the state of the bogie frame (16), a distribution of displacement of the bogie frame (16) by solving a motion equation representing vibration of the bogie frame (16), and
to a distribution of an external force in the motion equation representing vibration of the bogie frame (16), the distribution of the external force acting on the bogie frame (16), which is derived by the external force deriving means (406), is given.

2. The estimation device (400, 800, 900) according to claim 1 further comprising a second sensor (22a, 22b) attached to the bogie frame (16), wherein

the data acquisition means (401) is further adapted to acquire second measured data measured by the second sensor (22a, 22b),

the displacement distribution deriving means (407a) is adapted to derive a revision parameter intended for revising the distribution of the displacement derived by solving the motion equation representing vibration of the bogie frame (16), and to derive a distribution of displacement of the bogie frame (16) by using the distribution of the displacement of the bogie frame (16) derived by solving the motion equation representing vibration of the bogie frame (16) and the revision parameter,

the second sensor (22a, 22b) is a sensor adapted for measuring a physical quantity that enables derivation of a displacement of a predetermined position of the bogie frame (16), and

the displacement distribution deriving means (407a) is adapted to derive the revision parameter by using a displacement of a predetermined position of the bogie frame (16) derived based on the second measured data and a displacement of the predetermined position in the distribution of the displacement of the bogie frame (16) derived by solving the motion equation representing vibration of the bogie frame (16).

3. The estimation device (400, 800, 900) according to claim 1 or 2, wherein

the external force deriving means (406) is adapted to derive, based on the first measured data, a distribution of an external force acting on the bogie frame (16) in a physical coordinate system, and to transform the distribution of the external force acting on the bogie frame (16) into a distribution of an external force acting on the bogie frame (16) in a modal coordinate system by using a modal matrix,

the modal matrix is derived based on a result of an eigenvalue analysis on a motion equation representing vibration of the bogie frame (16) in the physical coordinate system,

the displacement distribution deriving means (407a) is adapted to derive a distribution of displacement of the bogie frame (16) in the modal coordinate system by solving a motion equation representing vibration of the bogie frame (16) in the modal coordinate system, and to transform the distribution of the displacement of the bogie frame (16) in the modal coordinate system into a distribution of displacement of the bogie frame (16) in the physical coordinate system by using the modal matrix, and

to a distribution of an external force in the motion equation representing vibration of the bogie frame (16) in the modal coordinate system, the distribution of the external force acting on the bogie frame (16) in the modal coordinate system derived by the external force deriving means (406) is given.

4. The estimation device (400, 800, 900) according to claim 3 further comprising a second sensor (22a, 22b) attached to the bogie frame (16), wherein

the data acquisition means (401) is further adapted to acquire second measured data measured by the second sensor (22a, 22b),

the displacement distribution deriving means (407a) is adapted to derive a revision parameter intended for revising the distribution of displacement derived by solving the motion equation representing vibration of the bogie frame (16) in the modal coordinate system, and to transform the distribution of displacement of the bogie frame (16) derived by solving the motion equation representing vibration of the bogie frame (16) in the modal coordinate system into a distribution of displacement of the bogie frame (16) in the physical coordinate system by using the revision parameter and the modal matrix,

the second sensor (22a, 22b) is a sensor adapted for measuring a physical quantity that enables derivation of displacement of a predetermined position of the bogie frame (16), and

the displacement distribution deriving means (407a) is adapted to derive the revision parameter by using a displacement of a predetermined position of the bogie frame (16) derived based on the second measured data, a displacement of the predetermined position in the distribution of displacement of the bogie frame (16) in the modal coordinate system derived by solving the motion equation representing vibration of the bogie frame (16) in the modal coordinate system, and the modal matrix.

5. The estimation device (400, 800, 900) according to claim 3 or 4, further comprising:
an eigenvalue analysis means (402) adapted to derive the modal matrix by performing an eigenvalue analysis on the motion equation representing vibration of the bogie frame (16) in the physical coordinate system.

6. The estimation device (800, 900) according to any one of claims 3 to 5, further comprising:

an approximate value deriving means (802) adapted to use an approximate equation of a component of the modal matrix to derive an approximate value of the component of the modal matrix, wherein

the approximate equation of the component of the modal matrix is an equation to be derived based on an eigenvector derived by the eigenvalue analysis,

the approximate equation of the component of the modal matrix is an equation that calculates, as the approximate value of the component of the modal matrix, an approximate value according to an order of an eigenmode, a position, and the degree of freedom of a coordinate system that determines the position, and

in the component of the modal matrix, the approximate value of the component of the modal matrix derived by the approximate value deriving means (802) is included.

7. The estimation device (800, 900) according to claim 6, wherein
the approximate equation of the component of the modal matrix is an equation to be derived by performing a Kernel ridge regression analysis based on the eigenvector derived by the eigenvalue analysis.

8. The estimation device (400, 800, 900) according to any one of claims 1 to 7, wherein
the state deriving means (407) further includes a stress distribution deriving means (407b) adapted to derive, as information representing the state of the bogie frame (16), a distribution of a stress of the bogie frame (16) based on the distribution of displacement of the bogie frame (16) derived by the displacement distribution deriving means (407a).

9. The estimation device (900) according to any one of claims 1 to 7, wherein

the state deriving means (407) further includes: a position coordinate deriving means (407c) adapted to derive position coordinates after displacement at at least three points of the bogie frame (16) based on position coordinates before displacement at at least three points of the bogie frame (16) and out of displacements of the bogie frame (16) derived by the displacement distribution deriving means (407a), displacements at at least the three points of the bogie frame (16);

a matrix deriving means (407d) adapted to derive a component of a transformation matrix based on the position coordinates before displacement at at least the three points of the bogie frame (16) and the position coordinates after displacement at at least the three points of the bogie frame (16) derived by the position coordinate deriving means (407c);

a singular value decomposition means (407e) adapted to decompose the transformation matrix having the component derived by the matrix deriving means (407d) into singular values; and

a strain deriving means (407f) adapted to derive singular values being components of a diagonal matrix derived by performing a singular value decomposition by the singular value decomposition means (407e) as principal strains of the bogie frame (16), and

the transformation matrix is a matrix that is multiplied by the position coordinates before displacement at at least the three points of the bogie frame (16) when the position coordinates after displacement at at least the three points of the bogie frame (16) are derived by performing an affine transformation of the position coordinates before displacement at at least the three points of the bogie frame (16).

10. The estimation device (900) according to claim 9, wherein
the strain deriving means (407f) is further adapted to derive a maximum principal strain of the bogie frame (16) based on the diagonal matrix.

11. The estimation device (900) according to claim 9 or 10, wherein
the state deriving means (407) further includes a stress deriving means (407g) adapted to derive principal stresses of the bogie frame (16) based on the principal strains of the bogie frame (16) derived by the strain deriving means (407f).

12. The estimation device (900) according to claim 11, wherein
the stress deriving means (407g) is further adapted to derive a maximum principal stress of the bogie frame (16) based on the principal stresses of the bogie frame (16).

13. The estimation device (900) according to any one of claims 9 to 12, wherein

at least the three points are at least four points, and
the position coordinates are position coordinates in a three-axis coordinate system.

14. The estimation device (400, 800, 900) according to any one of claims 1 to 13, further comprising:

an inspection point identification information deriving means (410) adapted to derive inspection point identification information that is information intended for identifying an inspection point of at least one of the bogie frame (16) and a track (20), wherein
the data acquisition means (401) is further adapted to acquire traveling position data that indicate a traveling position of the railway vehicle, and
the inspection point identification information deriving means (410) is adapted to derive the inspection point identification information based on a predetermined index value based on the information representing the state of the bogie frame (16) derived by the state deriving means (407) and the traveling position data.

15. The estimation device (400, 800, 900) according to any one of claims 1 to 14, wherein

the railway vehicle further includes an axle box, and
the connecting part (17a, 17b) is the axle box.

16. The estimation device (400, 800, 900) according to any one of claims 1 to 15, wherein
the first sensor (21a, 21b) is an acceleration sensor.

17. The estimation device (400, 800, 900) according to any one of claims 1 to 16, wherein
the external force deriving means (406) is adapted to derive an external force acting on a force application point (31a, 31b, 32a, 32b) of the bogie frame (16) of the same railway vehicle as the railway vehicle to which the first sensor (21a, 21b) is attached, based on first measured data measured by the first sensor (21a, 21b) while the railway vehicle is traveling.

18. The estimation device (400, 800, 900) according to any one of claims 1 to 17, wherein

the external force deriving means (406) is adapted to derive an external force acting on a force application point (31a, 31b, 32a, 32b) of the bogie frame (16) of the railway vehicle that is different from the railway vehicle to which the first sensor (21a, 21b) is attached, based on first measured data measured by the first sensor (21a, 21b) while the railway vehicle is traveling, and
the railway vehicle that is different from the railway vehicle to which the first sensor (21a, 21b) is attached is a railway vehicle of the same formation as the railway vehicle to which the first sensor (21a, 21b) is attached.

19. An estimation method that estimates a state of a railway vehicle including a bogie frame (16) and a connecting part (17a, 17b) connected to the bogie frame (16) directly or via another part, the estimation method comprising:

a data acquisition step (S601) of acquiring first measured data measured by a first sensor (21a, 21b) attached to the connecting part (17a, 17b) while the railway vehicle is traveling;
an external force deriving step (S606) of deriving an external force acting on a force application point (31a, 31b, 32a, 32b) of the bogie frame (16) based on the first measured data and deriving a distribution of an external force acting on the bogie frame (16) based on the external force acting on the force application point (31a, 31b, 32a, 32b) of the bogie frame (16); and
a state deriving step of deriving information representing the state of the bogie frame (16) based on the distribution of the external force acting on the bogie frame (16), wherein
the first sensor (21a, 21b) is a sensor intended for measuring a physical quantity that enables derivation of the external force acting on the force application point (31a, 31b, 32a, 32b) of the bogie frame (16),
the force application point (31a, 31b, 32a, 32b) of the bogie frame (16) is a point on which an external force to occur by the connecting part (17a, 17b) acts in the bogie frame (16),
the state deriving step includes at least a displacement distribution deriving step (S607) of deriving, as information representing the state of the bogie frame (16), a distribution of displacement of the bogie frame (16) by solving a motion equation representing vibration of the bogie frame (16), and
to a distribution of an external force in the motion equation representing vibration of the bogie frame (16), the distribution of the external force acting on the bogie frame (16), which is derived by the external force deriving step (S606), is given.

20. A program causing a computer to execute pieces of processing intended for estimating a state of a railway vehicle including a bogie frame (16) and a connecting part (17a, 17b) connected to the bogie frame (16) directly or via another part, the program comprising:

a data acquisition step (S601) of acquiring first measured data measured by a first sensor (21a, 21b) attached to the connecting part (17a, 17b) while the railway vehicle is traveling;

an external force deriving step (S606) of deriving an external force acting on a force application point (31a, 31b, 32a, 32b) of the bogie frame (16) based on the first measured data and deriving a distribution of an external force acting on the bogie frame (16) based on the external force acting on the force application point (31a, 31b, 32a, 32b) of the bogie frame (16); and

a state deriving step of deriving information representing the state of the bogie frame (16) based on the distribution of the external force acting on the bogie frame (16), wherein

the first sensor (21a, 21b) is a sensor intended for measuring a physical quantity that enables derivation of the external force acting on the force application point (31a, 31b, 32a, 32b) of the bogie frame (16),

the force application point (31a, 31b, 32a, 32b) of the bogie frame (16) is a point on which an external force to occur by the connecting part (17a, 17b) acts in the bogie frame (16),

the state deriving step includes at least a displacement distribution deriving step (S607) of deriving, as information representing the state of the bogie frame (16), a distribution of displacement of the bogie frame (16) by solving a motion equation representing vibration of the bogie frame (16), and

to a distribution of an external force in the motion equation representing vibration of the bogie frame (16), the distribution of the external force acting on the bogie frame (16), which is derived by the external force deriving step (S606), is given.

**Patentansprüche**

1. Schätzvorrichtung (400, 800, 900), die dazu ausgelegt ist, einen Zustand eines Schienenfahrzeugs zu schätzen, das einen Drehgestellrahmen (16) und ein Verbindungsteil (17a, 17b) aufweist, das direkt oder über ein anderes Teil mit dem Drehgestellrahmen (16) verbunden ist, wobei die Schätzvorrichtung (400, 800, 900) umfasst:

   einen ersten Sensor (21a, 21b), der an dem Verbindungsteil (17a, 17b) angebracht ist;
   eine Datenerfassungseinrichtung (401), die dazu ausgelegt ist, erste Messdaten zu erfassen, die von dem ersten Sensor (21a, 21b) gemessen werden, während sich das Schienenfahrzeug fortbewegt;
   eine Ableitungseinrichtung für eine externe Kraft (406), die dazu ausgelegt ist, eine auf einen Kraftangriffspunkt (31a, 31b, 32a, 32b) des Drehgestellrahmens (16) wirkende externe Kraft abzuleiten basierend auf den ersten Messdaten und eine Verteilung einer auf den Drehgestellrahmen (16) wirkenden externe Kraft basierend auf der auf den Kraftangriffspunkt (31a, 31b, 32a, 32b) des Drehgestellrahmens (16) wirkenden externen Kraft abzuleiten;
   eine Zustandsableitungseinrichtung (407), die dazu ausgelegt ist, Informationen abzuleiten, die den Zustand des Drehgestellrahmens (16) basierend auf der Verteilung der auf den Drehgestellrahmen (16) wirkenden externen Kraft darstellen; und
   eine Verarbeitungsvorrichtung, die so konfiguriert ist, dass sie die Funktionen der Datenerfassungseinrichtung (401), der Ableitungseinrichtung für eine externe Kraft (406) und der Zustandsableitungseinrichtung (407) ausführt, wobei
   der erste Sensor (21a, 21b) ein Sensor ist, der zum Messen einer physikalischen Größe ausgelegt ist, die die Ableitung der auf den Kraftangriffspunkt (31a, 31b, 32a, 32b) des Drehgestellrahmens (16) wirkenden externen Kraft ermöglicht,
   der Kraftangriffspunkt (31a, 31b, 32a, 32b) des Drehgestellrahmens (16) ein Punkt ist, an dem eine durch das Verbindungsteil (17a, 17b) auftretende externe Kraft auf den Drehgestellrahmen (16) wirkt,
   die Zustandsableitungseinrichtung (407) mindestens eine Verschiebungsverteilungsableitungseinrichtung (407a) umfasst, die dazu ausgelegt ist, als Information, die den Zustand des Drehgestellrahmens (16) repräsentiert, eine Verteilung der Verschiebung des Drehgestellrahmens (16) abzuleiten, indem eine Bewegungsgleichung gelöst wird, die die Schwingung des Drehgestellrahmens (16) repräsentiert, und
   zu einer Verteilung einer externen Kraft in der Bewegungsgleichung, die die Schwingung des Drehgestellrahmens (16) repräsentiert, wird die Verteilung der auf den Drehgestellrahmen (16) wirkenden externen Kraft, die durch die Ableitungseinrichtung für eine externe Kraft (406) abgeleitet wird, angegeben.

2. Schätzvorrichtung (400, 800, 900) gemäß Anspruch 1, ferner umfassend einen zweiten Sensor (22a, 22b), der am Drehgestellrahmen (16) angebracht ist, wobei

   die Datenerfassungsvorrichtung (401) ferner dazu ausgelegt ist, zweite Messdaten zu erfassen, die von dem zweiten Sensor (22a, 22b) gemessen werden,

die Verschiebungsverteilungsableitungseinrichtung (407a) dazu ausgelegt ist, einen Revisionsparameter abzuleiten, der dazu bestimmt ist, die durch Lösen der Bewegungsgleichung, die die Schwingung des Drehgestellrahmens (16) repräsentiert, abgeleitete Verteilung der Verschiebung zu korrigieren, und eine Verteilung der Verschiebung des Drehgestellrahmens (16) abzuleiten, indem die durch Lösen der Bewegungsgleichung, die die Schwingung des Drehgestellrahmens (16) darstellt, abgeleitete Verteilung der Verschiebung des Drehgestellrahmens (16) und der Revisionsparameter verwendet werden,

der zweite Sensor (22a, 22b) ein Sensor ist, der zum Messen einer physikalischen Größe ausgelegt ist, die die Ableitung einer Verschiebung einer vorbestimmten Position des Drehgestellrahmens (16) ermöglicht, und

die Verschiebungsverteilungsableitungseinrichtung (407a) dazu ausgelegt ist, den Revisionsparameter unter Verwendung einer Verschiebung einer vorbestimmten Position des Drehgestellrahmens (16), die basierend auf den zweiten Messdaten abgeleitet wurde, und einer Verschiebung der vorbestimmten Position in der Verteilung der Verschiebung des Drehgestellrahmens (16), die durch Lösen der Bewegungsgleichung abgeleitet wurde, die die Schwingung des Drehgestellrahmens (16) repräsentiert, abzuleiten.

3. Schätzvorrichtung (400, 800, 900) nach Anspruch 1 oder 2, wobei

die Ableitungseinrichtung für eine externe Kraft (406) so ausgelegt ist, dass sie basierend auf den ersten Messdaten eine Verteilung einer auf den Drehgestellrahmen (16) wirkenden externen Kraft in einem physikalischen Koordinatensystem ableitet, und die Verteilung der auf den Drehgestellrahmen (16) wirkenden externen Kraft unter Verwendung einer Modalmatrix in eine Verteilung einer auf den Drehgestellrahmen (16) wirkenden externen Kraft in einem Modalkoordinatensystem transformiert,

die Modalmatrix basierend auf einem Ergebnis einer Eigenwertanalyse einer Bewegungsgleichung abgeleitet wird, die die Schwingung des Drehgestellrahmens (16) im physikalischen Koordinatensystem repräsentiert,

die Verschiebungsverteilungsableitungseinrichtung (407a) dazu ausgelegt ist, eine Verteilung der Verschiebung des Drehgestellrahmens (16) in dem Modalkoordinatensystem abzuleiten, indem eine Bewegungsgleichung gelöst wird, die die Schwingung des Drehgestellrahmens (16) in dem Modalkoordinatensystem repräsentiert, und die Verteilung der Verschiebung des Drehgestellrahmens (16) im Modalkoordinatensystem unter Verwendung der Modalmessmatrix in eine Verteilung der Verschiebung des Drehgestellrahmens (16) im physikalischen Koordinatensystem transformiert, und

zu einer Verteilung einer externen Kraft in der Bewegungsgleichung, die die Schwingung des Drehgestellrahmens (16) in dem Modalkoordinatensystem repräsentiert, wird die Verteilung der auf den Drehgestellrahmen (16) wirkenden externen Kraft, die durch die Ableitungseinrichtung für eine externe Kraft (406) abgeleitet wird, in dem Modalkoordinatensystem angegeben.

4. Schätzvorrichtung (400, 800, 900) gemäß Anspruch 3, die ferner einen zweiten Sensor (22a, 22b) umfasst, der an dem Drehgestellrahmen (16) angebracht ist, wobei

die Datenerfassungseinrichtung (401) ferner dazu ausgelegt ist, zweite Messdaten zu erfassen, die von dem zweiten Sensor (22a, 22b) gemessen werden,

die Verschiebungsverteilungsableitungseinrichtung (407a) dazu ausgelegt ist, einen Revisionsparameter abzuleiten, der dazu bestimmt ist, die durch Lösen der Bewegungsgleichung, die die Schwingung des Drehgestellrahmens (16) im Modalkoordinatensystem repräsentiert, abgeleitete Verteilung der Verschiebung zu korrigieren,

und die durch Lösen der Bewegungsgleichung, die die Schwingung des Drehgestellrahmens (16) im Modalkoordinatensystem repräsentiert, abgeleitete Verteilung der Verschiebung des Drehgestellrahmens (16) im modalen Koordinatensystem in eine Verteilung der Verschiebung des Drehgestellrahmens (16) im physikalischen Koordinatensystem zu transformieren, unter Verwendung des Revisionsparameters und der Modalmatrix,

der zweite Sensor (22a, 22b) ein Sensor ist, der zum Messen einer physikalischen Größe ausgelegt ist, die die Ableitung der Verschiebung einer vorbestimmten Position des Drehgestellrahmens (16) ermöglicht, und

die Verschiebungsverteilungsableitungseinrichtung (407a) dazu ausgelegt ist, den Revisionsparameter unter Verwendung einer Verschiebung einer vorbestimmten Position des Drehgestellrahmens (16), die basierend auf den zweiten Messdaten abgeleitet wurde, einer Verschiebung der vorbestimmten Position in der Verteilung der Verschiebung des Drehgestellrahmens (16) in dem Modalkoordinatensystem, die durch Lösen der Bewegungsgleichung abgeleitet wurde, die die Schwingung des Drehgestellrahmens (16) im Modalkoordinatensystem repräsentiert, und der Modalmatrix abzuleiten.

5. Schätzvorrichtung (400, 800, 900) gemäß Anspruch 3 oder 4, ferner umfassend:
eine Eigenwertanalyseeinrichtung (402), die dazu ausgelegt ist, die Modalmatrix abzuleiten, indem sie eine Eigenwertanalyse der Bewegungsgleichung durchführt, die die Schwingung des Drehgestellrahmens (16) im physikalischen Koordinatensystem repräsentiert.

6. Schätzvorrichtung (800, 900) gemäß einem der Ansprüche 3 bis 5, ferner umfassend:

Näherungswert-Ableitungseinrichtung (802), die dazu ausgelegt ist, eine Näherungsgleichung einer Komponente der Modalmatrix zu verwenden, um einen Näherungswert der Komponente der Modalmessmatrix abzuleiten, wobei
die Näherungsgleichung der Komponente der Modalmatrix eine Gleichung ist, die basierend auf einem durch die Eigenwertanalyse abgeleiteten Eigenvektor abgeleitet wird,
die Näherungsgleichung der Komponente der Modalmatrix eine Gleichung ist, die als den Näherungswert der Komponente der Modalmatrix einen Näherungswert gemäß einer Ordnung einer Eigenmode, einer Position und dem Freiheitsgrad eines Koordinatensystems, das die Position bestimmt, berechnet, und
in der Komponente der Modalmatrix der Näherungswert der Komponente der Modalmatrix enthalten ist, der durch die Näherungswert-Ableitungseinrichtung (802) abgeleitet wurde.

7. Schätzvorrichtung (800, 900) gemäß Anspruch 6, wobei
die Näherungsgleichung der Komponente der Modalmatrix eine Gleichung ist, die durch Ausführen einer Kernel-Ridge-Regressionsanalyse basierend auf dem durch die Eigenwertanalyse abgeleiteten Eigenvektors abgeleitet wird.

8. Schätzvorrichtung (400, 800, 900) gemäß einem der Ansprüche 1 bis 7, wobei
die Zustandsableitungseinrichtung (407) ferner eine Spannungsverteilungsableitungseinrichtung (407b) umfasst, die dazu ausgelegt ist, als Information, die den Zustand des Drehgestellrahmens (16) repräsentiert, eine Verteilung einer Spannung des Drehgestellrahmens (16) basierend auf der Verteilung der Verschiebung des Drehgestellrahmens (16) abzuleiten, die durch die Verschiebungsverteilungsableitungseinrichtung (407a) abgeleitet wird.

9. Schätzvorrichtung (900) gemäß einem der Ansprüche 1 bis 7, wobei

die Zustandsableitungseinrichtung (407) ferner umfasst: eine Positionskoordinatenableitungseinrichtung (407c), die dazu ausgelegt ist, Positionskoordinaten nach der Verschiebung an mindestens drei Punkten des Drehgestellrahmens (16) basierend auf Positionskoordinaten vor der Verschiebung an mindestens drei Punkten des Drehgestellrahmens (16) und aus den durch die Verschiebungsverteilungsableitungseinrichtung (407a) abgeleiteten Verschiebungen des Drehgestellrahmens (16) die Verschiebungen an mindestens den drei Punkten des Drehgestellrahmens (16) abzuleiten;
eine Matrixableitungseinrichtung (407d), die dazu ausgelegt ist, eine Komponente einer Transformationsmatrix basierend auf den Positionskoordinaten vor der Verschiebung an mindestens den drei Punkten des Drehgestellrahmens (16) und den Positionskoordinaten nach der Verschiebung an mindestens den drei Punkten des Drehgestellrahmens (16), die von der Positionskoordinatenableitungseinrichtung (407c) abgeleitet wurden, abzuleiten;
eine Singulärwertzerlegungseinrichtung (407e), die dazu ausgelegt ist, die Transformationsmatrix mit der von der Matrixableitungseinrichtung (407d) abgeleiteten Komponente in Singulärwerte zu zerlegen; und
eine Dehnungsableitungseinrichtung (407f), die dazu ausgelegt ist, Singulärwerte, die Komponenten einer durch die Singulärwertzerlegungseinrichtung (407e) durchgeführten Singulärwertzerlegung abgeleiteten Diagonalmatrix sind, als Hauptdehnungen des Drehgestellrahmens (16) abzuleiten, und
die Transformationsmatrix eine Matrix ist, die mit den Positionskoordinaten vor der Verschiebung an mindestens drei Punkten des Drehgestellrahmens (16) multipliziert wird, wenn die Positionskoordinaten nach der Verschiebung an mindestens drei Punkten des Drehgestellrahmens (16) durch Ausführen einer affinen Transformation der Positionskoordinaten vor der Verschiebung an mindestens drei Punkten des Drehgestellrahmens (16) abgeleitet werden.

10. Schätzvorrichtung (900) nach Anspruch 9, wobei
die Dehnungsableitungseinrichtung (407f) ferner dazu ausgelegt ist, eine maximale Hauptdehnung des Drehgestellrahmens (16) basierend auf der Diagonalmatrix abzuleiten.

11. Schätzvorrichtung (900) nach Anspruch 9 oder 10, wobei
die Zustandsableitungseinrichtung (407) ferner eine Spannungsableitungseinrichtung (407g) umfasst, die dazu ausgelegt ist, Hauptspannungen des Drehgestellrahmens (16) basierend auf den Hauptdehnungen des Drehge-

**EP 3 992 052 B1**

stellrahmens (16) abzuleiten, die von der Dehnungsableitungseinrichtung (407f) abgeleitet wurden.

12. Schätzvorrichtung (900) nach Anspruch 11, wobei
die Spannungsableitungseinrichtung (407g) ferner dazu ausgelegt ist, eine maximale Hauptspannung des Drehgestellrahmens (16) basierend auf den Hauptspannungen des Drehgestellrahmens (16) abzuleiten.

13. Schätzvorrichtung (900) nach einem der Ansprüche 9 bis 12, wobei

die mindestens drei Punkte mindestens vier Punkte sind, und
die Positionskoordinaten Positionskoordinaten in einem dreiachsigen Koordinatensystem sind.

14. Schätzvorrichtung (400, 800, 900) gemäß einem der Ansprüche 1 bis 13, ferner umfassend:

eine Inspektionspunkt-Identifizierungsinformationsableitungseinrichtung (410), die dazu ausgelegt ist, Inspektionspunkt-Identifizierungsinformationen abzuleiten, die Informationen sind, die zum Identifizieren eines Inspektionspunkts von dem Drehgestellrahmen (16) und/oder dem Gleis (20) bestimmt sind, wobei
die Datenerfassungseinrichtung (401) ferner dazu ausgelegt ist, Fahrpositionsdaten zu erfassen, die eine Fahrposition des Schienenfahrzeugs angeben, und
die Inspektionspunkt-Identifizierungsinformationsableitungseinrichtung (410) dazu ausgelegt ist, die Inspektionspunkt-Identifizierungsinformationen basierend auf einem vorbestimmten Indexwerts abzuleiten, der auf den Informationen basiert, die den Zustand des Drehgestellrahmens (16) repräsentieren, der von der Zustandsableitungseinrichtung (407) und den Fahrpositionsdaten abgeleitet wurde.

15. Schätzvorrichtung (400, 800, 900) nach einem der Ansprüche 1 bis 14, wobei

das Schienenfahrzeug ferner eine Achslagergehäuse umfasst, und
das Verbindungsteil (17a, 17b) das Achslagergehäuse ist.

16. Schätzvorrichtung (400, 800, 900) gemäß einem der Ansprüche 1 bis 15, wobei
der erste Sensor (21a, 21b) ein Beschleunigungssensor ist.

17. Schätzvorrichtung (400, 800, 900) gemäß einem der Ansprüche 1 bis 16, wobei
die Ableitungseinrichtung für eine externe Kraft (406) dazu ausgelegt ist, eine externe Kraft, die auf einen Kraftangriffspunkt (31a, 31b, 32a, 32b) des Drehgestellrahmens (16) desselben Schienenfahrzeugs wirkt, wie das Schienenfahrzeug, an dem der erste Sensor (21a, 21b) angebracht ist, basierend auf ersten Messdaten abzuleiten, die vom ersten Sensor (21a, 21b) gemessen werden, während sich das Schienenfahrzeug fortbewegt.

18. Schätzvorrichtung (400, 800, 900) gemäß einem der Ansprüche 1 bis 17, wobei

die Ableitungseinrichtung für eine externe Kraft (406) dazu ausgelegt ist, eine externe Kraft abzuleiten, die auf einen Kraftangriffspunkt (31a, 31b, 32a, 32b) des Drehgestellrahmens (16) des Schienenfahrzeugs wirkt, das sich von dem Schienenfahrzeug unterscheidet, an dem der erste Sensor (21a, 21b) angebracht ist, basierend auf ersten Messdaten, die vom ersten Sensor (21a, 21b) während der Fahrt des Schienenfahrzeugs gemessen wurden, und
das Schienenfahrzeug, das sich von dem Schienenfahrzeug unterscheidet, an dem der erste Sensor (21a, 21b) angebracht ist, ein Schienenfahrzeug derselben Formation wie das Schienenfahrzeug ist, an dem der erste Sensor (21a, 21b) angebracht ist.

19. Schätzverfahren, das einen Zustand eines Schienenfahrzeugs schätzt, das einen Drehgestellrahmen (16) und ein Verbindungsteil (17a, 17b) aufweist, das direkt oder über ein anderes Teil mit dem Drehgestellrahmen (16) verbunden ist, wobei das Schätzverfahren umfasst:

einen Datenerfassungsschritt (S601) zum Erfassen erster Messdaten, die von einem ersten Sensor (21a, 21b) gemessen werden, der an dem Verbindungsteil (17a, 17b) angebracht ist, während das Schienenfahrzeug fährt;
einen Ableitungsschritt für eine externe Kraft (S606) einer auf einen Kraftangriffspunkt (31a, 31b, 32a, 32b) des Drehgestellrahmens (16) wirkenden externen Krafts basierend auf den ersten Messdaten und zum Ableiten einer Verteilung einer auf den Drehgestellrahmen (16) wirkenden externen Kraft basierend auf der auf den Kraftangriffspunkt (31a, 31b, 32a, 32b) wirkenden externen Kraft des Drehgestellrahmens (16); und

44

einen Zustandsableitungsschritt zum Ableiten von Informationen, die den Zustand des Drehgestellrahmens (16) repräsentieren, basierend auf der Verteilung der auf den Drehgestellrahmen (16) wirkenden externen Kraft, wobei

der erste Sensor (21a, 21b) ein Sensor ist, der zum Messen einer physikalischen Größe bestimmt ist, die die Ableitung der auf den Kraftangriffspunkt (31a, 31b, 32a, 32b) des Drehgestellrahmens (16) wirkenden externen Kraft ermöglicht,

der Kraftangriffspunkt (31a, 31b, 32a, 32b) des Drehgestellrahmens (16) ein Punkt ist, an dem eine durch das Verbindungsteil (17a, 17b) auftretende externen Kraft auf den Drehgestellrahmen (16) wirkt,

der Zustandsableitungsschritt mindestens einen Schritt zum Ableiten der Verschiebungsverteilung (S607) umfasst, bei dem als Information, die den Zustand des Drehgestellrahmens (16) repräsentiert, eine Verteilung der Verschiebung des Drehgestellrahmens (16) abgeleitet wird, indem eine Bewegungsgleichung gelöst wird, die die Schwingung des Drehgestellrahmens (16) repräsentiert, und

zu einer Verteilung einer externen Kraft in der Bewegungsgleichung, die die Schwingung des Drehgestellrahmens (16) repräsentiert, wird die Verteilung der auf den Drehgestellrahmen (16) wirkenden externen Kraft, die durch den Ableitungsschritt für eine externe Kraft (S606) abgeleitet wird, angegeben.

20. Programm, das einen Computer veranlasst, Verarbeitungsschritte auszuführen, die zum Schätzen eines Zustands eines Schienenfahrzeugs bestimmt sind, das einen Drehgestellrahmen (16) und ein Verbindungsteil (17a, 17b) aufweist, das direkt oder über ein anderes Teil mit dem Drehgestellrahmen (16) verbunden ist, wobei das Programm umfasst:

einen Datenerfassungsschritt (S601) zum Erfassen erster Messdaten, die von einem ersten Sensor (21a, 21b) gemessen werden, der an dem Verbindungsteil (17a, 17b) angebracht ist, während sich das Schienenfahrzeug fortbewegt;

einen Ableitungsschritt für eine externe Kraft (S606) einer auf einen Kraftangriffspunkt (31a, 31b, 32a, 32b) des Drehgestellrahmens (16) wirkenden externen Krafts basierend auf den ersten Messdaten und zum Ableiten einer Verteilung einer auf den Drehgestellrahmen (16) wirkenden externen Kraft basierend auf der auf den Kraftangriffspunkt (31a, 31b, 32a, 32b) wirkenden externen Kraft des Drehgestellrahmens (16); und

einen Zustandsableitungsschritt zum Ableiten von Informationen, die den Zustand des Drehgestellrahmens (16) repräsentieren, basierend auf der Verteilung der auf den Drehgestellrahmen (16) einwirkenden externen Kraft, wobei

der erste Sensor (21a, 21b) ein Sensor zum Messen einer physikalischen Größe ist, die die Ableitung der auf den Kraftangriffspunkt (31a, 31b, 32a, 32b) des Drehgestellrahmens (16) einwirkenden externen Kraft ermöglicht,

der Kraftangriffspunkt (31a, 31b, 32a, 32b) des Drehgestellrahmens (16) ein Punkt ist, an dem eine durch das Verbindungsteil (17a, 17b) auftretende externe Kraft auf den Drehgestellrahmen (16) wirkt,

der Zustandsableitungsschritt mindestens einen Schritt zum Ableiten der Verschiebungsverteilung (S607) aufweist, bei dem als Information, die den Zustand des Drehgestellrahmens (16) repräsentiert, eine Verteilung der Verschiebung des Drehgestellrahmens (16) abgeleitet wird, indem eine Bewegungsgleichung gelöst wird, die die Schwingung des Drehgestellrahmens (16) repräsentiert, und

zu einer Verteilung einer externen Kraft in der Bewegungsgleichung, die die Schwingung des Drehgestellrahmens (16) repräsentiert, ist die Verteilung der auf den Drehgestellrahmen (16) wirkenden externen Kraft, die durch den Ableitungsschritt für eine externe Kraft (S606) abgeleitet wird, angegeben.

## Revendications

1. Dispositif d'estimation (400, 800, 900) adapté pour estimer un état d'un véhicule ferroviaire comprenant un châssis de bogie (16) et une partie de raccordement (17a, 17b) raccordée au châssis de bogie (16) directement ou via une autre pièce, le dispositif d'estimation (400, 800, 900) comprenant :

un premier capteur (21a, 21b) fixé à la partie de raccordement (17a, 17b) ;
un moyen d'acquisition de données (401) adapté pour acquérir des premières données mesurées, mesurées par le premier capteur (21a, 21b), alors que le véhicule ferroviaire se déplace ;
un moyen de dérivation de force externe (406) adapté pour dériver une force externe agissant sur un point d'application de force (31a, 31b, 32a, 32b) du châssis de bogie (16) sur la base des premières données mesurées et pour dériver une distribution d'une force externe agissant sur le châssis de bogie (16) sur la base de la force externe agissant sur le point d'application de force (31a, 31b, 32a, 32b) du châssis de bogie (16) ;
un moyen de dérivation d'état (407) adapté pour dériver une information représentant l'état du châssis de bogie (16) sur la base de la distribution de la force externe agissant sur le châssis de bogie (16) ; et
un dispositif de traitement configuré pour réaliser les fonctions du moyen d'acquisition de données (401), du moyen de dérivation de force externe (406) et du moyen de dérivation d'état (407), dans lequel :

le premier capteur (21a, 21b) est un capteur adapté pour mesurer une quantité physique qui permet la dérivation de la force externe agissant sur le point d'application de force (31a, 31b, 32a, 32b) du châssis de bogie (16),

le point d'application de force (31a, 31b, 32a, 32b) du châssis de bogie (16) est un point sur lequel une force externe qui se produit grâce à la partie de raccordement (17a, 17b), agit sur le châssis de bogie (16),

le moyen de dérivation d'état (407) comprend au moins un moyen de dérivation de distribution de déplacement (407a) adapté pour dériver, en tant qu'information représentant l'état du châssis de bogie (16), une distribution de déplacement du châssis de bogie (16) en résolvant une équation de mouvement représentant la vibration du châssis de bogie (16), et

la distribution de la force externe agissant sur le châssis de bogie (16), qui est dérivée par le moyen de dérivation de force externe (406), est donnée à une distribution d'une force externe dans l'équation de mouvement représentant la vibration du châssis de bogie (16).

**2.** Dispositif d'estimation (400, 800, 900) selon la revendication 1, comprenant en outre un deuxième capteur (22a, 22b) fixé au châssis de bogie (16), dans lequel :

le moyen d'acquisition de données (401) est en outre adapté pour acquérir des deuxièmes données mesurées, mesurées par le deuxième capteur (22a, 22b),

le moyen de dérivation de distribution de déplacement (407a) est adapté pour dériver un paramètre de révision prévu pour réviser la distribution du déplacement dérivé en résolvant l'équation de mouvement représentant la vibration du châssis de bogie (16), et pour dériver une distribution de déplacement du châssis de bogie (16) en utilisant la distribution du déplacement du châssis de bogie (16) dérivé en résolvant l'équation de mouvement représentant la vibration du châssis de bogie (16) et le paramètre de révision,

le deuxième capteur (22a, 22b) est un capteur adapté pour mesurer une quantité physique qui permet la dérivation d'un déplacement d'une position prédéterminée du châssis de bogie (16), et

le moyen de dérivation de distribution de déplacement (407a) est adapté pour dériver le paramètre de révision en utilisant un déplacement d'une position prédéterminée du châssis de bogie (16) dérivé sur la base des deuxièmes données mesurées et d'un déplacement de la position prédéterminée dans la distribution du déplacement du châssis de bogie (16) dérivé en résolvant l'équation de mouvement représentant la vibration du châssis de bogie (16).

**3.** Dispositif d'estimation (400, 800, 900) selon la revendication 1 ou 2, dans lequel :

le moyen de dérivation de force externe (406) est adapté pour dériver, sur la base des premières données mesurées, une distribution d'une force externe agissant sur le châssis de bogie (16) dans un système de coordonnées physiques, et pour transformer la distribution de la force externe agissant sur le châssis de bogie (16) en une distribution d'une force externe agissant sur le châssis de bogie (16) dans un système de coordonnées modales en utilisant une matrice modale,

la matrice modale est dérivée sur la base d'un résultat d'une analyse des valeurs propres sur une équation de mouvement représentant la vibration du châssis de bogie (16) dans le système de coordonnées physiques,

le moyen de dérivation de distribution de déplacement (407a) est adapté pour dériver une distribution du déplacement du châssis de bogie (16) dans le système de coordonnées modales en résolvant une équation de mouvement représentant la vibration du châssis de bogie (16) dans le système de coordonnées modales, et pour transformer la distribution du déplacement du châssis de bogie (16) dans le système de coordonnées modales en une distribution de déplacement du châssis de bogie (16) dans le système de coordonnées physiques en utilisant la matrice modale, et

la distribution de la force externe agissant sur le châssis de bogie (16) dans le système de coordonnées modales dérivée par le moyen de dérivation de force externe (406) est donnée à une distribution d'une force externe dans l'équation de mouvement représentant la vibration du châssis de bogie (16) dans le système de coordonnées modales.

**4.** Dispositif d'estimation (400, 800, 900) selon la revendication 3, comprenant en outre un deuxième capteur (22a, 22b) fixé au châssis de bogie (16), dans lequel :

le moyen d'acquisition de données (401) est en outre adapté pour acquérir des deuxièmes données mesurées, mesurées par le deuxième capteur (22a, 22b),

le moyen de dérivation de distribution de déplacement (407a) est adapté pour dériver un paramètre de révision prévu pour réviser la distribution du déplacement dérivé en résolvant l'équation de mouvement représentant la vibration du châssis de bogie (16) dans le système de coordonnées modales, et pour transformer la distribution de déplacement du châssis de bogie (16) dérivée en résolvant l'équation de mouvement représentant la vibration du châssis de bogie (16) dans le système de coordonnées modales en une distribution de déplacement du châssis de bogie (16) dans le système de coordonnées physiques en utilisant le paramètre de révision et la matrice modale,

le deuxième capteur (22a, 22b) est un capteur adapté pour mesurer une quantité physique qui permet la dérivation de déplacement d'une position prédéterminée du châssis de bogie (16), et

le moyen de dérivation de distribution de déplacement (407a) est adapté pour dériver le paramètre de révision en utilisant un déplacement d'une position prédéterminée du châssis de bogie (16) dérivée sur la base des deuxièmes données mesurées, un déplacement de la position prédéterminée dans la distribution de déplacement du châssis de bogie (16) dans le système de coordonnées modales dérivé en résolvant l'équation de mouvement représentant la vibration du châssis de bogie (16) dans le système de coordonnées modales, et la matrice modale.

**5.** Dispositif d'estimation (400, 800, 900) selon la revendication 3 ou 4, comprenant en outre :

un moyen d'analyse des valeurs propres (402) adapté pour dériver la matrice modale en réalisant une analyse des valeurs propres sur l'équation de mouvement représentant la vibration du châssis de bogie (16) dans le système de coordonnées physiques.

**6.** Dispositif d'estimation (800, 900) selon l'une quelconque des revendications 3 à 5, comprenant en outre :

un moyen de dérivation de valeur approximative (802) adapté pour utiliser une équation approximative d'un composant de la matrice modale pour dériver une valeur approximative du composant de la matrice modale, dans lequel :

l'équation approximative du composant de la matrice modale est une équation à dériver sur la base d'un vecteur propre dérivé par l'analyses des valeurs propres,

l'équation approximative du composant de la matrice modale est une équation qui calcule, en tant que valeur approximative du composant de la matrice modale, une valeur approximative selon un ordre d'un mode propre, d'une position et du degré de liberté d'un système de coordonnées qui détermine la position, et

la valeur approximative du composant de la matrice modale dérivée par le moyen de dérivation de valeur approximative (802) est comprise dans le composant de la matrice modale.

**7.** Dispositif d'estimation (800, 900) selon la revendication 6, dans lequel :

l'équation approximative du composant de la matrice modale est une équation à dériver en réalisant une analyse de régression Kernel Ridge basée sur le vecteur propre dérivé par l'analyse des valeurs propres.

**8.** Dispositif d'estimation (400, 800, 900) selon l'une quelconque des revendications 1 à 7, dans lequel :

le moyen de dérivation d'état (407) comprend en outre un moyen de dérivation de distribution de contrainte (407b) adapté pour dériver, en tant qu'information représentant l'état du châssis de bogie (16), une distribution d'une contrainte du châssis de bogie (16) sur la base de la distribution du déplacement du châssis de bogie (16) dérivé par le moyen de dérivation de distribution de déplacement (407a).

**9.** Dispositif d'estimation (900) selon l'une quelconque des revendications 1 à 7, dans lequel :

le moyen de dérivation d'état (407) comprend en outre : un moyen de dérivation de coordonnées de position (407c) adapté pour dériver des coordonnées de position après le déplacement au niveau d'au moins trois points du châssis de bogie (16) sur la base des coordonnées de position avant le déplacement au niveau d'au moins trois points du châssis de bogie (16) et hors des déplacements du châssis de bogie (16) dérivés par le moyen de dérivation de distribution de déplacement (407a), des déplacements au niveau d'au moins trois points du châssis de bogie (16) ;

un moyen de dérivation de matrice (407d) adapté pour dériver un composant d'une matrice de transformation sur la base des coordonnées de position avant le déplacement au niveau d'au moins trois points du châssis de bogie (16) et des coordonnées de position après le déplacement au niveau d'au moins trois points du châssis de bogie (16) dérivées par le moyen de dérivation de coordonnées de position (407c) ;

un moyen de décomposition de valeur singulière (407e) adapté pour décomposer la matrice de transformation ayant le composant dérivé par le moyen de dérivation de matrice (407d) en valeurs singulières ; et

un moyen de dérivation de déformation (407f) adapté pour dériver des valeurs singulières qui sont des composants d'une matrice diagonale dérivés en réalisant une décomposition de valeur singulière par le moyen de décomposition de valeur singulière (407e) en tant que déformations principales du châssis de bogie (16), et la matrice de transformation est une matrice qui est multipliée par les coordonnées de position avant le déplacement au niveau d'au moins trois points du châssis de bogie (16) lorsque les coordonnées de position après le déplacement au niveau d'au moins trois points du châssis de bogie (16) sont dérivées en réalisant une transformation affine des coordonnées de position avant le déplacement au niveau d'au moins trois points du châssis de bogie (16).

**10.** Dispositif d'estimation (900) selon la revendication 9, dans lequel :
le moyen de dérivation de déformation (407f) est en outre adapté pour dériver une déformation principale maximum du châssis de bogie (16) sur la base de la matrice diagonale.

**11.** Dispositif d'estimation (900) selon la revendication 9 ou 10, dans lequel :
le moyen de dérivation d'état (407) comprend en outre un moyen de dérivation de contrainte (407g) adapté pour dériver des contraintes principales du châssis de bogie (16) sur la base des déformations principales du châssis de bogie (16) dérivées par le moyen de dérivation de déformation (407f).

**12.** Dispositif d'estimation (900) selon la revendication 11, dans lequel :
le moyen de dérivation de contrainte (407g) est en outre adapté pour dériver une contrainte principale maximum du châssis de bogie (16) sur la base des contraintes principales du châssis de bogie (16).

**13.** Dispositif d'estimation (900) selon l'une quelconque des revendications 9 à 12, dans lequel :

au moins les trois points sont au moins quatre points, et
les coordonnées de position sont des coordonnées de position dans un système de coordonnées à trois axes.

**14.** Dispositif d'estimation (400, 800, 900) selon l'une quelconque des revendications 1 à 13, comprenant en outre :
un moyen de dérivation d'information d'identification de point d'inspection (410) adapté pour dériver l'information d'identification de point d'inspection qui est l'information prévue pour identifier un point d'inspection d'au moins l'un parmi le châssis de bogie (16) et une voie (20), dans lequel :

le moyen d'acquisition de données (401) est en outre adapté pour acquérir des données de position de déplacement qui indiquent une position de déplacement du véhicule ferroviaire, et
le moyen de dérivation d'information d'identification de point d'inspection (410) est adapté pour dériver l'information d'identification de point d'inspection sur la base d'une valeur d'indice prédéterminée basée sur l'information représentant l'état du châssis de bogie (16) dérivé par le moyen de dérivation d'état (407) et les données de position de déplacement.

**15.** Dispositif d'estimation (400, 800, 900) selon l'une quelconque des revendications 1 à 14, dans lequel :

le véhicule ferroviaire comprend une boîte d'essieu, et
la partie de raccordement (17a, 17b) est la boîte d'essieu.

**16.** Dispositif d'estimation (400, 800, 900) selon l'une quelconque des revendications 1 à 15, dans lequel :
le premier capteur (21a, 21b) est un capteur d'accélération.

**17.** Dispositif d'estimation (400, 800, 900) selon l'une quelconque des revendications 1 à 16, dans lequel :
le moyen de dérivation de force externe (406) est adapté pour dériver une force externe agissant sur un point d'application de force (31a, 31b, 32a, 32b) du châssis de bogie (16) du même véhicule ferroviaire en tant que véhicule ferroviaire auquel le premier capteur (21a, 21b) est fixé, sur la base des premières données mesurées, mesurées par le premier capteur (21a, 21b) alors que le véhicule ferroviaire se déplace.

**18.** Dispositif d'estimation (400, 800, 900) selon l'une quelconque des revendications 1 à 17, dans lequel :

le moyen de dérivation de force externe (406) est adapté pour dériver une force externe agissant sur un point d'application de force (31a, 31b, 32a, 32b) du châssis de bogie (16) du véhicule ferroviaire qui est différent du véhicule ferroviaire auquel le premier capteur (21a, 21b) est fixé, sur la base des premières données mesurées, mesurées par le premier capteur (21a, 21b) alors que le véhicule ferroviaire se déplace, et

le véhicule ferroviaire qui est différent du véhicule ferroviaire auquel le premier capteur (21a, 21b) est fixé, est un véhicule ferroviaire de la même formation que le véhicule ferroviaire auquel le premier capteur (21a, 21b) est fixé.

19. Procédé d'estimation qui estime un état d'un véhicule ferroviaire comprenant un châssis de bogie (16) et une partie de raccordement (17a, 17b) raccordée au châssis de bogie (16) directement ou via une autre pièce, le procédé d'estimation comprenant :

une étape d'acquisition de données (S601) pour acquérir des premières données mesurées, mesurées par un premier capteur (21a, 21b) fixé à la partie de raccordement (17a, 17b) alors que le véhicule ferroviaire se déplace ; une étape de dérivation de force externe (S606) pour dériver une force externe agissant sur un point d'application de force (31a, 31b, 32a, 32b) du châssis de bogie (16) sur la base des premières données mesurées et dériver une distribution d'une force externe agissant sur le châssis de bogie (16) sur la base de la force externe agissant sur le point d'application de force (31a, 31b, 32a, 32b) du châssis de bogie (16) ; et une étape de dérivation d'état pour dériver l'information représentant l'état du châssis de bogie (16) sur la base de la distribution de la force externe agissant sur le châssis de bogie (16), dans lequel :

le premier capteur (21a, 21b) est un capteur prévu pour mesurer une quantité physique qui permet la dérivation de la force externe agissant sur le point d'application de force (31a, 31b, 32a, 32b) du châssis de bogie (16),
le point d'application de force (31a, 31b, 32a, 32b) du châssis de bogie (16) est un point sur lequel une force externe qui se produit grâce à la partie de raccordement (17a, 17b), agit sur le châssis de bogie (16),
l'étape de dérivation d'état comprend au moins une étape de dérivation de distribution de déplacement (S607) pour dériver, en tant qu'information représentant l'état du châssis de bogie (16), une distribution de déplacement du châssis de bogie (16) en résolvant une équation de mouvement représentant la vibration du châssis de bogie (16), et
la distribution de la force externe agissant sur le châssis de bogie (16), qui est dérivée par l'étape de dérivation de force externe (S606) est donnée à une distribution d'une force externe dans l'équation de mouvement représentant la vibration du châssis de bogie (16).

20. Programme amenant un ordinateur à exécuter des parties de traitement prévues pour estimer un état d'un véhicule ferroviaire comprenant un châssis de bogie (16) et une partie de raccordement (17a, 17b) raccordée au châssis de bogie (16) directement ou via une autre pièce, le programme comprenant :

une étape d'acquisition de données (S601) pour acquérir des premières données mesurées, mesurées par un premier capteur (21a, 21b) fixé à la partie de raccordement (17a, 17b) alors que le véhicule ferroviaire se déplace ; une étape de dérivation de force externe (S606) pour dériver une force externe agissant sur un point d'application de force (31a, 31b, 32a, 32b) du châssis de bogie (16) sur la base des premières données mesurées et dériver une distribution d'une force externe agissant sur le châssis de bogie (16) sur la base de la force externe agissant sur le point d'application de force (31a, 31b, 32a, 32b) du châssis de bogie (16) ; et une étape de dérivation d'état pour dériver l'information représentant l'état du châssis de bogie (16) sur la base de la distribution de la force externe agissant sur le châssis de bogie (16), dans lequel :

le premier capteur (21a, 21b) est un capteur prévu pour mesurer une quantité physique qui permet la dérivation de la force externe agissant sur le point d'application de force (31a, 31b, 32a, 32b) du châssis de bogie (16),
le point d'application de force (31a, 31b, 32a, 32b) du châssis de bogie (16) est un point sur lequel une force externe qui se produit grâce à la partie de raccordement (17a, 17b) agit sur le châssis de bogie (16),
l'étape de dérivation d'état comprend au moins une étape de dérivation de distribution de déplacement (S607) pour dériver, en tant qu'information représentant l'état du châssis de bogie (16), une distribution de déplacement du châssis de bogie (16) en résolvant une équation de mouvement représentant la vibration du châssis de bogie (16), et
la distribution de la force externe agissant sur le châssis de bogie (16), qui est dérivée par l'étape de dérivation de force externe (S606) est donnée à une distribution d'une force externe dans l'équation de mouvement représentant la vibration du châssis de bogie (16).

# FIG. 1

EP 3 992 052 B1

FIG. 2

51

## FIG. 3A

## FIG. 3B

## FIG. 4

ESTIMATION DEVICE

400

FIG. 5

## FIG. 6

START

ACQUIRE ACCELERATION DATA, POSITION DATA — S601

DERIVE MODAL MATRIX — S602

DERIVE MODAL MASS MATRIX — S603

DERIVE MODAL VISCOUS MATRIX — S604

DERIVE MODAL STIFFNESS MATRIX — S605

DERIVE MODAL EXTERNAL FORCE VECTOR — S606

DERIVE DISPLACEMENT DISTRIBUTION — S607

DERIVE STRAIN DISTRIBUTION — S608

DERIVE STRESS DISTRIBUTION — S609

DERIVE STRESS-POSITION RELATIONSHIP INFORMATION — S610

WITHIN STRESS TOLERANCE RANGE OF STRESS LIMIT DIAGRAM? — S611

YES

NO

DERIVE INSPECTION POINT IDENTIFICATION INFORMATION — S612

IS MEASUREMENT FINISHED? — S613

NO

YES

OUTPUT — S614

END

FIG. 7

## FIG. 8

DATA ACQUISITION UNIT ~401

EIGENVALUE ANALYSIS UNIT ~402

APPROXIMATE EQUATION DERIVING UNIT ~801

APPROXIMATE VALUE DERIVING UNIT ~802

403
MASS DERIVING UNIT

404
VISCOSITY DERIVING UNIT

405
STIFFNESS DERIVING UNIT

406
EXTERNAL FORCE DERIVING UNIT

DISPLACEMENT DISTRIBUTION DERIVING UNIT ~407a

STRESS DISTRIBUTION DERIVING UNIT ~407b

STATE DERIVING UNIT ~407

STRESS-POSITION RELATIONSHIP DERIVING UNIT ~408

DETERMINATION UNIT ~409

INSPECTION POINT IDENTIFICATION INFORMATION DERIVING UNIT ~410

OUTPUT UNIT ~411

ESTIMATION DEVICE

800

57

# FIG. 9

DATA ACQUISITION UNIT ~401

APPROXIMATE VALUE DERIVING UNIT ~802

403

MASS DERIVING UNIT

~404

VISCOSITY DERIVING UNIT

~405

STIFFNESS DERIVING UNIT

406

EXTERNAL FORCE DERIVING UNIT

DISPLACEMENT DISTRIBUTION DERIVING UNIT ~407a

POSITION COORDINATE DERIVING UNIT ~407c

MATRIX DERIVING UNIT ~407d

SINGULAR VALUE DECOMPOSITION UNIT ~407e

STRAIN DERIVING UNIT ~407f

STRESS DERIVING UNIT ~407g

STATE DERIVING UNIT ~407

STRESS-POSITION RELATIONSHIP DERIVING UNIT ~408

DETERMINATION UNIT ~409

INSPECTION POINT IDENTIFICATION INFORMATION DERIVING UNIT ~410

OUTPUT UNIT ~411

ESTIMATION DEVICE

900

## FIG. 10

```
                        ( START )
                            │
    ┌───────────────────────┼───────────────────────┐
    │   ┌───────────────────▼───────────────────┐    │
    │   │ ACQUIRE ACCELERATION DATA, POSITION DATA│~S601
    │   └───────────────────┬───────────────────┘
    │   ┌───────────────────▼───────────────────┐
    │   │          DERIVE MODAL MATRIX           │~S602
    │   └───────────────────┬───────────────────┘
    │   ┌───────────────────▼───────────────────┐
    │   │        DERIVE MODAL MASS MATRIX        │~S603
    │   └───────────────────┬───────────────────┘
    │   ┌───────────────────▼───────────────────┐
    │   │      DERIVE MODAL VISCOUS MATRIX       │~S604
    │   └───────────────────┬───────────────────┘
    │   ┌───────────────────▼───────────────────┐
    │   │     DERIVE MODAL STIFFNESS MATRIX      │~S605
    │   └───────────────────┬───────────────────┘
    │   ┌───────────────────▼───────────────────┐
    │   │   DERIVE MODAL EXTERNAL FORCE VECTOR   │~S606
    │   └───────────────────┬───────────────────┘
    │   ┌───────────────────▼───────────────────┐
    │   │   DERIVE DISPLACEMENT DISTRIBUTION     │~S607
    │   └───────────────────┬───────────────────┘
    │   ┌───────────────────▼───────────────────┐
    │   │DERIVE POSITION COORDINATE AFTER DISPLACEMENT│~S1001
    │   └───────────────────┬───────────────────┘
    │   ┌───────────────────▼───────────────────┐
    │   │      DERIVE COMPONENT OF MATRIX M      │~S1002
    │   └───────────────────┬───────────────────┘
    │   ┌───────────────────▼───────────────────┐
    │   │   PERFORM SINGULAR VALUE DECOMPOSITION │~S1003
    │   └───────────────────┬───────────────────┘
    │   ┌───────────────────▼───────────────────┐
    │   │    DERIVE MAXIMUM PRINCIPAL STRAIN     │~S1004
    │   └───────────────────┬───────────────────┘
    │   ┌───────────────────▼───────────────────┐
    │   │    DERIVE MAXIMUM PRINCIPAL STRESS     │~S1005
    │   └───────────────────┬───────────────────┘
    │   ┌───────────────────▼───────────────────┐
    │   │ DERIVE STRESS-POSITION RELATIONSHIP INFORMATION │~S1006
    │   └───────────────────┬───────────────────┘
    │                    S1007
    │          ◇─────────────────────────◇ NO
    │          │ |σmax|>THRESHOLD VALUE? │──────┐
    │          ◇─────────────────────────◇      │
    │                    │ YES                   │
    │   ┌───────────────▼───────────────────┐   │
    │   │DERIVE INSPECTION POINT IDENTIFICATION INFORMATION│~S1008
    │   └───────────────────┬───────────────────┘
    │                    S1009                    │
    │  NO  ◇─────────────────────────◇           │
    └──────│  IS MEASUREMENT FINISHED? │◄─────────┘
           ◇─────────────────────────◇
                        │ YES
           ┌────────────▼────────────┐
           │         OUTPUT          │~S1010
           └────────────┬────────────┘
                        │
                    (  END  )
```

$|\sigma_{max}|$ > THRESHOLD VALUE?

FIG. 11

ESTIMATION DEVICE

400

FIG. 12

EP 3 992 052 B1

FIG. 13A

## FIG. 13B

FIG. 14

FIG. 15

FIG. 16

## FIG. 17

ESTIMATED VALUE OF MAXIMUM
PRINCIPAL STRESS (MPa)

## REFERENCES CITED IN THE DESCRIPTION

**Patent documents cited in the description**

- JP 2019121751 A
- JP 2018155517 A

- WO 2019043859 A1

**Non-patent literature cited in the description**

- Finite Element Method Handbook, II applied compilation. BAIFUKAN CO., LTD, 25 January 1983, 65-67